(19) Europäisches Patentamt
European Patent Office
Office européen des brevets

(11) **EP 3 365 982 B1**

(12) **EUROPEAN PATENT SPECIFICATION**

(45) Date of publication and mention
of the grant of the patent:
**15.01.2025 Bulletin 2025/03**

(51) International Patent Classification (IPC):
***H04B 7/04*** *(2017.01)*    ***H04B 7/0456*** *(2017.01)*
***H04B 7/06*** *(2006.01)*

(21) Application number: **16857837.5**

(22) Date of filing: **21.10.2016**

(52) Cooperative Patent Classification (CPC):
**H04B 7/0469; H04B 7/04; H04B 7/0478;
H04B 7/0479; H04B 7/0486; H04B 7/06**

(86) International application number:
**PCT/KR2016/011926**

(87) International publication number:
**WO 2017/069580 (27.04.2017 Gazette 2017/17)**

(54) **PRECODER CODEBOOK FOR ADVANCED WIRELESS COMMUNICATION SYSTEMS**

VORCODIERER-CODEBUCH FÜR ERWEITERTE DRAHTLOSKOMMUNIKATIONSSYSTEME

LIVRE DE CODES DE PRÉ-CODEUR POUR DES SYSTÈMES DE COMMUNICATION SANS FIL
ÉVOLUÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.10.2015 US 201562245694 P
04.11.2015 US 201562250779 P
24.08.2016 US 201615246502**

(43) Date of publication of application:
**29.08.2018 Bulletin 2018/35**

(73) Proprietor: **Samsung Electronics Co., Ltd.
Suwon-si, Gyeonggi-do 16677 (KR)**

(72) Inventors:
• **RAHMAN, Md. Saifur
Mountain View, CA 94043 (US)**
• **NAM, Young-Han
Mountain View, CA 94043 (US)**

(74) Representative: **Nederlandsch Octrooibureau
P.O. Box 29720
2502 LS The Hague (NL)**

(56) References cited:
**EP-A1- 3 046 271        US-A1- 2013 308 715
US-A1- 2015 280 801**

• **SAMSUNG: "Rank 1-2 codebook for Class A CSI
reporting", vol. RAN WG1, no. Malmo, Sweden;
20151005 - 20151009, 7 October 2015
(2015-10-07), XP051021969, Retrieved from the
Internet <URL:http://www.3gpp.
org/ftp/tsg_ran/WG1_RL1/TSGR1_82b/Docs/>
[retrieved on 20151007]**
• **SAMSUNG: "Rank 3-8 codebook for Class A CSI
reporting", vol. RAN WG1, no. Malmo, Sweden;
20151005 - 20151009, 7 October 2015
(2015-10-07), XP051021970, Retrieved from the
Internet <URL:http://www.3gpp.
org/ftp/tsg_ran/WG1_RL1/TSGR1_82b/Docs/>
[retrieved on 20151007]**
• **CMCC: "KP-based 2D codebook and
performance evaluations", R1-155793, 3GPP
TSG RAN WG1 MEETING #82BIS, 26 September
2015 (2015-09-26), Malm, Sweden, XP051021764**
• **ERICSSON: "Comparing non-precoded and
beamformed CSI-RS enhancements", RI-153166,
3GPP TSG-RAN WG1#81, 16 May 2015
(2015-05-16), Fukuoka, Japan, XP050973351**
• **ZTE: "Discussion on precoder and PMI
construction for FD-MIMO", RI-155269, 3GPP
TSG RAN WG1 MEETING #82BIS, 26 September
2015 (2015-09-26), Malm, Sweden, XP051021501**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

- **HUAWEI ET AL.: "Codebook design for 12 and 8 ports 2D antenna arrays", R1-155651, 3GPP TSG RAN WG1 MEETING #82BIS, 26 September 2015 (2015-09-26), Malmo, Sweden, XP051021672**
- **SAMSUNG: "Rank 1-2 codebook for Class A CSI reporting", R1-155492, 3GPP TSG RAN WG1 MEETING #82B, 25 September 2015 (2015-09-25), Malmo, Sweden, XP051021367**

## Description

### Technical Field

The present application relates generally to codebook design and codebook structure for advanced wireless communication systems. More specifically, this disclosure relates to an efficient precoder codebook for advanced wireless communication systems.

### Background Art

To meet the demand for wireless data traffic having increased since deployment of 4th generation (4G) communication systems, efforts have been made to develop an improved 5th generation (5G) or pre-5G communication system. Therefore, the 5G or pre-5G communication system is also called a 'Beyond 4G Network' or a 'Post LTE System' .

The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems.

In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like.

In the 5G system, Hybrid Frequency Shift Keying and Quadrature Amplitude Modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have been developed.

Given the spatial multiplexing provided by FD-MIMO systems, understanding and correctly estimating the channel between a user equipment (UE) and an eNode B (eNB) is important for efficient and effective wireless communication. In order to correctly estimate the channel conditions, the UE will feedback information about channel measurement, e.g., channel state information (CSI), to the eNB. With this information about the channel, the eNB is able to select appropriate communication parameters to efficiently and effectively perform wireless data communication with the UE. However, with increase in the numbers of antennas and channel paths of wireless communication devices, so too has the amount of feedback increased that may be needed to ideally estimate the channel. This additionally-desired channel feedback may create additional overheads, thus reducing the efficiency of the wireless communication, for example, decrease the data rate. The efficient feedback scheme is required.

The document SAMSUNG: "Rank 1-2 codebook for Class A CSI reporting", 3GPP DRAFT; R1-156121 RANK 1-2 CODEBOOK FOR CLASS A CSI REPORTING FINAL - R1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS C, vol. RAN WG1, no. Malmo, Sweden; 20151005 - 20151009 7 October 2015 discloses two alternatives for CSI reporting for rank 1 and rank 2 codebooks and symmetric antenna layouts.

### Disclosure of Invention

### Solution to Problem

Embodiments of the present disclosure provide a precoder codebook for advanced wireless communication systems.

The invention is defined in the appended independent claims. Further embodiments are defined in the dependent claims.

Other technical features may be readily apparent to one skilled in the art from the following figures, descriptions, and claims.

### Brief Description of Drawings

For a more complete understanding of the present disclosure and its advantages, reference is now made to the following description taken in conjunction with the accompanying drawings, in which like reference numerals represent like parts:

FIGURE 1 illustrates an example wireless network according to embodiments of the present disclosure;

FIGURE 2 illustrates an example eNB according to embodiments of the present disclosure;

FIGURE 3 illustrates an example UE according to embodiments of the present disclosure;

FIGURE 4A illustrates a high-level diagram of an orthogonal frequency division multiple access transmit path according to embodiments of the present disclosure;

FIGURE 4B illustrates a high-level diagram of an orthogonal frequency division multiple access receive path according to embodiments of the present disclosure;

FIGURE 5 illustrates an example structure for a downlink (DL) subframe according to embodiments of the present disclosure;

FIGURE 6 illustrates an example antenna configurations and numbering according to embodiments of the present disclosure;

FIGURE 7 illustrates an example precoding weight application to antenna configurations according to embodiments of the present disclosure;

FIGURE 8 illustrates an example antenna element (or transmit resource unit (TXRU)) numbering according to embodiments of the present disclosure;

FIGURE 9 illustrates an example rank 3-4 orthogonal beam pair construction according to embodiments of the present disclosure;

FIGURE 10 illustrates an example orthogonal beams for rank 3-4 according to embodiments of the present disclosure;

FIGURE 11 illustrates an example orthogonal beam grouping for rank 5-8 according to embodiments of the present disclosure;

FIGURE 12 illustrates another example orthogonal beam grouping for rank 5-8 according to embodiments of the present disclosure;

FIGURE 13 illustrates yet another example orthogonal beam grouping for rank 5-8 according to embodiments of the present disclosure;

FIGURE 14 illustrates yet another example orthogonal beam grouping for rank 5-8 according to embodiments of the present disclosure; and

FIGURE 15 illustrates yet another example orthogonal beam grouping for rank 5-8 according to embodiments of the present disclosure.

## Best Mode for Carrying out the Invention

Before undertaking the DETAILED DESCRIPTION below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for other certain words and phrases are provided throughout this patent document. Those of ordinary skill in the art should understand that in many if not most instances, such definitions apply to prior as well as future uses of such defined words and phrases.

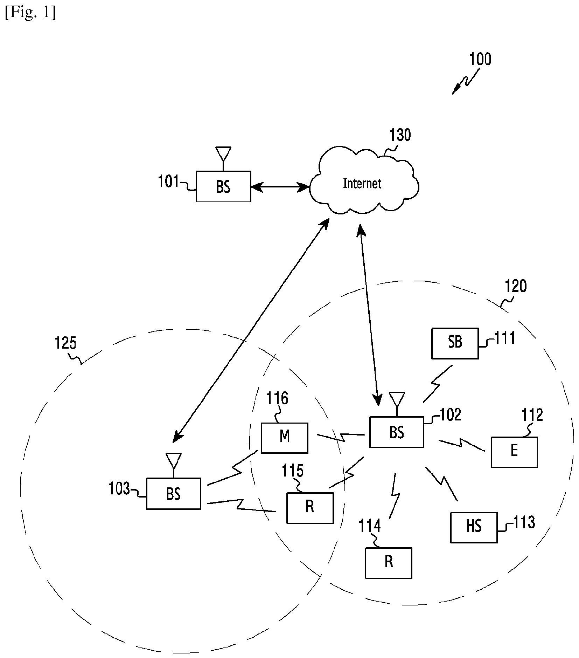

FIGURES 1 through FIGURE 15, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

The following documents and standards descriptions are considered: 3GPP TS 36.211 v12.2.0, "E-UTRA, Physical channels and modulation" (REF1); 3GPP TS 36.212 v12.2.0, "E-UTRA, Multiplexing and Channel coding" (REF2); 3GPP TS 36.213 v12.2.0, "E-UTRA, Physical Layer Procedures" (REF3); R1-154861, "WF on FD-MIMO codebook" (REF4); and Rl-155005, "WF on precoder and PMI construction for R13 FD-MIMO."

FIGURES 1-4B below describe various embodiments implemented in wireless communications systems and with the use of OFDM or OFDMA communication techniques. The descriptions of FIGURES 1-3 are not meant to imply physical or architectural limitations to the manner in which different embodiments may be implemented. Different embodiments of the present disclosure may be implemented in any suitably-arranged communications system.

FIGURE 1 illustrates an example wireless network 100 according to embodiments of the present disclosure. The embodiment of the wireless network 100 shown in FIGURE 1 is for illustration only. Other embodiments of the wireless network 100 could be used without departing from the scope of this disclosure.

As shown in FIGURE 1, the wireless network 100 includes an eNB 101, an eNB 102, and an eNB 103. The eNB 101 communicates with the eNB 102 and the eNB 103. The eNB 101 also communicates with at least one network 130, such as the Internet, a proprietary Internet Protocol (IP) network, or other data network.

The eNB 102 provides wireless broadband access to the network 130 for a first plurality of user equipments (UEs) within a coverage area 120 of the eNB 102. The first plurality of UEs includes a UE 111, which may be located in a small business (SB); a UE 112, which may be located in an enterprise (E); a UE 113, which may be located in a WiFi hotspot (HS); a UE 114, which may be located in a first residence (R); a UE 115, which may be located in a second residence (R); and a UE 116, which may be a mobile device (M), such as a cell phone, a wireless laptop, a wireless PDA, or the like. The eNB 103 provides wireless broadband access to the network 130 for a second plurality of UEs within a coverage area 125 of the eNB 103. The second plurality of UEs includes the UE 115 and the UE 116. In some embodiments, one or more of the eNBs 101-103 may communicate with each other and with the UEs 111-116 using 5G, LTE, LTE-A, WiMAX, WiFi, or other wireless communication techniques.

Depending on the network type, other well-known terms may be used instead of "eNodeB" or "eNB," such as "base station" or "access point." For the sake of convenience, the terms "eNodeB" and "eNB" are used in this patent document to refer to network infrastructure components that provide wireless access to remote terminals. Also, depending on the network type, other well-known terms may be used instead of "user equipment" or "UE," such as "mobile station," "subscriber station," "remote terminal," "wireless terminal," or "user device." For the sake of convenience, the terms "user equipment" and "UE" are used in this patent document to refer to remote wireless equipment that wirelessly accesses an eNB, whether the UE is a mobile device (such as a mobile telephone or smartphone) or is normally considered a stationary device (such as a desktop computer or vending machine).

Dotted lines show the approximate extents of the coverage areas 120 and 125, which are shown as approximately circular for the purposes of illustration and explanation only. It should be clearly understood that the coverage areas associated with eNBs, such as the coverage areas 120 and 125, may have other shapes, including irregular shapes, depending upon the configuration of the eNBs and variations in the radio environment associated with natural and man-made obstructions.

As described in more detail below, one or more of the UEs 111-116 include circuitry, programing, or a combination thereof, for precoder codebook processing. In certain embodiments, and one or more of the eNBs 101-103 includes circuitry, programing, or a combination thereof, for processing of channel state information (CSI) received from the UEs 111-116 in accordance with a first number of antenna ports ($N_1$) for a first dimension and a second number of antenna ports ($N_2$) for a second dimension.

Although FIGURE 1 illustrates one example of a wireless network 100, various changes may be made to FIGURE 1. For example, the wireless network 100 could include any number of eNBs and any number of UEs in any suitable arrangement. Also, the eNB 101 could communicate directly with any number of UEs and provide those UEs with wireless broadband access to the network 130. Similarly, each eNB 102-103 could communicate directly with the network 130 and provide UEs with direct wireless broadband access to the network 130. Further, the eNBs 101, 102, and/or 103 could provide access to other or additional external networks, such as external telephone networks or other types of data networks.

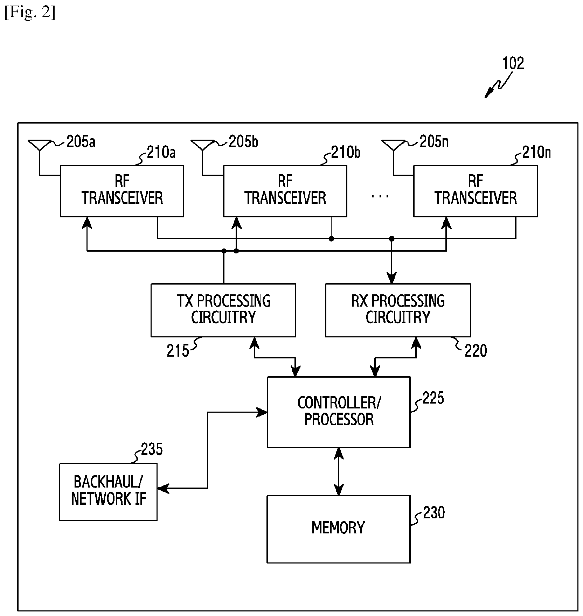

FIGURE 2 illustrates an example eNB 102 according to embodiments of the present disclosure. The embodiment of the eNB 102 illustrated in FIGURE 2 is for illustration only, and the eNBs 101 and 103 of FIGURE 1 could have the same or similar configuration. However, eNBs come in a wide variety of configurations, and FIGURE 2 does not limit the scope of this disclosure to any particular implementation of an eNB.

As shown in FIGURE 2, the eNB 102 includes multiple antennas 205a-205n, multiple RF transceivers 210a-210n, transmit (TX) processing circuitry 215, and receive (RX) processing circuitry 220. The eNB 102 also includes a controller/processor 225, a memory 230, and a backhaul or network interface 235.

The RF transceivers 210a-210n receive, from the antennas 205a-205n, incoming RF signals, such as signals transmitted by UEs in the wireless network 100. The RF transceivers 210a-210n down-convert the incoming RF signals to generate IF or baseband signals. The IF or baseband signals are sent to the RX processing circuitry 220, which generates processed baseband signals by filtering, decoding, and/or digitizing the baseband or IF signals. The RX processing circuitry 220 transmits the processed baseband signals to the controller/processor 225 for further processing.

In some embodiments, the RF transceiver 210a-210n is also capable of transmitting downlink signals, to a user equipment (UE), including the single precoder codebook parameters, wherein a precoder matrix indicator (PMI) expression based on a codebook configuration in accordance with the single precoder codebook parameters is swapped at the UE. In some embodiment, the RF transceiver 210a-210n is also capable of receiving, from the UE, a reporting message including channel state information (CSI) based on the $N_1$ and $N_2$.

In some embodiments, the RF transceiver 210a-210n is also capable of transmitting downlink signals, to the UE, including the single precoder codebook parameters, wherein the PMI expression based on the codebook configuration in accordance with the precoder codebook parameter is parameterized based on a pair of parameters comprising $(d_i, d_2)$ in accordance with the $N_1$ and $N_2$.

The TX processing circuitry 215 receives analog or digital data (such as voice data, web data, e-mail, or interactive video game data) from the controller/processor 225. The TX processing circuitry 215 encodes, multiplexes, and/or digitizes the outgoing baseband data to generate processed baseband or IF signals. The RF transceivers 210a-210n receive the outgoing processed baseband or IF signals from the TX processing circuitry 215 and up-converts the baseband or IF signals to RF signals that are transmitted via the antennas 205a-205n.

The controller/processor 225 can include one or more processors or other processing devices that control the overall operation of the eNB 102. For example, the controller/processor 225 could control the reception of forward channel signals and the transmission of reverse channel signals by the RF transceivers 210a-210n, the RX processing circuitry 220, and the TX processing circuitry 215 in accordance with well-known principles. The controller/processor 225 could support additional functions as well, such as more advanced wireless communication functions. For instance, the controller/processor 225 could support beam forming or directional routing operations in which outgoing signals from multiple antennas 205a-205n are weighted differently to effectively steer the outgoing signals in a desired direction. Any of a wide variety of other functions could be supported in the eNB 102 by the controller/processor 225. In some embodiments, the controller/processor 225 includes at least one microprocessor or microcontroller. As described in more detail below, the eNB 102 may include circuitry, programing, or a combination thereof for processing of CSI received from the UE 111-116 in accordance with a first number of antenna ports ($N_1$) for a first dimension and a second number of antenna ports ($N_2$) for a second dimension. For example, controller/processor 225 can be configured to execute one or more instructions, stored in memory 230, that are configured to cause the controller/processor to process CSI received from the UE 111-116 in accordance with a first number of antenna ports ($N_1$) for a first dimension and a second number of antenna ports ($N_2$) for a second dimension.

The controller/processor 225 is also capable of executing programs and other processes resident in the memory 230, such as an OS. The controller/processor 225 can move data into or out of the memory 230 as required by an executing process.

The controller/processor 225 is also coupled to the backhaul or network interface 235. The backhaul or network interface 235 allows the eNB 102 to communicate with other devices or systems over a backhaul connection or over a network. The interface 235 could support communications over any suitable wired or wireless connection(s). For example, when the eNB 102 is implemented as part of a cellular communication system (such as one supporting 5G, LTE, or LTE-A), the interface 235 could allow the eNB 102 to communicate with other eNBs over a wired or wireless backhaul connection. When the eNB 102 is implemented as an access point, the interface 235 could allow the eNB 102 to communicate over a wired or wireless local area network or over a wired or wireless connection to a larger network (such as the Internet). The interface 235 includes any suitable structure supporting communications over a wired or wireless connection, such as an Ethernet or RF transceiver.

The memory 230 is coupled to the controller/processor 225. Part of the memory 230 could include a RAM, and another part of the memory 230 could include a Flash memory or other ROM.

Although FIGURE 2 illustrates one example of eNB 102, various changes may be made to FIGURE 2. For example, the eNB 102 could include any number of each component shown in FIGURE 2. As a particular example, an access point could include a number of interfaces 235, and the controller/processor 225 could support routing functions to route data between different network addresses. As another particular example, while shown as including a single instance of TX processing circuitry 215 and a single instance of RX processing circuitry 220, the eNB 102 could include multiple instances of each (such as one per RF transceiver). Also, various components in FIGURE 2 could be combined, further subdivided, or omitted and additional components could be added according to particular needs.

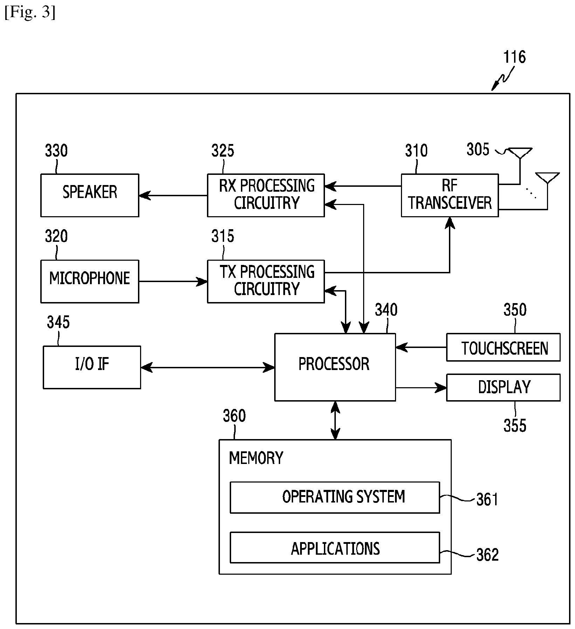

FIGURE 3 illustrates an example UE 116 according to embodiments of the present disclosure. The embodiment of the UE 116 illustrated in FIGURE 3 is for illustration only, and the UEs 111-115 of FIGURE 1 could have the same or similar configuration. However, UEs come in a wide variety of configurations, and FIGURE 3 does not limit the scope of this disclosure to any particular implementation of a UE.

As shown in FIGURE 3, the UE 116 includes a plurality of antennas 305, a radio frequency (RF) transceiver 310, TX processing circuitry 315, a microphone 320, and receive (RX) processing circuitry 325. The UE 116 also includes a speaker 330, a processor 340, an input/output (I/O) interface (IF) 345, a touchscreen 350, a display 355, and a memory 360. The memory 360 includes an operating system (OS) 361 and one or more applications 362.

The RF transceiver 310 receives, from the plurality of antennas 305, an incoming RF signal transmitted by an eNB of the wireless network 100. The RF transceiver 310 down-converts the incoming RF signal to generate an intermediate frequency (IF) or baseband signal. The IF or baseband signal is sent to the RX processing circuitry 325, which generates a processed baseband signal by filtering, decoding, and/or digitizing the baseband or IF signal. The RX processing circuitry 325 transmits the processed baseband signal to the speaker 330 (such as for voice data) or to the processor 340 for further processing (such as for web browsing data).

In some embodiments, the RF transceiver 310 is also capable of receiving, from an eNodeB (eNB), downlink signals indicating precoder codebook parameters that comprise a first number of antenna ports ($N_1$) for a first dimension and a second number of antenna ports ($N_2$) for a second dimension

The TX processing circuitry 315 receives analog or digital voice data from the microphone 320 or other outgoing baseband data (such as web data, e-mail, or interactive video game data) from the processor 340. The TX processing circuitry 315 encodes, multiplexes, and/or digitizes the outgoing baseband data to generate a processed baseband or IF signal. The RF transceiver 310 receives the outgoing processed baseband or IF signal from the TX processing circuitry 315 and up-converts the baseband or IF signal to an RF signal that is transmitted via the plurality of antennas 305.

The processor 340 can include one or more processors or other processing devices and execute the OS 361 stored in the memory 360 in order to control the overall operation of the UE 116. For example, the processor 340 could control the reception of forward channel signals and the transmission of reverse channel signals by the RF transceiver 310, the RX processing circuitry 325, and the TX processing circuitry 315 in accordance with well-known principles. In some embodiments, the processor 340 includes at least one microprocessor or microcontroller.

In 3GPP LTE system or LTE-A system, it is defined that the UE reports Channel State Information (CSI) to the eNB. The CSI indicates information associated with a quality of a wireless link or a wireless channel formed between the UE and the base station. The CSI may comprise a rank indicator (RI), a precoding matrix indicator (PMI), a channel quality indicator (CQI). The RI indicates information associated with a rank for channel, and represents the number of streams received by the UE through a resource. The PMI is a value reflected spatial characteristic for the channel, and indicates an index of precoder that the UE prefers. The CQI is a value indicating a strength of the channel. The CQI may be represent Signal-to-Interference plus Noise Ratio (SINR) of received signals when the eNB uses the PMI.

The processor 340 is also capable of executing other processes and programs resident in the memory 360, such as processes for identifying a codebook configuration based on a single precoder codebook in accordance with the $N_1$ and $N_2$ and swapping precoder matrix indicator (PMI) expressions based on the identified codebook configuration, wherein the transceiver is further configured to transmit, to the eNB, a reporting message including channel state information (CSI) based on the $N_1$ and $N_2$.

In some embodiments, the processor 340 is also capable of determine dummy variables based on a pair of parameters comprising $(d_i, d_2)$ in accordance with the $N_1$ and $N_2$, the dummy variables being determined as $i_{1,d1} = x$ and $i_{1,d2} = y$. Wherein a rank-1 codebook for a codebook configuration 3 is determined based on the dummy variables.

RI included in CSI may be a recommended value of a rank for transmission. Namely, the RI may indicate a number of layers to be used to downlink transmission. The rank may mean a maximum number of streams that can be sent as different information in a given channel.

PMI may indicate precoder matrix recommended to the eNB when the number of layers indicated by the RI is used. Thus, a number of rank associated with a codebook correspond to a number of layers for CSI reporting. For example, a rank-1 codebook indicates a codebook for 1-layer CSI reporting. Another example, a rank-2 codebook indicates a codebook for 2-layer CSI reporting. In other words, a rank-n codebook indicated a codebook for n-layer CSI reporting (i.e. $n$ = 1, 2, 3, ..., 8).

In some embodiments, the processor 340 is also capable of identifying a pair of parameters comprising $(d_i, d_2)$ based on the $N_1$ and $N_2$ and parameterizing a codebook table based on the identified pair of parameters $(d_1, d_2)$. Wherein the $(d_i, d_2)$ are defined as at least one of $(d_1, d_2) = (1, 2)$ when the $N_1$ is greater or equal to the $N_2$ or $(d_1, d_2) = (2, 1)$ when the $N_1$ is less than the $N_2$. In one example, when the $(d_i, d_2) = (1, 2)$, a master codebook for a 1 layer CSI reporting is determined. In another example, when the $(d_i, d_2) = (2, 1)$, the master codebook for the 1 layer CSI reporting is determined.

In some embodiments, the processor 340 is also capable of determining a first discrete fourier transform (DFT) vector ($v_m$) representing a vertical beam for the first dimension and a second DFT vector ($u_n$) representing a horizontal DFT beam for the second dimension; and swapping the PMI expressions in a rank 1 codebook and a rank 2 codebook for a codebook configuration 3 and a codebook configuration 4 based on the determined first and second DFT vectors. In such embodiments, the swapped PMI expressions comprise an order of $(m_1, m_2)$ based on the $N_1$ and $N_2$. In one example, when the $N_1$ is greater or equals to the $N_2$, a rank 1 precoder based on the swapped PMI expressions is determined as

$$W_{m_1,m_2,n}^{(1)} = \frac{1}{\sqrt{Q}} \begin{bmatrix} w_{m_1,m_2} \\ \varphi_n w_{m_1,m_2} \end{bmatrix}$$

, where $v_{m1} \otimes u_{m2}$ is $w_{m1,m2}$. In another example, when the $N_1$ is less than the $N_2$, the rank 1 precoder based on the swapped PMI expression is determined as

$$W_{m_1,m_2,n}^{(1)} = \frac{1}{\sqrt{Q}} \begin{bmatrix} w_{m_2,m_1} \\ \varphi_n w_{m_2,m_1} \end{bmatrix}$$

where $v_{m2} \otimes u_{m1}$ is $w_{m2,m1}$.

The processor 340 can move data into or out of the memory 360 as required by an executing process. In some embodiments, the processor 340 is configured to execute the applications 362 based on the OS 361 or in response to signals received from eNBs or an operator. The processor 340 is also coupled to the I/O interface 345, which provides the UE 116 with the ability to connect to other devices, such as laptop computers and handheld computers.

The I/O interface 345 is the communication path between these accessories and the processor 340.

The processor 340 is also coupled to the touchscreen 350 and the display 355. The operator of the UE 116 can use the touchscreen 350 to enter data into the UE 116. The display 355 may be a liquid crystal display, light emitting diode display, or other display capable of rendering text and/or at least limited graphics, such as from web sites.

The memory 360 is coupled to the processor 340. Part of the memory 360 could include a random access memory (RAM), and another part of the memory 360 could include a Flash memory or other read-only memory (ROM).

Although FIGURE 3 illustrates one example of UE 116, various changes may be made to FIGURE 3. For example, various components in FIGURE 3 could be combined, further subdivided, or omitted and additional components could be added according to particular needs. As a particular example, the processor 340 could be divided into multiple processors, such as one or more central processing units (CPUs) and one or more graphics processing units (GPUs). Also, while FIGURE 3 illustrates the UE 116 configured as a mobile telephone or smartphone, UEs could be configured to operate as other types of mobile or stationary devices.

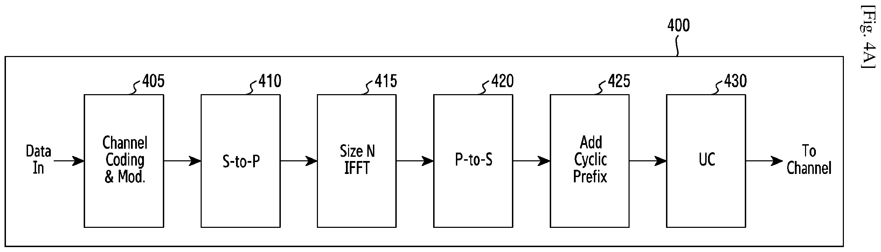

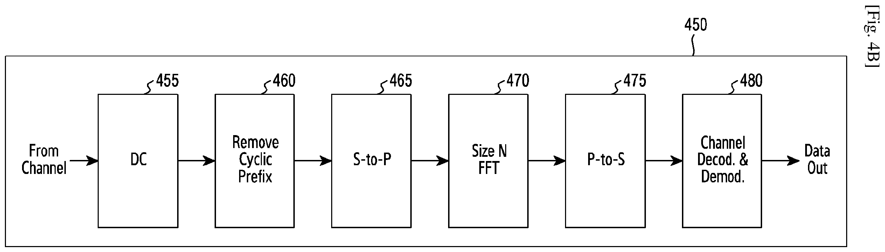

FIGURE 4A is a high-level diagram of transmit path circuitry 400. For example, the transmit path circuitry 400 may be used for an orthogonal frequency division multiple access (OFDMA) communication. FIGURE 4B is a high-level diagram of receive path circuitry 450. For example, the receive path circuitry 450 may be used for an orthogonal frequency division multiple access (OFDMA) communication. In FIGURES 4A and 4B, for downlink communication, the transmit path circuitry 400 may be implemented in a base station (eNB) 102 or a relay station, and the receive path circuitry 450 may be implemented in a user equipment (e.g. user equipment 116 of FIGURE 1). In other examples, for uplink communication, the receive path circuitry 450 may be implemented in a base station (e.g. eNB 102 of FIGURE 1) or a relay station, and the transmit path circuitry 400 may be implemented in a user equipment (e.g. user equipment 116 of FIGURE 1).

Transmit path circuitry 400 comprises channel coding and modulation block 405, serial-to-parallel (S-to-P) block 410, Size N Inverse Fast Fourier Transform (IFFT) block 415, parallel-to-serial (P-to-S) block 420, add cyclic prefix block 425, and up-converter (UC) 430. Receive path circuitry 450 comprises down-converter (DC) 455, remove cyclic prefix block 460, serial-to-parallel (S-to-P) block 465, Size N Fast Fourier Transform (FFT) block 470, parallel-to-serial (P-to-S) block 475, and channel decoding and demodulation block 480.

At least some of the components in FIGURES 4A and 4B may be implemented in software, while other components may be implemented by configurable hardware or a mixture of software and configurable hardware. In particular, it is noted that the FFT blocks and the IFFT blocks described in this disclosure document may be implemented as configurable software algorithms, where the value of Size N may be modified according to the implementation.

Furthermore, although this disclosure is directed to an embodiment that implements the Fast Fourier Transform and the Inverse Fast Fourier Transform, this is by way of illustration only and should not be construed to limit the scope of the disclosure. It will be appreciated that in an alternate embodiment of the disclosure, the Fast Fourier Transform functions and the Inverse Fast Fourier Transform functions may easily be replaced by Discrete Fourier Transform (DFT) functions and Inverse Discrete Fourier Transform (IDFT) functions, respectively. It will be appreciated that for DFT and IDFT functions, the value of the N variable may be any integer number (i.e., 1, 4, 3, 4, etc.), while for FFT and IFFT functions, the value of the N variable may be any integer number that is a power of two (i.e., 1, 2, 4, 8, 16, etc.).

In transmit path circuitry 400, channel coding and modulation block 405 receives a set of information bits, applies coding (e.g., LDPC coding) and modulates (e.g., Quadrature Phase Shift Keying (QPSK) or Quadrature Amplitude Modulation (QAM)) the input bits to produce a sequence of frequency-domain modulation symbols. Serial-to-parallel block 410 converts (i.e., de-multiplexes) the serial modulated symbols to parallel data to produce N parallel symbol streams where N is the IFFT/FFT size used in BS 102 and UE 116. Size N IFFT block 415 then performs an IFFT operation on the N parallel symbol streams to produce time-domain output signals. Parallel-to-serial block 420 converts (i.e., multiplexes) the parallel time-domain output symbols from Size N IFFT block 415 to produce a serial time-domain signal. Add cyclic prefix block 425 then inserts a cyclic prefix to the time-domain signal. Finally, up-converter 430 modulates (i.e., up-converts) the output of add cyclic prefix block 425 to RF frequency for transmission via a wireless channel. The signal may also be filtered at baseband before conversion to RF frequency.

The transmitted RF signal arrives at UE 116 after passing through the wireless channel, and reverse operations to those at eNB 102 are performed. Down-converter 455 down-converts the received signal to baseband frequency, and remove cyclic prefix block 460 removes the cyclic prefix to produce the serial time-domain baseband signal. Serial-to-parallel block 465 converts the time-domain baseband signal to parallel time-domain signals. Size N FFT block 470 then performs an FFT algorithm to produce N parallel frequency-domain signals. Parallel-to-serial block 475 converts the parallel frequency-domain signals to a sequence of modulated data symbols. Channel decoding and demodulation block 480 demodulates and then decodes the modulated symbols to recover the original input data stream.

Each of eNBs 101-103 may implement a transmit path that is analogous to transmitting in the downlink to user equipment 111-116 and may implement a receive path that is analogous to receiving in the uplink from user equipment 111-116. Similarly, each one of user equipment 111-116 may implement a transmit path corresponding to the architecture for transmitting in the uplink to eNBs 101-103 and may implement a receive path corresponding to the architecture for receiving in the downlink from eNBs 101-103.

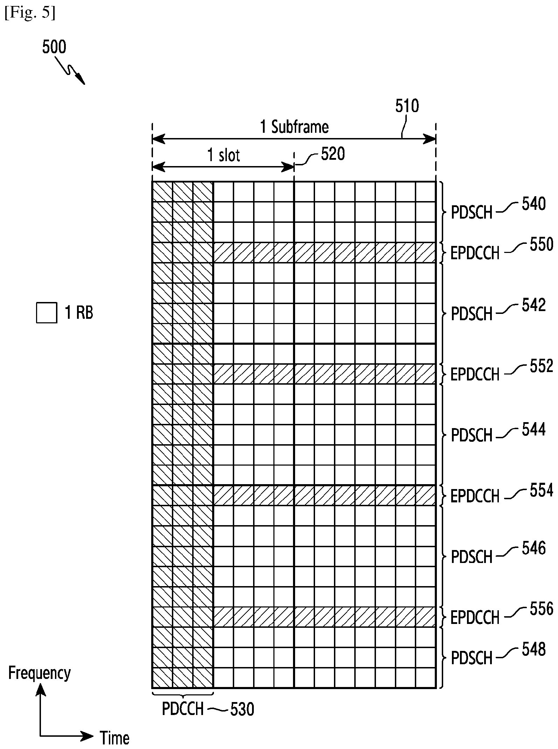

FIGURE 5 illustrates an example structure for a DL subframe 500 according to embodiments of the present disclosure. An embodiment of the DL subframe structure 500 shown in FIGURE 1 is for illustration only. Other embodiments may be used without departing from the scope of the present disclosure. The downlink subframe (DL SF) 510 includes two slots 520 and a total of $N_{\text{symb}}^{\text{DL}}$ symbols for transmitting of data information and downlink control information (DCI). The first $M_{\text{symb}}^{\text{DL}}$ SF symbols are used to transmit PDCCHs and other control channels 530 (not shown in FIGURE 5). The remaining $N_{\text{symb}}^{\text{DL}} - M_{\text{symb}}^{\text{DL}}$ SF symbols are primarily used to transmit physical downlink shared channels (PDSCHs) 540, 542, 544, 546, and 548 or enhanced physical downlink control channels (EPDCCHs) 550, 552, 554, and 556. A transmission bandwidth (BW) comprises frequency resource units referred to as resource blocks (RBs). Each RB comprises either $N_{\text{sc}}^{\text{RB}}$ sub-carriers or resource elements (REs) (such as 12 Res). A unit of one RB over one subframe is referred to as a physical RB (PRB). A UE is allocated to $M_{\text{PDSCH}}$ RBs for a total of $M_{\text{sc}}^{\text{PDSCH}} = M_{\text{PDSCH}} \cdot N_{\text{sc}}^{\text{RB}}$ REs for a PDSCH transmission BW. An EPDCCH transmission is achieved in either one RB or multiple of RBs.

In the following description, it is assumed that a wireless environment for a Multiple-Input Multiple-Output (MIMO) system. For supporting a MIMO system, a user equipment (UE) and an eNB in the present disclosure may use a precoding scheme which divides uplink information and downlink information to each of antennas appropriately according to channel state.

The UE and the eNB may use a precoding scheme based on codebook information for precoding. In the precoding scheme based on codebook information, The UE and the eNB may determine beforehand a set of precoding matrices. The UE may determine a precoding matrix indicator (PMI) indicating a certain precoding matrix in the set of precoding matrices by using information associated with channel state between the eNB. The UE may transmit the PMI to the eNB. In this way, the eNB may share the certain precoding matrix with the UE. The UE has been described as a receiver, and the eNB has been described as a transmitter, but it is not limited to such description. So, the UE may be described as a transmitter, and the eNB may be described as a receiver.

Previously, a codebook for two, four, or eight antenna ports or a codebook for a one-dimensional layout. But, for increment of usage in a wireless channel and improvement in network speed, various codebook schemes are required. To meet this requirement, the UE and the base station in the present disclosure may share a codebook for eight, twelve, and sixteen antenna ports in full dimensional MIMO (FD-MIMO) with each other.

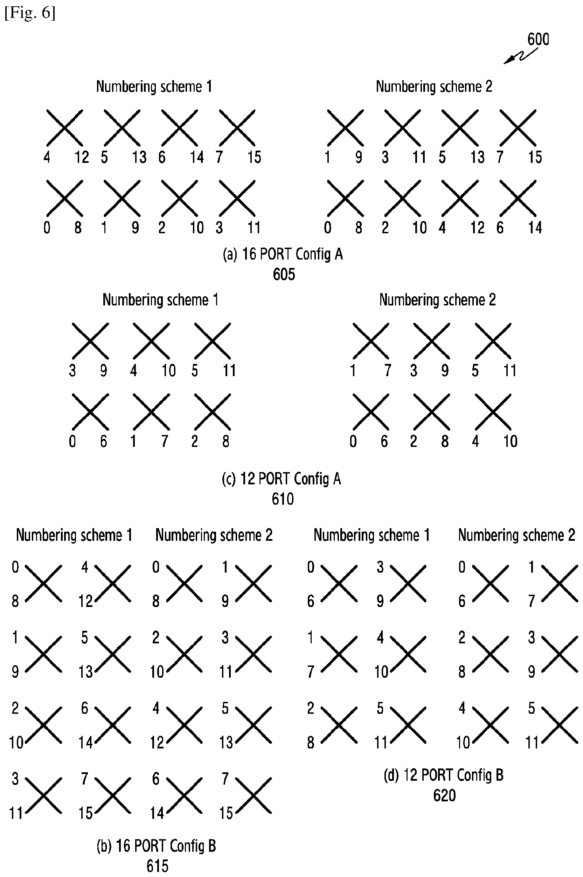

FIGURE 6 illustrates an example antenna configurations and numbering 600 according to embodiments of the present disclosure. An embodiment of the antenna configurations and numbering 600 shown in FIGURE 6 is for illustration only. Other embodiments may be used without departing from the scope of the present disclosure. As shown in FIGURE 6, the antenna configurations and numbering 600 comprise a 16 port configuration A 605, a 12 port configuration A 610, a 16 port configuration B 615, and a 12 port configuration B 620.

As shown in FIGURE 6, in all of the four antenna configurations (e.g., 12 port configuration A and B, and 16 port configuration A and B), a cross pol (or X-pol) antenna array is considered, in which a pair of antenna elements in the same physical location is polarized in two distinct angles (e.g., +45 degrees and -45 degrees). More specifically, the 16 port configuration A 605 and the 16 port configuration B 615 are antenna configurations with 16 CSI-RS ports comprising 8 pairs of x-pol antenna elements placed in a 2D antenna panel. The 8 pairs can be placed in 2x4 (e.g., 605) or 4×2 manner (e.g., 615) on horizontal and vertical dimensions. In addition, the 12 port configuration 610 and the 12 port configuration B 620 are antenna configurations with 12 CSI-RS ports comprising 6 pairs of x-pol antenna elements placed in a 2D antenna panel. The 6 pairs can be placed in 2x3 (e.g., 610) or 3x2 manner (e.g., 620) on horizontal and vertical dimensions.

In some embodiments, antennas are indexed with integer numbers, 0, 1, ..., 15 for 16-port configurations (e.g., 605, 610), and 0, ..., 11 for 12-port configurations (e.g., 610, 620). In fat arrays (such as 12-port configuration 610 A and 16-port configuration A 605), antenna numbers are assigned such that consecutive numbers are assigned for all the antenna elements for a first polarization and proceed to a second polarization. For a given polarization, there may be some different numbering schemes. In one example (e.g., numbering scheme 1), consecutive numbers are assigned for a first row with progressing one edge to another edge and proceed to a second row. In another example (e.g., numbering scheme 2), consecutive numbers are assigned for a first column with progressing one edge to another edge and proceed to a second column.

For example, in the 16 port configuration A 605, antenna numbers 0-7 are assigned for a first polarization and 8-15 are assigned for a second polarization, and antenna numbers 0-3 are assigned for a first row and 4-7 are assigned for a second row. Antenna numbers in tall arrays (such as the 12-port configuration B 620 and the 16-port configuration B 615) are obtained by simply rotating the fat antenna arrays (such as the 12-port configuration A 610 and 16-port configuration A 605) by 90 degrees.

In some embodiments, when a UE is configured with 12 or 16 port CSI-RS for a CSI-RS resource, the UE is configured to report a PMI feedback precoder according to the antenna numbers as shown FIGURE 6. A rank-1 precoder, $W_{m',n',p}$, which is an $N_{CSIRS}$ x1 vector, to be reported by the UE is given by:

$$W_{m,n,p} = \begin{bmatrix} w_0 & w_1 & \cdots & w_{N_{CSIRS}-1} \end{bmatrix}^t = \frac{1}{\sqrt{N_{CSIRS}}} \begin{bmatrix} v_m \otimes u_n \\ \varphi_p(v_{m'} \otimes u_{n'}) \end{bmatrix}$$

Where, $N_{CSIRS}$ = number of configured CSI-RS ports in the CSI-RS resource (e.g., 12, 16, etc.), $u_n$ is a Nx1 oversampled DFT vector for a second dimension, whose oversampling factor is $S_N$, $v_m$ is a Mx1 oversampled DFT vector for a first dimension, whose oversampling factor is $S_M$, and $\varphi_p$ is a co-phase (e.g., in a form of $e^{\frac{j2\pi p}{4}}$, $p = 0,1,2,3$ ). An oversampling factor may be referred as an oversampling rate. The oversampling factor is an oversampling factor for DFT.

In the above equation for $W_{m,n,p}$ $\otimes$ may represent Kronecker product. The equation may be expressed by using $V_{m,n}$ instead of $v_m \otimes u_n$ in the equation. The equation for $W_{m,n,p}$ is expressed as following:

$$W_{m,n,p}^{(1)} = \frac{1}{\sqrt{N_{CSIRS}}} \begin{bmatrix} v_{m,n} \\ \varphi_p v_{m,n} \end{bmatrix}$$, where $\varphi_p$ represents $\varphi_p = e^{j\pi \cdot p/2}$, as described above.

The dimension assignment can be done with $N \geq M$ according to the numbering scheme 1 as shown in FIGURE 6, with $(N,M) \in \{(4,2),(4,3),(2,2)\}$; alternatively, the dimension assignment can be done with $N \leq M$ with swapping the role of columns and rows, with $(N, M) \in \{(2,4), (3,4), (2,2)\}$ according to the numbering scheme 2 as shown in FIGURE 6. In one example, a set of oversampling factors that can be configured for $S_N$ and $S_M$ are {2, 4, 8}; and $m, m' \in \{0, 1,..., S_M M\}$, and $n, n' \in \{0,1,..., S_N N\}$. In a special case, $m = m'$ and $n = n'$.

When any of 16-port configuration A 605 and B 615 for numbering scheme 1 in FIGURE 6 is used at an eNB with configuring $N_{CSIRS}$ =16 to a UE, a submatrix $v_m \otimes u_n$ of $W_{m,n,p}$ corresponds to a precoder applied on 8 co-pol elements, whose antenna numbers are 0 through 7. Given the antenna configuration, $M = 2$ and $N = 4$ may be configured for $v_m$ and $u_n$.

If 16-port configuration A 605 is used, $u_n$ is a 4x1 vector representing a horizontal DFT beam and $v_m$ is a 2x1 vector representing a vertical DFT beam. If 16-port configuration B 615 is used, $u_n$ is a 4x1 vector representing a vertical DFT beam and $v_m$ is a 2x1 vector representing a horizontal DFT beam.

$$v_m = \begin{bmatrix} 1 & e^{j\frac{2\pi m}{M'}} \end{bmatrix}^t = \begin{bmatrix} 1 & e^{j\frac{2\pi m}{MS_M}} \end{bmatrix}^t .$$

With 12 or 16-port configurations, $v_m$ can be written as:

With 16-port configurations, $u_n$ can be written as:

$$u_n = \begin{bmatrix} 1 & e^{j\frac{2\pi n}{N'}} & e^{j\frac{4\pi m}{N'}} & e^{j\frac{6\pi m}{N'}} \end{bmatrix}^t = \begin{bmatrix} 1 & e^{j\frac{2\pi n}{NS_N}} & e^{j\frac{4\pi m}{NS_N}} & e^{j\frac{6\pi m}{NS_N}} \end{bmatrix}^t .$$

With 12-port configurations, $u_n$ can be written as:

$$u_n = \begin{bmatrix} 1 & e^{j\frac{2\pi n}{N'}} & e^{j\frac{4\pi m}{N'}} \end{bmatrix}^t = \begin{bmatrix} 1 & e^{j\frac{2\pi n}{NS_N}} & e^{j\frac{4\pi m}{NS_N}} \end{bmatrix}^t .$$

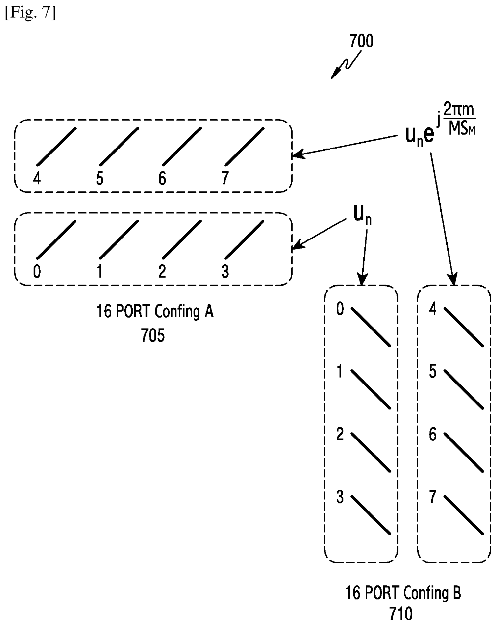

FIGURE 7 illustrates an example precoding weight application 700 to antenna configurations according to embodiments of the present disclosure. An embodiment of the precoding weight application 700 to antenna configurations shown in FIGURE 7 is for illustration only. Other embodiments may be used without departing from the scope of the present disclosure. As shown in FIGURE 7, the precoding weight application 700 comprises a 16 port configuration A 705 and a 16 port configuration B 710.

Precoding weights to be applied to antenna port numbers 0 through 3 in the 16 port configuration A 705 and B 710 are $u_n$, and the precoding weights to be applied to antenna ports numbers 4 through 7 in the 16 port configuration A 705 and B 710 are $u_n e^{j\frac{2\pi m}{MS_M}}$ with an appropriate power normalization factor. Similarly, precoding weights to be applied to antenna port numbers 8 through 11 are $u_{n'}$, and the precoding weights to be applied to antenna ports 12 through 15 arc $u_{n'} e^{j\frac{2\pi n'}{MS_M}}$ with an appropriate power normalization factor. The number ring scheme 1 and 2 in FIGURE 6 may be applied to the precoding weight application 700 as shown in FIGURE 7.

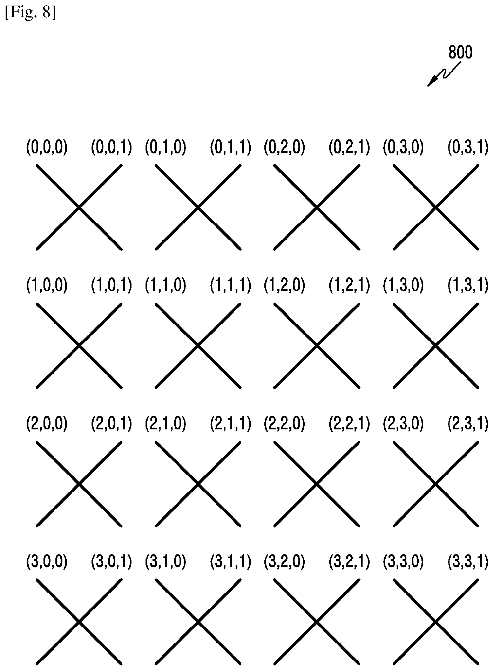

FIGURE 8 illustrates an example antenna element (or transmit resource unit (TXRU)) numbering 800 according to embodiments of the present disclosure. An embodiment of the antenna element (or transmit resource unit (TXRU)) numbering 800 shown in FIGURE 8 is for illustration only. Other embodiments may be used without departing from the scope of the present disclosure.

In some embodiments, an eNB is equipped with 2D rectangular antenna array (or TXRUs) comprising $M$ rows and $N$ columns with $P=2$ polarized, wherein each element (or TXRU) is indexed with $(m, n, p)$, and $m = 0, ..., M-1, n = 0, ..., N-1, p = 0, ..., P-1$, as shown in FIGURE 8 with $M=N=4$. When FIGURE 8 represents a TXRU array, the TXRU can be associated with multiple antenna elements. In one example (1-dimensional (1D) subarray partition), an antenna array comprising a column with a same polarization of a 2D rectangular array is partitioned into $M$ groups of consecutive elements, and the $M$ groups correspond to the $M$ TXRUs in a column with a same polarization in the TXRU array as shown in FIGURE 8.

In some embodiments, a UE is configured with a CSI-RS resource comprising $Q=MNP$ number of CSI-RS ports, wherein the CSI-RS resource is associated with $MNP$ number of resource elements (REs) in a pair of PRBs in a subframe.

In some embodiments, a UE is configured with a CSI-RS configuration via higher layer, configuring $Q$ antenna ports - antenna ports A(1) through A($Q$). The UE is further configured with CSI reporting configuration via higher layer in association with the CSI-RS configuration. The CSI reporting configuration includes information element (IE) indicating the CSI-RS decomposition information (or component PMI port configuration). The information element may comprise at least two integers, say $N_1$ and $N_2$, which respectively indicates a first number of antenna ports per pol for a first dimension, and a second number of antenna ports per pol for a second dimension, wherein $Q = P \cdot N_1 \cdot N_2$.

In some embodiments, the first dimension may correspond to the horizontal direction or columns, and the second dimension may correspond to the vertical direction or rows, i.e., $(N_1, N_2) = (N, M)$.

In some embodiments, the first dimension may correspond to the vertical direction or rows, and the second dimension may correspond to the horizontal direction or columns, i.e., $(N_1, N_2) = (M, N)$.

In the rest of the disclosure, a notation $(N_1, N_2)$ will be used in place of $(M, N)$ or $(N, M)$. Similarly, a notation $(O_1, O_2)$ will be used for the oversampling factors in the two dimensions in place of $(S_N, S_M)$ or $(S_M, S_N)$.

A beam grouping scheme and a codebook can be defined in terms of two groups of parameters and one group per dimension. A group of parameters for dimension J comprises at least one of a number of antenna ports per pol $N_d$, an oversampling factor $O_d$, a skip number (or beam group spacing) $s_d$ (e.g., for W1), a beam offset number $f_d$, a beam spacing number $p_d$ (e.g., for W2), or a number of beams (in each beam group) $L_d$.

A beam group indicated by a first PMI $i_{1,d}$ of dimension $d$ (corresponding to $W_d^{(1)}$) is determined based upon some parameters. For example, a total number of beams is $N_d \cdot o_d$ and the beams are indexed by an integer $m_d$, wherein

$$v_{m_d} = \begin{bmatrix} 1 & e^{j\frac{2\pi m_d}{O_d N_d}} & ... & e^{j\frac{2\pi m_d (N_d - 1)}{O_d N_d}} \end{bmatrix}^t$$

beam $ma$, $v_{m_d}$, corresponds to a precoding vector $, m_d = 0, ..., N_d \cdot O_d$

-1. The First PMI of the first dimension $i_{1,d}$, $i_{1,d} = 0, ..., N_d \cdot O_d / s_d - 1$, can indicate any of $L_d$ beams indexed by $m_d = f_d + s_d \cdot i_{1,d}$, $f_d + s_d \cdot i_{1,d} + p_d, ..., f_d + s_d \cdot i_{1,d} + (L_d - 1) p_d$, wherein these $L_d$ beams are referred to as a beam group.

Class A codebook in LTE specification may be configured with some RRC parameters, for example, $N_1$, $N_2 = \{1, 2, 3, 4, 8\}$ where the valid candidates are $(N_1, N_2) = (8, 1), (2, 2), (2, 3), (3, 2), (2, 4), (4, 2)$, and $O_1$, $O_2 = \{2, 4, 8\}$, and *Config* = $\{1, 2, 3, 4\}$. The *Config* is a parameter indicating a subset of a codebook entry, and is referred as a codebook configuration parameter. The $N_1$, $N_2$, $O_1$, $O_2$, and the codebook configuration parameter are parameters for configuring a codebook table, and are configured via higher layer signaling.

For dimension with one port, an oversampling factor and *Config* = $\{2, 3\}$ may not be applied to. In this example, for each $(N_1, N_2)$, configurability of $(O_1, O_2)$ is restricted to two possible fixed pairs as shown in Table 1.

Table 1

| (N1,N2) | (O1,O2) combinations |
|---------|---------------------|
| (8,1) | (4,-), (8,-) |
| (2,2) | (4,4), (8,8) |
| (2,3) | {(8,4), (8,8)} |
| (3,2) | {(8,4), (4,4)} |
| (2,4) | {(8,4), (8,8)} |
| (4,2) | {(8,4), (4,4)} |

Given the set of values of $N_1$, $N_2$, $O_1$, $O_2$, $W_1$ matrices with $(L'_1, L'_2) = (4,2), (2,4)$ are constructed for $N_1 \geq N_2$ and

$$N_1 < N_2, \text{ respectively. In this instance, } W_1 = \begin{pmatrix} X_1^{m_1} \otimes X_2^{m_2} & 0 \\ 0 & X_1^{m_1} \otimes X_2^{m_2} \end{pmatrix}$$

where $m_i$ is the index for $X_i$ and an associated codebook table is defined in terms of $i'_2$, $i_{11}$ and $i_{12}$.

Given the value of *Config*, a subset of codewords from the codebook table is selected as an active subset of values of $i'_2$, associated with at least one of configurations, for example, Config =1: $(L_1, L_2) = (1, 1)$ for rank 1-2 , Config =2: $(L_1, L_2) = (2, 2)$ for rank 1-2 [square], Config =3: $(L_1, L_2) = (2, 2)$ for rank 1-2 [non-adjacent 2D beams/checkerboard], Config =4: $(L_1, L_2) = (4, 1), (1, 4)$ for $N_1 \geq N_2$ and $N_1 < N_2$ respectively for rank 1-2, or TBD rank 3-8.

Table 2

| $i_2'$ | 0 | 1 | 2 | 3 |
|---|---|---|---|---|
| Precoder | $W^{(1)}_{s_1 i_{1,1},\,s_2 i_{1,2},\,0}$ | $W^{(1)}_{s_1 i_{1,1},\,s_2 i_{1,2},\,1}$ | $W^{(1)}_{s_1 i_{1,1},\,s_2 i_{1,2},\,2}$ | $W^{(1)}_{s_1 i_{1,1},\,s_2 i_{1,2},\,3}$ |
| $i_2'$ | 4 | 5 | 6 | 7 |
| Precoder | $W^{(1)}_{s_1 i_{1,1}+1,\,s_2 i_{1,2},\,0}$ | $W^{(1)}_{s_1 i_{1,1}+1,\,s_2 i_{1,2},\,1}$ | $W^{(1)}_{s_1 i_{1,1}+1,\,s_2 i_{1,2},\,2}$ | $W^{(1)}_{s_1 i_{1,1}+1,\,s_2 i_{1,2},\,3}$ |
| $i_2'$ | 8 | 9 | 10 | 11 |
| Precoder | $W^{(1)}_{s_1 i_{1,1}+2,\,s_2 i_{1,2},\,0}$ | $W^{(1)}_{s_1 i_{1,1}+2,\,s_2 i_{1,2},\,1}$ | $W^{(1)}_{s_1 i_{1,1}+2,\,s_2 i_{1,2},\,2}$ | $W^{(1)}_{s_1 i_{1,1}+2,\,s_2 i_{1,2},\,3}$ |
| $i_2'$ | 12 | 13 | 14 | 15 |
| Precoder | $W^{(1)}_{s_1 i_{1,1}+3,\,s_2 i_{1,2},\,0}$ | $W^{(1)}_{s_1 i_{1,1}+3,\,s_2 i_{1,2},\,1}$ | $W^{(1)}_{s_1 i_{1,1}+3,\,s_2 i_{1,2},\,2}$ | $W^{(1)}_{s_1 i_{1,1}+3,\,s_2 i_{1,2},\,3}$ |
| $i_2'$ | 16 − 31 | | | |
| Precoder | Entries 16-31 constructed with replacing the second subscript $s_2 i_{1,2}$ with $s_2 i_{1,2}+1$ in entries $0-15$. | | | |

Table 2 shows a master codebook for 1 layer CSI reporting (with 32 CWs(codeword), $(L'_1, L'_2) = (4, 2)$). A UE selects 4 or 16 CWs for the second PMI $i_2$ to be reported on PUSCH, based on *Config* from Table 3, wherein the corresponding rank 1 precoder is given by:

$$W^{(1)}_{m_1,m_2,n} = \frac{1}{\sqrt{Q}} \begin{bmatrix} v_{m_1} \otimes u_{m_2} \\ \varphi_n v_{m_1} \otimes u_{m_2} \end{bmatrix}$$

, where

$$v_{m_1} = \begin{bmatrix} 1 & e^{j\frac{2\pi m_1}{O_1 N_1}} & \dots & e^{j\frac{2\pi m_1 (N_1-1)}{O_1 N_1}} \end{bmatrix}^t , \quad u_{m_2} = \begin{bmatrix} 1 & e^{j\frac{2\pi m_2}{O_2 N_2}} & \dots & e^{j\frac{2\pi m_2 (N_2-1)}{O_2 N_2}} \end{bmatrix}^t , \text{ and}$$

$$\varphi_n = e^{j\frac{\pi n}{2}} .$$

Table 3

| Configuration (e.g. Config) | | Selected i'$_2$ indices | ($s_1$, $s_2$) |
|---|---|---|---|
| | Configuration 1 | 0 - 3 | (1,1) |
| | Configuration 2 | 0 - 7, 16 - 23 | (2,2) |
| | Configuration 3 | 0-3, 8-11, 20-23, 28-31 | (2,2) |
| | Configuration 4 | 0 - 15 | (2,2) |

Note that Table 2 is applicable to $N_1 >= N_2$. For $N_1 < N_2$, (L'$_1$, L'$_2$) = (2, 4) may be used. Accordingly, the codebook table needs to modified so that it can be used for $N_1 < N_2$ configuration also.

Since the antenna port configurations ($N_1$, $N_2$) are symmetric in the sense that the antenna port layouts are transpose of one another. For example ($N_1$, $N_2$) = (2,4) and (4, 2) for 16 port and ($N_1$, $N_2$) = (2, 3) and (3, 2) as shown in FIGURE 6. For such antenna port layouts, the same codebook table may be used for representing the different pre-coding vectors and matrices in the two layouts. In other words, a UE and an eNB according to various embodiments, by using a same codebook table, may determine a precoder for both ($N_1$, $N_2$) = (a, b) and (b, a).

In some embodiments, there is one (master) codebook table for both of symmetric antenna port configurations. The one codebook table is referred as a master codebook table. In this case, two symmetric port configurations may be defined for $N_1 \geq N_2$ (configuration A) and $N_1 < N_2$ (configuration B) as shown FIGURE 6. However, depending on the configured antenna port configuration(i.e. a combination of ($N_1$, $N_2$)), the pre-coder may be derived differently.

In some embodiments, an order of ($m_1$, $m_2$) in $W^{(1)}_{m_1,m_2,n}$ expression may be swapped dependent on a configuration. The $m_1$ is an index indicating a beam for the first dimension, and the $m_2$ is an index indicating a beam for the second dimension. For example, the $m_1$ is an index of a first discrete fourier transform (DFT) vector representing the beam for the first dimension and the $m_2$ is an index of a second discrete fourier transform (DFT) vector representing the beam for the second dimension

In some embodiments, for the configuration in which $N_1 \geq N_2$, the order is ($m_1$, $m_2$), and the UE derives the rank-1 pre-coder as $W^{(1)}_{m_1,m_2,n} = \frac{1}{\sqrt{Q}} \begin{bmatrix} v_{m_1} \otimes u_{m_2} \\ \varphi_n v_{m_1} \otimes u_{m_2} \end{bmatrix}$, and for the configuration in which $N_1 < N_2$, the order is swapped as ($m_2$, $m_1$), and the UE derives the rank-1 pre-coder as $W^{(1)}_{m_1,m_2,n} = \frac{1}{\sqrt{Q}} \begin{bmatrix} v_{m_2} \otimes u_{m_1} \\ \varphi_n v_{m_2} \otimes u_{m_1} \end{bmatrix}$. For example, assuming antenna port numbering 2 for a 16 port configuration, the configuration may be given by:

$$(N_1, N_2) = (4, 2) \text{ and}, v_{m_1} = \begin{bmatrix} 1 & e^{j\frac{2\pi m_1}{O_1 N_1}} & e^{j\frac{4\pi m_1}{O_1 N_1}} & e^{j\frac{6\pi m_1}{O_1 N_1}} \end{bmatrix}^t \text{ and } u_{m_2} = \begin{bmatrix} 1 & e^{j\frac{2\pi m_2}{O_2 N_2}} \end{bmatrix}^t ;$$

and

$$(N_1, N_2) = (2, 4) \text{ and}, v_{m_2} = \begin{bmatrix} 1 & e^{j\frac{2\pi m_2}{O_1 N_1}} \end{bmatrix}^t$$

and

$$u_{m_1} = \begin{bmatrix} 1 & e^{j\frac{2\pi m_1}{O_2 N_2}} & e^{j\frac{4\pi m_1}{O_2 N_2}} & e^{j\frac{6\pi m_1}{O_2 N_2}} \end{bmatrix}^t.$$

Similarly, for 12 port configuration, the configuration may be given by:

$$(N_1, N_2) = (3, 2) \text{ and, } v_{m_1} = \begin{bmatrix} 1 & e^{j\frac{2\pi m_1}{O_1 N_1}} & e^{j\frac{4\pi m_1}{O_1 N_1}} \end{bmatrix}^t \text{ and } u_{m_2} = \begin{bmatrix} 1 & e^{j\frac{2\pi m_2}{O_2 N_2}} \end{bmatrix}^t ;$$

and

$$(N_1, N_2) = (2, 3) \text{ and, } v_{m_2} = \begin{bmatrix} 1 & e^{j\frac{2\pi m_2}{O_1 N_1}} \end{bmatrix}^t \text{ and } u_{m_1} = \begin{bmatrix} 1 & e^{j\frac{2\pi m_1}{O_2 N_2}} & e^{j\frac{4\pi m_1}{O_2 N_2}} \end{bmatrix}^t.$$

Referring to the table 3, if the codebook configuration parameter indicates the codebook configuration 3, $(s_1, s_2) =$ (2, 2), the codebook table of the Table 2 may be represented according to a following Table 4. 1 and $m$ of the table 4 correspond to the $m_1$ and the $m_2$, as described above, respectively.

Table 4

| $i_{1,1}$ | $i_{1,2}$ | $i_2$ | | | |
| --- | --- | --- | --- | --- | --- |
| | | 0 | 1 | 2 | 3 |
| $0,1,...,\dfrac{N_1 O_1}{2}-1$ | $0,1,...,\dfrac{N_2 O_2}{2}-1$ | $W^{(1)}_{2x,2y,0}$ | $W^{(1)}_{2x,2y,1}$ | $W^{(1)}_{2x,2y,2}$ | $W^{(1)}_{2x,2y,3}$ |

| $i_{1,1}$ | $i_{1,2}$ | $i_2$ | | | |
| --- | --- | --- | --- | --- | --- |
| | | 4 | 5 | 6 | 7 |
| $0,1,...,\dfrac{N_1 O_1}{2}-1$ | $0,1,...,\dfrac{N_2 O_2}{2}-1$ | $W^{(1)}_{2x+2,2y,0}$ | $W^{(1)}_{2x+2,2y,1}$ | $W^{(1)}_{2x+2,2y,2}$ | $W^{(1)}_{2x+2,2y,3}$ |

| $i_{1,1}$ | $i_{1,2}$ | $i_2$ | | | |
| --- | --- | --- | --- | --- | --- |
| | | 8 | 9 | 10 | 11 |
| $0,1,...,\dfrac{N_1 O_1}{2}-1$ | $0,1,...,\dfrac{N_2 O_2}{2}-1$ | $W^{(1)}_{2x+1,2y+1,0}$ | $W^{(1)}_{2x+1,2y+1,1}$ | $W^{(1)}_{2x+1,2y+1,2}$ | $W^{(1)}_{2x+1,2y+1,3}$ |

| $i_{1,1}$ | $i_{1,2}$ | $i_2$ | | | |
| --- | --- | --- | --- | --- | --- |
| | | 12 | 13 | 14 | 15 |
| $0,1,...,\dfrac{N_1 O_1}{2}-1$ | $0,1,...,\dfrac{N_2 O_2}{2}-1$ | $W^{(1)}_{2x+3,2y+1,0}$ | $W^{(1)}_{2x+3,2y+1,1}$ | $W^{(1)}_{2x+3,2y+1,2}$ | $W^{(1)}_{2x+3,2y+1,3}$ |

$$\text{where} \quad x=i_{1,1}, \quad y=i_{1,2}, \quad W^{(1)}_{l,m,n}=\frac{1}{\sqrt{P}}\begin{bmatrix} v_{l,m} \\ \varphi_n v_{l,m} \end{bmatrix}, \text{ if } N_1 \geq N_2$$

$$x=i_{1,2}, \quad y=i_{1,1}, \quad W^{(1)}_{l,m,n}=\frac{1}{\sqrt{P}}\begin{bmatrix} v_{m,l} \\ \varphi_n v_{m,l} \end{bmatrix}, \text{ if } N_1 < N_2$$

Referring to the table 3, if the codebook configuration parameter indicates the codebook configuration 4, $(s_1, s_2) =$ (2, 2), the codebook table of the Table 2 may be represented according to a following Table 5. $l$ and $m$ of the table 4 correspond to the $m_1$ and the $m_2$, as described above, respectively.

Table 5

| $i_{1,1}$ | $i_{1,2}$ | $i_2$ | | | |
| --- | --- | --- | --- | --- | --- |
| | | 0 | 1 | 2 | 3 |
| $0,1,...,\dfrac{N_1 O_1}{2}-1$ | $0,1,...,\dfrac{N_2 O_2}{2}-1$ | $W_{2x,2y,0}^{(1)}$ | $W_{2x,2y,1}^{(1)}$ | $W_{2x,2y,2}^{(1)}$ | $W_{2x,2y,3}^{(1)}$ |

| $i_{1,1}$ | $i_{1,2}$ | $i_2$ | | | |
| --- | --- | --- | --- | --- | --- |
| | | 4 | 5 | 6 | 7 |
| $0,1,...,\dfrac{N_1 O_1}{2}-1$ | $0,1,...,\dfrac{N_2 O_2}{2}-1$ | $W_{2x+1,2y,0}^{(1)}$ | $W_{2x+1,2y,1}^{(1)}$ | $W_{2x+1,2y,2}^{(1)}$ | $W_{2x+1,2y,3}^{(1)}$ |

| $i_{1,1}$ | $i_{1,2}$ | $i_2$ | | | |
| --- | --- | --- | --- | --- | --- |
| | | 8 | 9 | 10 | 11 |
| $0,1,...,\dfrac{N_1 O_1}{2}-1$ | $0,1,...,\dfrac{N_2 O_2}{2}-1$ | $W_{2x+2,2y,0}^{(1)}$ | $W_{2x+2,2y,1}^{(1)}$ | $W_{2x+2,2y,2}^{(1)}$ | $W_{2x+2,2y,3}^{(1)}$ |

| $i_{1,1}$ | $i_{1,2}$ | $i_2$ | | | |
| --- | --- | --- | --- | --- | --- |
| | | 12 | 13 | 14 | 15 |
| $0,1,...,\dfrac{N_1 O_1}{2}-1$ | $0,1,...,\dfrac{N_2 O_2}{2}-1$ | $W_{2x+3,2y,0}^{(1)}$ | $W_{2x+3,2y,1}^{(1)}$ | $W_{2x+3,2y,2}^{(1)}$ | $W_{2x+3,2y,3}^{(1)}$ |

$$\text{where } x=i_{1,1}, \quad y=i_{1,2}, \quad W_{l,m,n}^{(1)}=\frac{1}{\sqrt{P}}\begin{bmatrix} v_{l,m} \\ \varphi_n v_{l,m} \end{bmatrix}, \text{ if } N_1 \geq N_2$$

$$x=i_{1,2}, \quad y=i_{1,1}, \quad W_{l,m,n}^{(1)}=\frac{1}{\sqrt{P}}\begin{bmatrix} v_{m,l} \\ \varphi_n v_{m,l} \end{bmatrix}, \text{ if } N_1 < N_2$$

According to various embodiments, the UE and the eNB may identify a precoder codebook for both a case of $(N_1 \geq N_2)$ and a case of $(N_1 < N_2)$ from rank-1 codebook table(namely, a codebook for 1 layer CSI reporting) by swapping an index associated with the first dimension (i.e. $i_{1,1}$ or $l$) and an index associated with the second dimension (i.e. $i_{1,2}$ or $m$).

Note that with the swapping operation, the dimensions of the two vectors to the left and to the right of Kronecker operator are swapped in the two expressions.

In some embodiments, $v_{m_1} \otimes u_{m_2}$ is presented as $w_{m_1,m_2}$. In this case, the alternate expression for rank-1 pre-coder is given by $W_{m_1,m_2,n}^{(1)}=\frac{1}{\sqrt{Q}}\begin{bmatrix} w_{m_1,m_2} \\ \varphi_n w_{m_1,m_2} \end{bmatrix}$ for $(N_1 \geq N_2)$ and $W_{m_1,m_2,n}^{(1)}=\frac{1}{\sqrt{Q}}\begin{bmatrix} w_{m_2,m_1} \\ \varphi_n w_{m_2,m_1} \end{bmatrix}$ for $(N_1 < N_2)$.

In the Table 4 and Table 5, as $l$ and $m$ is represented as $m_1$ and $m_2$, $Q$ may be represented as $P$. In the same way, $w_{m1,m2}$ may be represented as $w_{m1,m2}$ and $\varphi_n$ may be represented as $\phi_n$. As a result, the alternate expression for rank-1 pre-coder may be given by $W_{l,m,n}^{(1)}=\frac{1}{\sqrt{P}}\begin{bmatrix} v_{l,m} \\ \phi_n v_{l,m} \end{bmatrix}$ for $(N_1 \geq N_2)$ and $W_{l,m,n}^{(1)}=\frac{1}{\sqrt{P}}\begin{bmatrix} v_{m,l} \\ \varphi_n v_{m,l} \end{bmatrix}$ for $(N_1 < N_2)$.

According to these alternatives, the expressions for rank 2-8 pre-coders are determined.

Table 6 shows four configurations for rank-2 and Table 7A and 7B show a master codebook for 2 layers CSI reporting.

Table 6

| Configuration (e.g., config) | | Selected $i_2'$ indices | (s1, s2) |
|---|---|---|---|
| Configuration 1 | | 0-1 | (1, 1) |
| Configuration 2 | | 0-3, 8-9, 16-19, 22-23, 28-31 | (2,2) |
| Configuration 3 | | 0-1, 4-5, 8-9, 12-13, 18-21, 24-27 | (2,2) |
| Configuration 4 | | 0-15 | (2,2) |

Table 7A

| $i_2'$ | 0 | 1 |
|---|---|---|
| Precoder | $W^{(2)}_{s_1 i_{1,1}, s_2 i_{1,2}, s_1 i_{1,1}, s_2 i_{1,2}, 0}$ | $W^{(2)}_{s_1 i_{1,1}, s_2 i_{1,2}, s_1 i_{1,1}, s_2 i_{1,2}, 1}$ |
| $i_2'$ | 2 | 3 |
| Precoder | $W^{(2)}_{s_1 i_{1,1}+p_1, s_2 i_{1,2}, s_1 i_{1,1}+p_1, s_2 i_{1,2}, 0}$ | $W^{(2)}_{s_1 i_{1,1}+p_1, s_2 i_{1,2}, s_1 i_{1,1}+p_1, s_2 i_{1,2}, 1}$ |
| $i_2'$ | 4 | 5 |
| $i_{1,1}, i_{1,2}$ | $W^{(2)}_{s_1 i_{1,1}+2p_1, s_2 i_{1,2}, s_1 i_{1,1}+2p_1, s_2 i_{1,2}, 0}$ | $W^{(2)}_{s_1 i_{1,1}+2p_1, s_2 i_{1,2}, s_1 i_{1,1}+2p_1, s_2 i_{1,2}, 1}$ |
| $i_2'$ | 6 | 7 |
| $i_{1,1}, i_{1,2}$ | $W^{(2)}_{s_1 i_{1,1}+3p_1, s_2 i_{1,2}, s_1 i_{1,1}+3p_1, s_2 i_{1,2}, 0}$ | $W^{(2)}_{s_1 i_{1,1}+3p_1, s_2 i_{1,2}, s_1 i_{1,1}+3p_1, s_2 i_{1,2}, 1}$ |
| $i_2'$ | 8 | 9 |
| $i_{1,1}, i_{1,2}$ | $W^{(2)}_{s_1 i_{1,1}, s_2 i_{1,2}, s_1 i_{1,1}+p_1, s_2 i_{1,2}, 0}$ | $W^{(2)}_{s_1 i_{1,1}, s_2 i_{1,2}, s_1 i_{1,1}+p_1, s_2 i_{1,2}, 1}$ |
| $i_2'$ | 10 | 11 |
| $i_{1,1}, i_{1,2}$ | $W^{(2)}_{s_1 i_{1,1}+p_1, s_2 i_{1,2}, s_1 i_{1,1}+2p_1, s_2 i_{1,2}, 0}$ | $W^{(2)}_{s_1 i_{1,1}+p_1, s_2 i_{1,2}, s_1 i_{1,1}+2p_1, s_2 i_{1,2}, 1}$ |
| $i_2'$ | 12 | 13 |
| $i_{1,1}, i_{1,2}$ | $W^{(2)}_{s_1 i_{1,1}, s_2 i_{1,2}, s_1 i_{1,1}+3p_1, s_2 i_{1,2}, 0}$ | $W^{(2)}_{s_1 i_{1,1}, s_2 i_{1,2}, s_1 i_{1,1}+3p_1, s_2 i_{1,2}, 1}$ |
| $i_2'$ | 14 | 15 |
| $i_{1,1}, i_{1,2}$ | $W^{(2)}_{s_1 i_{1,1}+p_1, s_2 i_{1,2}, s_1 i_{1,1}+3p_1, s_2 i_{1,2}, 0}$ | $W^{(2)}_{s_1 i_{1,1}+p_1, s_2 i_{1,2}, s_1 i_{1,1}+3p_1, s_2 i_{1,2}, 1}$ |

Table 7B

| $i_2'$ | 16 | 17 |
|---|---|---|
| $i_{1,1}, i_{1,2}$ | $W^{(2)}_{s_1i_{1,1},s_2i_{1,2}+p_2,s_1i_{1,1},s_2i_{1,2}+p_2,0}$ | $W^{(2)}_{s_1i_{1,1},s_2i_{1,2}+p_2,s_1i_{1,1},s_2i_{1,2}+p_2,1}$ |
| $i_2'$ | 18 | 19 |
| $i_{1,1}, i_{1,2}$ | $W^{(2)}_{s_1i_{1,1}+p_1,s_2i_{1,2}+p_2,s_1i_{1,1}+p_1,s_2i_{1,2}+p_2,0}$ | $W^{(2)}_{s_1i_{1,1}+p_1,s_2i_{1,2}+p_2,s_1i_{1,1}+p_1,s_2i_{1,2}+p_2,1}$ |
| $i_2'$ | 20 | 21 |
| $i_{1,1}, i_{1,2}$ | $W^{(2)}_{s_1i_{1,1}+3p_1,s_2i_{1,2}+p_2,s_1i_{1,1}+3p_1,s_2i_{1,2}+p_2,0}$ | $W^{(2)}_{s_1i_{1,1}+3p_1,s_2i_{1,2}+p_2,s_1i_{1,1}+3p_1,s_2i_{1,2}+p_2,1}$ |
| $i_2'$ | 22 | 23 |
| $i_{1,1}, i_{1,2}$ | $W^{(2)}_{s_1i_{1,1},s_2i_{1,2}+p_2,s_1i_{1,1}+p_1,s_2i_{1,2}+p_2,0}$ | $W^{(2)}_{s_1i_{1,1},s_2i_{1,2}+p_2,s_1i_{1,1}+p_1,s_2i_{1,2}+p_2,1}$ |
| $i_2'$ | 24 | 25 |
| $i_{1,1}, i_{1,2}$ | $W^{(2)}_{s_1i_{1,1}+p_1,s_2i_{1,2}+p_2,s_1i_{1,1}+2p_1,s_2i_{1,2}+p_2,0}$ | $W^{(2)}_{s_1i_{1,1}+p_1,s_2i_{1,2}+p_2,s_1i_{1,1}+2p_1,s_2i_{1,2}+p_2,1}$ |
| $i_2'$ | 26 | 27 |
| $i_{1,1}, i_{1,2}$ | $W^{(2)}_{s_1i_{1,1}+p_1,s_2i_{1,2}+p_2,s_1i_{1,1}+3p_1,s_2i_{1,2}+p_2,0}$ | $W^{(2)}_{s_1i_{1,1}+p_1,s_2i_{1,2}+p_2,s_1i_{1,1}+3p_1,s_2i_{1,2}+p_2,1}$ |
| $i_2'$ | 28 | 29 |
| $i_{1,1}, i_{1,2}$ | $W^{(2)}_{s_1i_{1,1},s_2i_{1,2},s_1i_{1,1},s_2i_{1,2}+p_2,0}$ | $W^{(2)}_{s_1i_{1,1},s_2i_{1,2},s_1i_{1,1},s_2i_{1,2}+p_2,1}$ |
| $i_2'$ | 30 | 31 |
| $i_{1,1}, i_{1,2}$ | $W^{(2)}_{s_1i_{1,1}+p_1,s_2i_{1,2},s_1i_{1,1}+p_1,s_2i_{1,2}+p_2,0}$ | $W^{(2)}_{s_1i_{1,1}+p_1,s_2i_{1,2},s_1i_{1,1}+p_1,s_2i_{1,2}+p_2,1}$ |

Referring to the table 6, 7A and 7B, if the codebook configuration parameter indicates the codebook configuration 3, $(s_1,s_2)$ = (2, 2), the rank-2 codebook table may be represented according to a following Table 8. 1 and $m$ of the table 4 correspond to the $m_1$ and the $m_2$, as described above, respectively.

Table 8

| $i_{1,1}$ | $i_{1,2}$ | $i_2$ | |
|---|---|---|---|
| | | 0 | 1 |
| $0,1,...,\dfrac{N_1O_1}{2}-1$ | $0,1,...,\dfrac{N_2O_2}{2}-1$ | $W^{(2)}_{2x,2x,2y,2y,0}$ | $W^{(2)}_{2x,2x,2y,2y,1}$ |
| | | 2 | 3 |
| | | $W^{(2)}_{2x+1,2x+1,2y+1,2y+1,0}$ | $W^{(2)}_{2x+1,2x+1,2y+1,2y+1,1}$ |
| $i_{1,1}$ | $i_{1,2}$ | $i_2$ | |
| | | 4 | 5 |
| $0,1,...,\dfrac{N_1O_1}{2}-1$ | $0,1,...,\dfrac{N_2O_2}{2}-1$ | $W^{(2)}_{2x+2,2x+2,2y,2y,0}$ | $W^{(2)}_{2x+2,2x+2,2y,2y,1}$ |
| | | 6 | 7 |
| | | $W^{(2)}_{2x+3,2x+3,2y+1,2y+1,0}$ | $W^{(2)}_{2x+3,2x+3,2y+1,2y+1,1}$ |
| $i_{1,1}$ | $i_{1,2}$ | $i_2$ | |
| | | 8 | 9 |

| $i_{1,1}$ | $i_{1,2}$ | $i_2$ | |
|---|---|---|---|
| $0,1,...,\dfrac{N_1O_1}{2}-1$ | $0,1,...,\dfrac{N_2O_2}{2}-1$ | $W^{(2)}_{2x,2x+1,2y,2y+1,0}$ | $W^{(2)}_{2x,2x+1,2y,2y+1,1}$ |
| | | 10 | **11** |
| | | $W^{(2)}_{2x+1,2x+2,2y+1,2y,0}$ | $W^{(2)}_{2x+1,2x+2,2y+1,2y,1}$ |
| $i_{1,1}$ | $i_{1,2}$ | $i_2$ | |
| | | 12 | 13 |
| $0,1,...,\dfrac{N_1O_1}{2}-1$ | $0,1,...,\dfrac{N_2O_2}{2}-1$ | $W^{(2)}_{2x,2x+3,2y,2y+1,0}$ | $W^{(2)}_{2x,2x+3,2y,2y+1,1}$ |
| | | 14 | **15** |
| | | $W^{(2)}_{2x+1,2x+3,2y+1,2y+1,0}$ | $W^{(2)}_{2x+1,2x+3,2y+1,2y+1,1}$ |

where $x = i_{1,1}$, $y = i_{1,2}$, $W^{(2)}_{l,l',m,m',n} = \dfrac{1}{\sqrt{2P}}\begin{bmatrix} v_{l,m} & v_{l',m'} \\ \varphi_n v_{l,m} & -\varphi_n v_{l',m'} \end{bmatrix}$ if $N_1 \geq N_2$ and

$x = i_{1,2}$, $y = i_{1,1}$, $W^{(2)}_{l,l',m,m',n} = \dfrac{1}{\sqrt{2P}}\begin{bmatrix} v_{m,l} & v_{m',l'} \\ \varphi_n v_{m,l} & -\varphi_n v_{m',l'} \end{bmatrix}$, if $N_1 < N_2$

Referring to the table 6, 7A and 7B, if the codebook configuration parameter indicates the codebook configuration 4, $(s_1,s_2) = (2, 2)$, the rank-2 codebook table may be represented according to a following Table 9. $l$ and $m$ of the table 4 correspond to the $m_1$ and the $m_2$, as described above, respectively.

Table 9

| $i_{1,1}$ | $i_{1,2}$ | $i_2$ | |
|---|---|---|---|
| | | 0 | 1 |
| $0,1,...,\dfrac{N_1O_1}{2}-1$ | $0,1,...,\dfrac{N_2O_2}{2}-1$ | $W^{(2)}_{2x,2x,2y,2y,0}$ | $W^{(2)}_{2x,2x,2y,2y,1}$ |

| $i_{1,1}$ | $i_{1,2}$ | $i_2$ | |
|---|---|---|---|
| | | 2 | 3 |
| | | $W^{(2)}_{2x+1,2x+1,2y,2y,0}$ | $W^{(2)}_{2x+1,2x+1,2y,2y,1}$ |
| $i_{1,1}$ | $i_{1,2}$ | $i_2$ | |
| | | 4 | 5 |
| $0,1,...,\dfrac{N_1 O_1}{2}-1$ | $0,1,...,\dfrac{N_2 O_2}{2}-1$ | $W^{(2)}_{2x+2,2x+2,2y,2y,0}$ | $W^{(2)}_{2x+2,2x+2,2y,2y,1}$ |
| | | 6 | 7 |
| | | $W^{(2)}_{2x+3,2x+3,2y,2y,0}$ | $W^{(2)}_{2x+3,2x+3,2y,2y,1}$ |
| $i_{1,1}$ | $i_{1,2}$ | $i_2$ | |
| | | 8 | 9 |
| $0,1,...,\dfrac{N_1 O_1}{2}-1$ | $0,1,...,\dfrac{N_2 O_2}{2}-1$ | $W^{(2)}_{2x,2x+1,2y,2y,0}$ | $W^{(2)}_{2x,2x+1,2y,2y,1}$ |
| | | 10 | 11 |
| | | $W^{(2)}_{2x+1,2x+2,2y,2y,0}$ | $W^{(2)}_{2x+1,2x+2,2y,2y,1}$ |
| $i_{1,1}$ | $i_{1,2}$ | $i_2$ | |
| | | 12 | 13 |
| $0,1,...,\dfrac{N_1 O_1}{2}-1$ | $0,1,...,\dfrac{N_2 O_2}{2}-1$ | $W^{(2)}_{2x,2x+3,2y,2y,0}$ | $W^{(2)}_{2x,2x+3,2y,2y,1}$ |
| | | 14 | 15 |
| | | $W^{(2)}_{2x+1,2x+3,2y,2y,0}$ | $W^{(2)}_{2x+1,2x+3,2y,2y,1}$ |

where $x = i_{1,1}$, $y = i_{1,2}$, $\quad W^{(2)}_{l,l',m,m',n} = \dfrac{1}{\sqrt{2P}}\begin{bmatrix} v_{l,m} & v_{l',m'} \\ \varphi_n v_{l,m} & -\varphi_n v_{l',m'} \end{bmatrix}$ if $N_1 \geq N_2$ and

$\quad x = i_{1,2}$, $y = i_{1,1}$, $\quad W^{(2)}_{l,l',m,m',n} = \dfrac{1}{\sqrt{2P}}\begin{bmatrix} v_{m,l} & v_{m',l'} \\ \varphi_n v_{m,l} & -\varphi_n v_{m',l'} \end{bmatrix}$, if $N_1 < N_2$

According to various embodiments, the UE and the eNB may identify a precoder codebook for both a case of $(N_1 \geq N_2)$ and a case of $(N_1 < N_2)$ from rank-2 codebook table(namely, a codebook for 2 layer CSI reporting) by swapping an index associated with the first dimension (i.e. $i_{1,1}$ or $l$) and an index associated with the second dimension (i.e. $i_{1,2}$ or $m$).

In some embodiments, the rank-2 class A codebook is described in Table 6 and Table 7A and 7B, where $i_{1,1} = 0,1, ..., O_1 N_1 / s_1 - 1$, $i_{1,2} = 0,1, ..., O_2 N_2 / s_2 - 1$, and $p_1 = 1$ and $p_2 = 1$, and the pre-coder expression are given by:

Expression $(N_1 \geq N_2)$, $W^{(2)}_{m_1,m_2,m_1',m_2',n} = \frac{1}{\sqrt{2Q}} \begin{bmatrix} v_{m_1} \otimes u_{m_2} & v_{m_1'} \otimes u_{m_2'} \\ \varphi_n v_{m_1} \otimes u_{m_2} & -\varphi_n v_{m_1'} \otimes u_{m_2'} \end{bmatrix}$

Expression $(N_1 < N_2)$, $W^{(2)}_{m_1,m_2,m_1',m_2',n} = \frac{1}{\sqrt{2Q}} \begin{bmatrix} v_{m_2} \otimes u_{m_1} & v_{m_2'} \otimes u_{m_1'} \\ \varphi_n v_{m_2} \otimes u_{m_1} & -\varphi_n v_{m_2'} \otimes u_{m_1'} \end{bmatrix}$

Alternate expression $(N_1 \geq N_2)$, $W^{(2)}_{m_1,m_2,m_1',m_2',n} = \frac{1}{\sqrt{2Q}} \begin{bmatrix} w_{m_1,m_2} & w_{m_1',m_2'} \\ \varphi_n w_{m_1,m_2} & -\varphi_n w_{m_1',m_2'} \end{bmatrix}$

Alternate expression $(N_1 < N_2)$, $W^{(2)}_{m_1,m_2,m_1',m_2',n} = \frac{1}{\sqrt{2Q}} \begin{bmatrix} w_{m_2,m_1} & w_{m_2',m_1'} \\ \varphi_n w_{m_2,m_1} & -\varphi_n w_{m_2',m_1'} \end{bmatrix}$.

In the table 8 and 9, as $l$ and $m$ is represented as $m_1$ and $m_2$, $Q$ may be represented as $P$. In the same way, $w_{m1,m2}$ may be represented as $w_{m1,m2}$ and $\varphi_n$ may be represented as $\phi_n$. As a result, the alternate expression for rank-2 pre-coder may be given by

$$W^{(2)}_{l,l',m,m',n} = \frac{1}{\sqrt{2P}} \begin{bmatrix} v_{l,m} & v_{l',m'} \\ \phi_n v_{l,m} & -\phi_n v_{l',m'} \end{bmatrix} \text{ for } (N_1 \geq N_2);$$

and

$$W^{(2)}_{l,l',m,m',n} = \frac{1}{\sqrt{2P}} \begin{bmatrix} v_{m,l} & v_{m',l'} \\ \phi_n v_{m,l} & -\varphi_n v_{m',l'} \end{bmatrix} \text{ for } (N_1 < N_2).$$

In some embodiments, a second alternative design for Configuration 3 (described in Table 10 and Table 11) is also considered.

Table 10 shows a description of an alternative design for configuration 3 in rank-2 codebook. Table 11 shows a codebook table for alternative design for configuration 3 in rank02 codebook.

Table 10

| Configuration | | Selected $i_2'$ indices | (s1,s2) |
|---|---|---|---|
| Alternative Configuration 3 | | | |
| X pattern (for both layer 1 and 2) | Allowed 2D beam combinations | 4-7, 16-27 | (2,2) |

Table 11

| $i_2'$ | 0 − 19 | |
|---|---|---|
| $i_{1,1}, i_{1,2}$ | Same as Table 7b | |
| $i_2'$ | 20 | 21 |
| $i_{1,1}, i_{1,2}$ | $W^{(2)}_{s_1 i_{1,1}, s_2 i_{1,2}+p_2, s_1 i_{1,1}+3p_1, s_2 i_{1,2}, 0}$ | $W^{(2)}_{s_1 i_{1,1}, s_2 i_{1,2}+p_2, s_1 i_{1,1}+3p_1, s_2 i_{1,2}, 1}$ |
| $i_2'$ | 22 | 23 |
| $i_{1,1}, i_{1,2}$ | Same as Table 7b | Same as Table 7b |
| $i_2'$ | 24 | 25 |
| $i_{1,1}, i_{1,2}$ | $W^{(2)}_{s_1 i_{1,1}+p_1, s_2 i_{1,2}+p_2, s_1 i_{1,1}+2p_1, s_2 i_{1,2}, 0}$ | $W^{(2)}_{s_1 i_{1,1}+p_1, s_2 i_{1,2}+p_2, s_1 i_{1,1}+2p_1, s_2 i_{1,2}, 1}$ |
| $i_2'$ | 26 | 27 |
| $i_{1,1}, i_{1,2}$ | $W^{(2)}_{s_1 i_{1,1}+p_1, s_2 i_{1,2}+p_2, s_1 i_{1,1}+3p_1, s_2 i_{1,2}, 0}$ | $W^{(2)}_{s_1 i_{1,1}+p_1, s_2 i_{1,2}+p_2, s_1 i_{1,1}+3p_1, s_2 i_{1,2}, 1}$ |
| $i_2'$ | 28-31 | |
| $i_{1,1}, i_{1,2}$ | Same as Table 7b | |

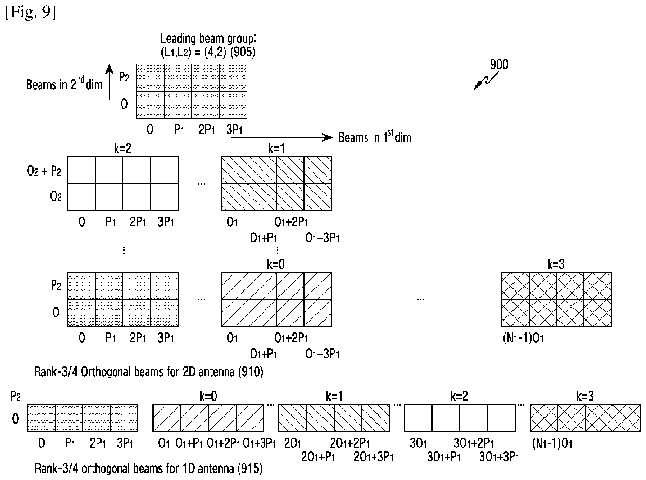

FIGURE 9 illustrates an example rank 3-4 orthogonal beam pair construction 900 according to embodiments of the present disclosure. An embodiment of the rank 3-4 orthogonal beam pair construction 900 shown in FIGURE 9 is for illustration only. Other embodiments may be used without departing from the scope of the present disclosure. As shown in FIGURE 9, the rank 3-4 orthogonal beam pair construction 900 comprises a leading beam group 905, rank 3-4 orthogonal beams for 2D antenna 910, and rank 3-4 orthogonal beams for 1D antenna 915.

In some embodiments, for rank 3-4, the codebook for a given rank value is characterized by four parameters such as $\{i_{11}, i_{12}, k, i_2\}$. Different values of parameter $k$ are used to construct different types of orthogonal beam groups for rank 3-4 codebook. An illustration of four orthogonal beam types, indexed by $k$ = 0, 1, 2, 3, is shown in FIGURE 9 and a single rank 3-4 codebooks tables are constructed for all orthogonal beam types.

Table 14 and Table 15 show the rank 3-4 codebook tables that can be used for any of Q = 8, 12, and 16 antenna port configurations, where $i_{1,1}$ = 0,1, ..., $O_1 N_1/s_1$ - 1; $i_{1,2}$ = 0,1,..., $O_2 N_2/s_2$ - 1; and k = 0, 1, 2,3; $\delta_1, \delta_2$ are selected from Table 14 depending on the k value.

The corresponding rank 3 pre-coder expression is given by:

Rank-3 expression ($N_1 \geq N_2$):

$$W^{(3)}_{m_1,m_1',m_2,m_2'} = \frac{1}{\sqrt{3Q}} \begin{bmatrix} v_{m_1} \otimes u_{m_2} & v_{m_1} \otimes u_{m_2} & v_{m_1'} \otimes u_{m_2'} \\ v_{m_1} \otimes u_{m_2} & -v_{m_1} \otimes u_{m_2} & -v_{m_1'} \otimes u_{m_2'} \end{bmatrix}$$

$$\widetilde{W}^{(3)}_{m_1,m_1',m_2,m_2'} = \frac{1}{\sqrt{3Q}} \begin{bmatrix} v_{m_1} \otimes u_{m_2} & v_{m_1'} \otimes u_{m_2'} & v_{m_1'} \otimes u_{m_2'} \\ v_{m_1} \otimes u_{m_2} & v_{m_1'} \otimes u_{m_2'} & -v_{m_1'} \otimes u_{m_2'} \end{bmatrix}$$

Rank-3 expression ($N_1 < N_2$):

$$W^{(3)}_{m_1,m_1',m_2,m_2'} = \frac{1}{\sqrt{3Q}} \begin{bmatrix} v_{m_2} \otimes u_{m_1} & v_{m_2} \otimes u_{m_1} & v_{m_2'} \otimes u_{m_1'} \\ v_{m_2} \otimes u_{m_1} & -v_{m_2} \otimes u_{m_1} & -v_{m_2'} \otimes u_{m_1'} \end{bmatrix}$$

$$\widetilde{W}^{(3)}_{m_1,m_1',m_2,m_2'} = \frac{1}{\sqrt{3Q}} \begin{bmatrix} v_{m_2} \otimes u_{m_1} & v_{m_2'} \otimes u_{m_1'} & v_{m_2'} \otimes u_{m_1'} \\ v_{m_2} \otimes u_{m_1} & v_{m_2'} \otimes u_{m_1'} & -v_{m_2'} \otimes u_{m_1'} \end{bmatrix};$$

Alternate rank-3 expression ($N_1 \geq N_2$):

$$W^{(3)}_{m_1,m_1',m_2,m_2'} = \frac{1}{\sqrt{3Q}} \begin{bmatrix} w_{m_1,m_2} & w_{m_1,m_2} & w_{m_1',m_2'} \\ w_{m_1,m_2} & -w_{m_1,m_2} & -w_{m_1',m_2'} \end{bmatrix}$$

$$\widetilde{W}^{(3)}_{m_1,m_1',m_2,m_2'} = \frac{1}{\sqrt{3Q}} \begin{bmatrix} w_{m_1,m_2} & w_{m_1',m_2'} & w_{m_1',m_2'} \\ w_{m_1,m_2} & w_{m_1',m_2'} & -w_{m_1',m_2'} \end{bmatrix}$$

Alternate rank-3 expression ($N_1 < N_2$):

$$W^{(3)}_{m_1,m_1',m_2,m_2'} = \frac{1}{\sqrt{3Q}} \begin{bmatrix} w_{m_2,m_1} & w_{m_2,m_1} & w_{m_2',m_1'} \\ w_{m_2,m_1} & -w_{m_2,m_1} & -w_{m_2',m_1'} \end{bmatrix}$$

$$\widetilde{W}^{(3)}_{m_1,m_1',m_2,m_2'} = \frac{1}{\sqrt{3Q}} \begin{bmatrix} w_{m_2,m_1} & w_{m_2',m_1'} & w_{m_2',m_1'} \\ w_{m_2,m_1} & w_{m_2',m_1'} & -w_{m_2',m_1'} \end{bmatrix}.$$

The corresponding rank 4 pre-coder expression is given by:

Rank-4 expression ($N_1 \geq N_2$):

$$W^{(4)}_{m_1,m_1',m_2,m_2',n} = \frac{1}{\sqrt{4Q}} \begin{bmatrix} v_{m_1} \otimes u_{m_2} & v_{m_1'} \otimes u_{m_2'} & v_{m_1} \otimes u_{m_2} & v_{m_1'} \otimes u_{m_2'} \\ \varphi_n v_{m_1} \otimes u_{m_2} & \varphi_n v_{m_1'} \otimes u_{m_2'} & -\varphi_n v_{m_1} \otimes u_{m_2} & -\varphi_n v_{m_1'} \otimes u_{m_2'} \end{bmatrix}$$

Rank-4 expression ($N_1 < N_2$):

$$W^{(4)}_{m_1,m_1',m_2,m_2',n} = \frac{1}{\sqrt{4Q}} \begin{bmatrix} v_{m_2} \otimes u_{m_1} & v_{m_2'} \otimes u_{m_1'} & v_{m_2} \otimes u_{m_1} & v_{m_2'} \otimes u_{m_1'} \\ \varphi_n v_{m_2} \otimes u_{m_1} & \varphi_n v_{m_2'} \otimes u_{m_1'} & -\varphi_n v_{m_2} \otimes u_{m_1} & -\varphi_n v_{m_2'} \otimes u_{m_1'} \end{bmatrix}$$

Alternate rank-4 expression ($N_1 \geq N_2$):

$$W^{(4)}_{m_1,m_1',m_2,m_2',n} = \frac{1}{\sqrt{4Q}} \begin{bmatrix} w_{m_1,m_2} & w_{m_1',m_2'} & w_{m_1,m_2} & w_{m_1',m_2'} \\ \varphi_n w_{m_1,m_2} & \varphi_n w_{m_1',m_2'} & -\varphi_n w_{m_1,m_2} & -\varphi_n w_{m_1',m_2'} \end{bmatrix}$$

Alternate rank-4 expression ($N_1 < N_2$):

$$W^{(4)}_{m_1,m_1',m_2,m_2',n} = \frac{1}{\sqrt{4Q}} \begin{bmatrix} w_{m_2,m_1} & w_{m_2',m_1'} & w_{m_2,m_1} & w_{m_2',m_1'} \\ \varphi_n w_{m_2,m_1} & \varphi_n w_{m_2',m_1'} & -\varphi_n w_{m_2,m_1} & -\varphi_n w_{m_2',m_1'} \end{bmatrix}.$$

Table 12 shows orthogonal beam type to ($\delta_1, \delta_2$) mapping and Table 13 shows an alternate orthogonal beam type to ($\delta_1, \delta_2$) mapping.

Table 12

|  | $\delta$ | k | | | |
|---|---|---|---|---|---|
|  |  | 0 | 1 | 2 | 3 |
| If $N_1 > 1$ and $N_2 > 1$ | $\delta_1$ | $O_1$ | 0 | $O_1$ | $(N_1 - 1)O_1$ |
|  | $\delta_2$ | 0 | $O_2$ | $O_2$ | 0 |
| If $N_2 = 1$ | $\delta_1$ | $O_1$ | $2O_1$ | $3O_1$ | $(N_1 - 1)O_1$ |
|  | $\delta_2$ | 0 | 0 | 0 | 0 |

Table 13

|  | $\delta$ | k | | | | | | | |
|---|---|---|---|---|---|---|---|---|---|
|  |  | 0 | 1 | 2 | 3 | 4 | 5 | 6 | 7 |
| If $N_1 > 1$ and $N_2 > 1$ | $\delta_1$ | $O_1$ | 0 | $O_1$ | $2O_1$ | 0 | $O_1$ | $2O_1$ | $2O_1$ |
|  | $\delta_2$ | 0 | $O_2$ | $O_2$ | 0 | $2O_2$ | $2O_2$ | $O_2$ | $2O_2$ |
| If $N_2 = 1$ | $\delta_1$ | $O_1$ | $2O_1$ | $3O_1$ |  |  |  |  |  |
|  | $\delta_2$ | 0 | 0 | 0 |  |  |  |  |  |

Table 14 shows a codebook for 3 layers CSI reporting and Table 15 shows a codebook for 4 layers CSI reporting.

Table 14

| $i_2'$ | 0 | 1 |
|---|---|---|
| $i_{1,1}$, $i_{1,2}$, $k$ | $W^{(3)}_{s_1 i_{1,1},s_1 i_{1,1}+\delta_1,s_2 i_{1,2},s_2 i_{1,2}+\delta_2}$ | $W^{(3)}_{s_1 i_{1,1}+\delta_1,s_1 i_{1,1},s_2 i_{1,2}+\delta_2,s_2 i_{1,2}}$ |
| $i_2'$ | 2 | 3 |
| $i_{1,1}$, $i_{1,2}$, $k$ | $\widetilde{W}^{(3)}_{s_1 i_{1,1},s_1 i_{1,1}+\delta_1,s_2 i_{1,2},s_2 i_{1,2}+\delta_2}$ | $\widetilde{W}^{(3)}_{s_1 i_{1,1}+\delta_1,s_1 i_{1,1},s_2 i_{1,2}+\delta_2,s_2 i_{1,2}}$ |
| $i_2'$ | 4 | 5 |
| $i_{1,1}$, $i_{1,2}$, $k$ | $W^{(3)}_{s_1 i_{1,1}+p_1,s_1 i_{1,1}+p_1+\delta_1,s_2 i_{1,2},s_2 i_{1,2}+\delta_2}$ | $W^{(3)}_{s_1 i_{1,1}+p_1+\delta_1,s_1 i_{1,1}+p_1,s_2 i_{1,2}+\delta_2,s_2 i_{1,2}}$ |
| $i_2'$ | 6 | 7 |
| $i_{1,1}$, $i_{1,2}$, $k$ | $\widetilde{W}^{(3)}_{s_1 i_{1,1}+p_1,s_1 i_{1,1}+p_1+\delta_1,s_2 i_{1,2},s_2 i_{1,2}+\delta_2}$ | $\widetilde{W}^{(3)}_{s_1 i_{1,1}+p_1+\delta_1,s_1 i_{1,1}+p_1,s_2 i_{1,2}+\delta_2,s_2 i_{1,2}}$ |
| $i_2'$ | 8 | 9 |
| $i_{1,1}$, $i_{1,2}$, $k$ | $W^{(3)}_{s_1 i_{1,1}+2p_1,s_1 i_{1,1}+2p_1+\delta_1,s_2 i_{1,2},s_2 i_{1,2}+\delta_2}$ | $W^{(3)}_{s_1 i_{1,1}+2p_1+\delta_1,s_1 i_{1,1}+2p_1,s_2 i_{1,2}+\delta_2,s_2 i_{1,2}}$ |
| $i_2'$ | 10 | 11 |
| $i_{1,1}$, $i_{1,2}$, $k$ | $\widetilde{W}^{(3)}_{s_1 i_{1,1}+2p_1,s_1 i_{1,1}+2p_1+\delta_1,s_2 i_{1,2},s_2 i_{1,2}+\delta_2}$ | $\widetilde{W}^{(3)}_{s_1 i_{1,1}+2p_1+\delta_1,s_1 i_{1,1}+2p_1,s_2 i_{1,2}+\delta_2,s_2 i_{1,2}}$ |
| $i_2'$ | 12 | 13 |

| $i_{1,1}, i_{1,2}, k$ | $W^{(3)}_{s_1 i_{1,1}+3p_1, s_1 i_{1,1}+3p_1+\delta_1, s_2 i_{1,2}, s_2 i_{1,2}+\delta_2}$ | $W^{(3)}_{s_1 i_{1,1}+3p_1+\delta_1, s_1 i_{1,1}+3p_1, s_2 i_{1,2}+\delta_2, s_2 i_{1,2}}$ |
|---|---|---|
| $i'_2$ | 14 | 15 |
| $i_{1,1}, i_{1,2}, k$ | $\widetilde{W}^{(3)}_{s_1 i_{1,1}+3p_1, s_1 i_{1,1}+3p_1+\delta_1, s_2 i_{1,2}, s_2 i_{1,2}+\delta_2}$ | $\widetilde{W}^{(3)}_{s_1 i_{1,1}+3p_1+\delta_1, s_1 i_{1,1}+3p_1, s_2 i_{1,2}+\delta_2, s_2 i_{1,2}}$ |
| $i'_2$ | 16-31 | |
| $i_{1,1}, i_{1,2}, k$ | Entries 16-31 constructed with replacing $s_2 i_{1,2}$ in third and fourth subscripts with $s_2 i_{1,2}+p_2$ in entries $0-15$. | |

Table 15

| $i_2'$ | 0 | 1 |
|---|---|---|
| $i_{1,1}, i_{1,2}, k$ | $W^{(4)}_{s_1 i_{1,1},\, s_1 i_{1,1}+\delta_1,\, s_2 i_{1,2},\, s_2 i_{1,2}+\delta_2,\, 0}$ | $W^{(4)}_{s_1 i_{1,1},\, s_1 i_{1,1}+\delta_1,\, s_2 i_{1,2},\, s_2 i_{1,2}+\delta_2,\, 1}$ |
| $i_2'$ | 2 | 3 |
| $i_{1,1}, i_{1,2}, k$ | $W^{(4)}_{s_1 i_{1,1}+p_1,\, s_1 i_{1,1}+p_1+\delta_1,\, s_2 i_{1,2},\, s_2 i_{1,2}+\delta_2,\, 0}$ | $W^{(4)}_{s_1 i_{1,1}+p_1,\, s_1 i_{1,1}+p_1+\delta_1,\, s_2 i_{1,2},\, s_2 i_{1,2}+\delta_2,\, 1}$ |
| $i_2'$ | 4 | 5 |
| $i_{1,1}, i_{1,2}, k$ | $W^{(4)}_{s_1 i_{1,1}+2p_1,\, s_1 i_{1,1}+2p_1+\delta_1,\, s_2 i_{1,2},\, s_2 i_{1,2}+\delta_2,\, 0}$ | $W^{(4)}_{s_1 i_{1,1}+2p_1,\, s_1 i_{1,1}+2p_1+\delta_1,\, s_2 i_{1,2},\, s_2 i_{1,2}+\delta_2,\, 1}$ |
| $i_2'$ | 6 | 7 |
| $i_{1,1}, i_{1,2}, k$ | $W^{(4)}_{s_1 i_{1,1}+3p_1,\, s_1 i_{1,1}+3p_1+\delta_1,\, s_2 i_{1,2},\, s_2 i_{1,2}+\delta_2,\, 0}$ | $W^{(4)}_{s_1 i_{1,1}+3p_1,\, s_1 i_{1,1}+3p_1+\delta_1,\, s_2 i_{1,2},\, s_2 i_{1,2}+\delta_2,\, 1}$ |
| $i_2'$ | 8 – 15 | |
| $i_{1,1}, i_{1,2}, k$ | Entries 8-15 constructed with replacing $s_2 i_{1,2}$ in third and fourth subscripts with $s_2 i_{1,2}+p_2$ in entries $0-7$. | |

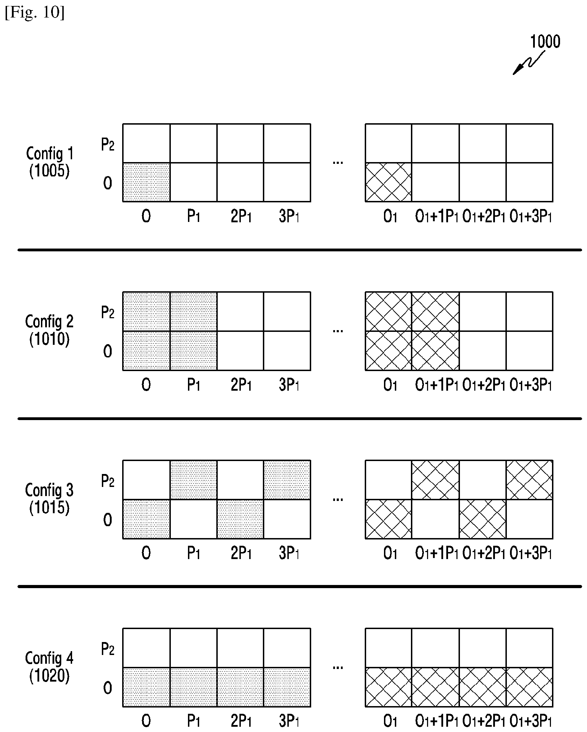

FIGURE 10 illustrates an example orthogonal beam 1000 for rank 3-4 according to embodiments of the present disclosure. An embodiment of the orthogonal beam 1000 for rank 3-4 shown in FIGURE 10 is for illustration only. Other embodiments may be used without departing from the scope of the present disclosure. As shown in FIGURE 10, the orthogonal beam 1000 for rank 3-4 comprises a configuration 1 1005, a configuration 2 1010, a configuration 3 1015, and a configuration 4 1020.

In some embodiments, a UE is configured with a beam group configuration from four configurations, namely the configuration 1 1005, the configuration 2 1010, the configuration 3 1015, and the configuration 4 1020, for codebook subset selection on mater rank 3-4 codebooks. For $k = 0$, an illustration of the four configurations is shown FIGURE 10. Depending on the configuration, the UE selects $i_2'$ indices (in Table 14 and Table 15) according to Table 16 and Table 17 for rank 3 and rank 4, respectively, for PMI reporting. The parameters $(s_1,s_2)$ and $(p_1,p_2)$ for the four configurations are shown in Table 16 and Table 17.

Table 16 shows selected $i_2'$ indices for rank-3 CSI reporting and Table 17 shows selected $i_2'$ indices for rank-4 CSI reporting.

Table 16

| Configuration | Selected $i_2'$ indices | $(s1,s2)$ | $(p_1,p_2)$ |
|---|---|---|---|
| 1 | 0,2 | (1,1) | (-,-) |

(continued)

| Configuration | Selected $i_2'$ indices | $(s1,s2)$ | $(p_1,p_2)$ |
|---|---|---|---|
| 2 | 0 - 7, 16 - 23 | $(O_1,O_2)$ | $(\frac{O_1}{2},\frac{O_2}{2})$ |
| 3 | 0 - 3, 8 - 11, 20 - 23, 28 - 31 | $(O_1,O_2)$ | $(\frac{O_1}{4},\frac{O_2}{2})$ |
| 4 | 0-15 | $(O_1,\frac{O_2}{2})$ | $(\frac{O_1}{4},-)$ |

Table 17

| Configuration | Selected $i_2'$ indices | $(s1,s2)$ | $(p_1,p_2)$ |
|---|---|---|---|
| 1 | 0, 1 | $(1,1)$ | $(-,-)$ |
| 2 | 0 - 3, 8 - 11 | $(O_1,O_2)$ | $(\frac{O_1}{2},\frac{O_2}{2})$ |
| 3 | 0 - 1, 4 - 5, 10 - 11, 14 - 15 | $(O_1,O_2)$ | $(\frac{O_1}{4},\frac{O_2}{2})$ |
| 4 | 0 - 7 | $(O_1,\frac{O_2}{2})$ | $(\frac{O_1}{4},-)$ |

Note that $p_1 = s_1/L_1$ for the configurations 2-4, where $L_1$ is the number of included beam indices along the first dimension of the master codebook. In other words, for the configurations 2-4, the effective oversampling is kept fixed for rank 3-4.

In some embodiments, a UE is configured with a second alternative design for a configuration 3 in rank 3-4 codebook, which is described in Table 18. Table 18 shows a description of alternative design for the configuration 3 in rank 3-4 codebook.

Table 18

| Alternative Configuration 3 | | Rank-3: selected $i_2'$ indices (Table 14) | Rank-4: selected $i_2'$ indices (Table 15) | $(s1,s2)$ | $(p_1,p_2)$ |
|---|---|---|---|---|---|
| | | 8-23 | 4-11 | $(O_1,O_2)$ | $(\frac{O_1}{4},\frac{O_2}{2})$ |

In some embodiments, a UE feeds back $k$ in PMI as part of W1 indication. In particular, $k$ is jointly encoded with $i_1$ indication(s) or $(i_{1,1}, i_{1,2})$ indication. In some embodiments, a UE is configured with a $k$ value. In some embodiments, there are two alternatives for the number of values of $k$. In one example, two values: $k = 0,1$ as shown in Table 13. In another example, maximum eight values are determined if $N_1 > 1$ and $N_2 > 1$: $k = 0,1,2...,7$ as shown in Table 13. In yet another example, maximum eight values are determined if $N_2 = 1$: $k = 0, 1, 2$ as shown in Table 13. In such example, a UE may be configured with at least one of examples.

In some embodiments, a UE is configured with rank 3-4 codebook tables as shown in Table 14 and Table 15 with $(s_1, s_2)$ and $(p_1, p_2)$ parameters according to Table 19. In one example, Table 19 may be applicable to oversampling factors $O_1, O_2 = 4, 8, 16$, etc.. In another example, Table 19 may be applicable to a number of antenna ports $Q = 8, 12, 16$, etc..

Note that Table 19 is for $N_1 \geq N_2$ case. For $N_1 < N_2$, the parameter table is obtained by swapping the dimension indices (1, 2) with (2, 1) in Table 19.

Table 19

| Antenna port configuration | Configuration | $(s_1, s_2)$ | $(p_1, p_2)$ |
|---|---|---|---|
| If $N_1 >$ land $N_2 > 1$ | 1 | (1,1) | (-,-) |
| | 2 | $(\frac{O_1}{2}, \frac{O_2}{2})$ | $(\frac{O_1}{4}, \frac{O_2}{4})$ |
| | 3 | $(O_1, \frac{O_2}{2})$ | $(\frac{O_1}{4}, \frac{O_2}{4})$ |
| | 4 | $(O_1, \frac{O_2}{4})$ | $(\frac{O_1}{4}, -)$ |
| $N_2 = 1$ | 4 | $(O_1, -)$ | $(\frac{O_1}{4}, -)$ |

The motivation behind this choice of parameters is to have the same effective oversampling factor for configuration = 2, 3, 4. For instance, an effective oversampling factor for the parameters in Table 19 is (4, 4), which is the same as the effective oversampling factor in LTE specification codebook. As an example, if $O_1 = O_2 = 8$, then corresponding beam indices are 0, 2, 4, 6, etc. in the two dimensions. In one example for configuration 2, in both dimensions, beams (0, 2) form one beam group, beams (4, 6) form the next beam group, and so on. In another example for configuration 3, in 1st dimension, beams (0,2,4,6) form one beam group, beams (8, 10, 12, 14) form the next beam group, and so on, and in 2nd dimension, beams (0, 2) form one beam group, beams (4, 6) form the next beam group, and so on. In yet another example for configuration 4, in 1st dimension, beams (0, 2, 4, 6) form one beam group, beams (8, 10, 12, 14) form the next beam group, and so on, and in 2nd dimension, beam 0 forms one beam group, beam 2 forms the next beam group, and so on. Note that the effective oversampling factor is maintained at $(O_1, O_2)$ for configuration 1.

In some embodiments, a UE is configured with rank 3-4 codebook tables as shown in Table 14 and Table 15 with $(s_1, s_2)$ and $(p_1, p_2)$ parameters according to Table 20, which corresponds to effective oversampling factors the same as the configured oversampling factors. Table 20 shows $(s_1, s_2)$ and $(p_1, p_2)$ parameters for rank 3-4 codebook for $N_1 \geq N_2$.

Table 20

| Antenna port configuration | Configuration | $(s_1, s_2)$ | $(p_1, p_2)$ |
|---|---|---|---|
| If $N_1 >$ land $N_2 > 1$ | 1 | (1,1) | (-,-) |
| | 2 | (2,2) | (1,1) |
| | 3 | (4,2) | |
| | 4 | (4,1) | |
| $N_2 = 1$ | 4 | (4,-) | (1,-) |

In some embodiments, a UE is configured with rank 3-4 codebook tables in Table 14 and 15 with $(s_1, s_2)$ and $(p_1, p_2)$ parameters the same as in the rank 1-2 codebook. In this case, the parameters are given by Table 21. Table 21 shows $(s_1, s_2)$ and $(p_1, p_2)$ parameters for rank 3-4 codebook for $N_1 \geq N_2$.

Table 21

| Antenna port configuration | Configuration | $(s_1, s_2)$ | $(p_1, p_2)$ |
|---|---|---|---|
| If $N_1 > 1$ and $N_2 > 1$ | 1 | (1,1) | (-,-) |
| | 2-4 | (2,2) | (1,1) |
| $N_2 = 1$ | 4 | (2,-) | (1,-) |

In some embodiments, for rank 5-8, the proposed codebooks are characterized by two parameters such as $\{i_{11}, i_{12}\}$. Consequently, only W1 feedback applies. For rank 5, 6, 7, 8, the precoding matrices are as in the following, where $\delta_{1,1}$, $\delta_{1,2}$, $(\delta_{1,3}, \delta_{2,1}, \delta_{2,2}, \delta_{2,3}$ are determined by the RRC *'Config'* parameter that can take values 1,2,3,4.

$$\textbf{\textit{Rank-5 expression}} \ (N_1 \geq N_2), \ W^{(5)}_{i_{1,1}, i_{1,2}} = \frac{1}{\sqrt{5Q}} \begin{bmatrix} m1 & m1 & m3 & m3 & m5 \\ m1 & m2 & m3 & m4 & m5 \end{bmatrix},$$

where $m1 = v_{s1i_{1,1}} \otimes u_{s2i_{1,2}}$, $m2 = -v_{s1i_{1,1}} \otimes u_{s2i_{1,2}}$, $m3 = v_{s1i_{1,1}+\delta_{1,1}} \otimes u_{s2i_{1,2}+\delta_{2,1}}$, $m4 = -v_{s1i_{1,1}+\delta_{1,1}} \otimes u_{s2i_{1,2}+\delta_{2,1}}$, and $m5 = v_{s1i_{1,1}+\delta_{1,2}} \otimes u_{s2i_{1,2}+\delta_{2,2}}$.

$$\textbf{\textit{Rank-5 expression}} \ (N_1 < N_2), W^{(5)}_{i_{1,1}, i_{1,2}} = \frac{1}{\sqrt{5Q}} \begin{bmatrix} m6 & m6 & m8 & m8 & m10 \\ m6 & m7 & m8 & m9 & m10 \end{bmatrix},$$

where $m6 = v_{s2i_{1,2}} \otimes u_{s1i_{1,1}}$, $m7 = -v_{s2i_{1,2}} \otimes u_{s1i_{1,1}}$, $m8 = v_{s2i_{1,2}+\delta_{2,1}} \otimes u_{s1i_{1,1}+\delta_{1,1}}$, $m9 = -v_{s2i_{1,2}+\delta_{2,1}} \otimes u_{s1,i_{1,1}+\delta_{1,1}}$, and $m10 = v_{s2i_{1,2}+\delta_{2,2}} \otimes u_{s1i_{1,1}+\delta_{1,2}}$.

$$\textbf{\textit{Rank-6 expression}} \ (N_1 \geq N_2), W^{(6)}_{i_{1,1}, i_{1,2}} = \frac{1}{\sqrt{6Q}} \begin{bmatrix} m1 & m1 & m3 & m3 & m5 & m5 \\ m1 & m2 & m3 & m4 & m5 & m11 \end{bmatrix},$$

where $m11 = -v_{s1i_{1,1}+\delta_{1,2}} \otimes u_{s2i_{1,2}+\delta_{2,2}}$.

$$\textbf{\textit{Rank-6 expression}} \ (N_1 < N_2),$$

$$W^{(6)}_{i_{1,1}, i_{1,2}} = \frac{1}{\sqrt{6Q}} \begin{bmatrix} m6 & m6 & m8 & m8 & m10 & m10 \\ m6 & m7 & m8 & m9 & m10 & m12 \end{bmatrix}, \text{ where } m12 = -v_{s2i_{1,2}+\delta_{2,2}} \otimes u_{s1i_{1,1}+\delta_{1,2}}.$$

$$\textbf{\textit{Rank-7 expression}} \ (N_1 \geq N_2),$$

$$W^{(7)}_{i_{1,1}, i_{1,2}} = \frac{1}{\sqrt{7Q}} \begin{bmatrix} m1 & m1 & m3 & m3 & m5 & m5 & m13 \\ m1 & m2 & m3 & m4 & m5 & m11 & m13 \end{bmatrix},$$

where $m13 = -v_{s1i_{1,1}+\delta_{1,3}} \otimes u_{s2i_{1,2}+\delta_{2,3}}$

$$\textbf{\textit{Rank-7 expression}} \ (N_1 < N_2),$$

$$W^{(7)}_{i_{1,1}, i_{1,2}} = \frac{1}{\sqrt{7Q}} \begin{bmatrix} m6 & m6 & m8 & m8 & m10 & m10 & m14 \\ m6 & m7 & m8 & m9 & m10 & m12 & m14 \end{bmatrix}, \text{ where } m14 = v_{s2i_{1,2}+\delta_{2,3}} \otimes u_{s1i_{1,1}+\delta_{1,3}}.$$

**Rank-8 expression ($N_1 \geq N_2$),**

$$W^{(8)}_{i_{1,1},i_{1,2}} = \frac{1}{\sqrt{8Q}} \begin{bmatrix} m1 & m1 & m3 & m3 & m5 & m5 & m15 & m15 \\ m1 & m2 & m3 & m4 & m5 & m11 & m15 & m13 \end{bmatrix},$$

where $m15 = v_{s_1 i_{1,1}+\delta_{1,3}} \otimes u_{s_2 i_{1,2}+\delta_{2,3}}$.

**Rank-8 expression ($N_1 < N_2$),**

$$W^{(8)}_{i_{1,1},i_{1,2}} = \frac{1}{\sqrt{8Q}} \begin{bmatrix} m6 & m6 & m8 & m8 & m10 & m10 & m14 & m14 \\ m6 & m7 & m8 & m9 & m10 & m12 & m14 & m16 \end{bmatrix},$$

where $m16 = -v_{s_2 i_{1,2}+\delta_{2,3}} \otimes u_{s_1 i_{1,1}+\delta_{1,3}}$.

**Alternate rank-5 expression ($N_1 \geq N_2$),**

$$W^{(5)}_{i_{1,1},i_{1,2}} = \frac{1}{\sqrt{5Q}} \begin{bmatrix} n1 & n1 & n3 & n3 & n5 \\ n1 & n2 & n3 & n4 & n5 \end{bmatrix}, \quad \text{where} \quad n1 = w_{s_1 i_{1,1},s_2 i_{1,2}}, \quad n2 = -w_{s_1 i_{1,1},s_2 i_{1,2}},$$

$n3 = w_{s_1 i_{1,1}+\delta_{1,1},s_2 i_{1,2}+\delta_{2,1}}$, $n4 = -w_{s_1 i_{1,1}+\delta_{1,1},s_2 i_{1,2}+\delta_{2,1}}$, and $n5 = w_{s_1 i_{1,1}+\delta_{1,2},s_2 i_{1,2}+\delta_{2,2}}$.

**Alternate rank-5 expression ($N_1 < N_2$),**

$$W^{(5)}_{i_{1,1},i_{1,2}} = \frac{1}{\sqrt{5Q}} \begin{bmatrix} n6 & n6 & n8 & n8 & n10 \\ n6 & n7 & n8 & n9 & n10 \end{bmatrix}, \quad \text{where} \quad n6 = w_{s_2 i_{1,2},s_1 i_{1,1}}, \quad n7 = -w_{s_2 i_{1,2},s_1 i_{1,1}},$$

$n8 = w_{s_2 i_{1,2}+\delta_{2,1},s_1 i_{1,1}+\delta_{11,1}}$, $n9 = -w_{s_2 i_{1,2}+\delta_{2,1},s_1 i_{1,1}+\delta_{1,1}}$, and $n10 = w_{s_2 i_{1,2}+\delta_{2,2},\ s_1,i_{1,1}+\delta_{1,2}}$.

**Alternate rank-6 expression ($N_1 \geq N_2$),**

$$W^{(6)}_{i_{1,1},i_{1,2}} = \frac{1}{\sqrt{6Q}} \begin{bmatrix} n1 & n1 & n3 & n3 & n5 & n5 \\ n1 & n2 & n3 & n4 & n5 & n11 \end{bmatrix}, \text{where } n11 = -w_{s_1 i_{1,1}+\delta_{1,2},s_2 i_{1,2}+\delta_{2,2}}.$$

*Alternate rank-6 expression ($N_1 < N_2$),*

$$W^{(6)}_{i_{1,1},i_{1,2}} = \frac{1}{\sqrt{6Q}} \begin{bmatrix} n6 & n6 & n8 & n8 & n10 & n10 \\ n6 & n7 & n8 & n9 & n10 & n12 \end{bmatrix}, \text{ where } n12 = -w_{s2i_{1,2}+\delta_{2,2},s1i_{1,1}+\delta_{1,2}}.$$

*Alternate rank-7 expression ($N_1 \geq N_2$),*

$$W^{(7)}_{i_{1,1},i_{1,2}} = \frac{1}{\sqrt{7Q}} \begin{bmatrix} n1 & n1 & n3 & n3 & n5 & n5 & n13 \\ n1 & n2 & n3 & n4 & n5 & n11 & n13 \end{bmatrix}, \text{ where } n13 = w_{s1i_{1,1}+\delta_{1,3},s2i_{1,2}+\delta_{2,3}}.$$

*Alternate rank-7 expression ($N_1 < N_2$),*

$$W^{(7)}_{i_{1,1},i_{1,2}} = \frac{1}{\sqrt{7Q}} \begin{bmatrix} n6 & n6 & n8 & n8 & n10 & n10 & n14 \\ n6 & n7 & n8 & n9 & n10 & n12 & n14 \end{bmatrix}, \text{ where } n14 = w_{s2i_{1,2}+\delta_{2,3},s1i_{1,1}+\delta_{1,3}}$$

*Alternate rank-8 expression ($N_1 \geq N_2$),*

$$W^{(8)}_{i_{1,1},i_{1,2}} = \frac{1}{\sqrt{8Q}} \begin{bmatrix} n1 & n1 & n3 & n3 & n5 & n5 & n13 & n13 \\ n1 & n2 & n3 & n4 & n5 & n11 & n13 & n15 \end{bmatrix}, \text{ where } n15 = -w_{s1i_{1,1}+\delta_{1,3},s2i_{1,2}+\delta_{2,3}}$$

*Alternate rank-8 expression ($N_1 < N_2$),*

$$W^{(8)}_{i_{1,1},i_{1,2}} = \frac{1}{\sqrt{8Q}} \begin{bmatrix} n6 & n6 & n8 & n8 & n10 & n10 & n14 & n14 \\ n6 & n7 & n8 & n9 & n10 & n12 & n14 & n16 \end{bmatrix},$$

where $n16 = -w_{s2i_{1,2}+\delta_{2,3},s1i_{1,1}+\delta_{1,3}}$

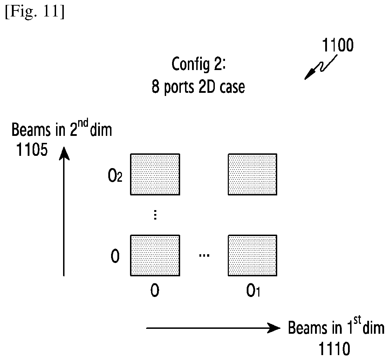

FIGURE 11 illustrates an example orthogonal beam grouping 1100 for rank 5-8 according to embodiments of the present disclosure. An embodiment of the orthogonal beam grouping 1100 for rank 5-8 shown in FIGURE 11 is for illustration only. Other embodiments may be used without departing from the scope of the present disclosure. As shown in FIGURE 11, the orthogonal beam grouping 1100 comprises beams in the second dim 1105 and beams in the first dim 1110.

In some embodiments, as shown in FIGURE 11, for 8 ports 2D case, there is only one orthogonal beam type which corresponds to *Config* = 2 for rank 5-8 codebook, and is parameterized by $\delta_{1,1}$, $\delta_{1,2}$, $\delta_{1,3}$, $\delta_{2,1}$, $\delta_{2,2}$, $\delta_{2,3}$ values given in Table 22. In this case, the UE always maps the configuration parameter to configuration (e.g., config) = 2 as shown in FIGURE 11, regardless of the value of the "Config" parameter. Table 22 shoes delta values for 8-port rank 5-8 codebooks.

Table 22

| | Antenna configuration | $\delta_{1,1}$ | $\delta_{2,1}$ | $\delta_{1,2}$ | $\delta_{2,2}$ | $\delta_{1,3}$ | $\delta_{2,3}$ |
|---|---|---|---|---|---|---|---|
| Configuration =2 | (2,2) | $O_1$ | 0 | $O_1$ | $O_2$ | 0 | $O_2$ |

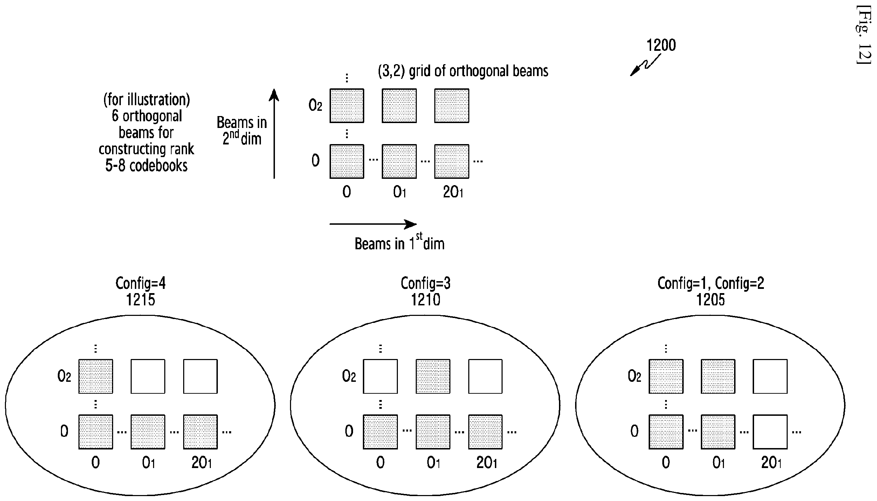

FIGURE 12 illustrates another example orthogonal beam grouping 1200 for rank 5-8 according to embodiments of the present disclosure. An embodiment of the orthogonal beam grouping 1200 for rank 5-8 shown in FIGURE 12 is for illustration only. Other embodiments may be used without departing from the scope of the present disclosure. As shown in FIGURE 12, the orthogonal beam grouping 1200 comprises config=1 and config=2 1205, a config=3 1210, and a config=4 1215.

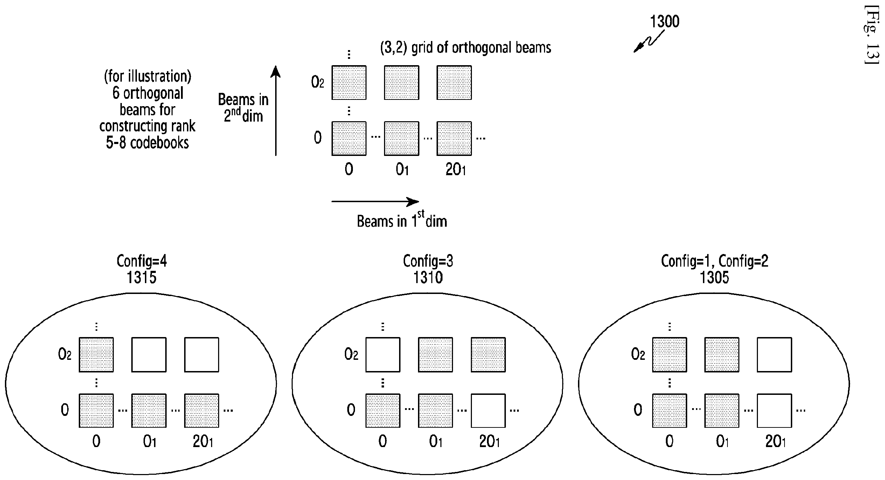

FIGURE 13 illustrates yet another example orthogonal beam grouping 1300 for rank 5-8 according to embodiments of the present disclosure. An embodiment of the orthogonal beam grouping 1300 for rank 5-8 shown in FIGURE 13 is for illustration only. Other embodiments may be used without departing from the scope of the present disclosure. As shown in FIGURE 13, the orthogonal beam grouping 1300 comprises config=1 and config=2 1305, a config=3 1310, and a config=4 1315.

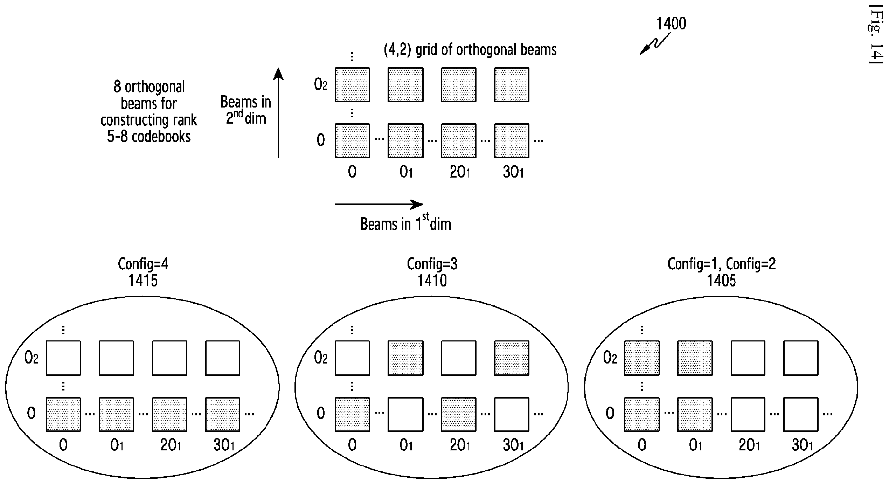

FIGURE 14 illustrates yet another example orthogonal beam grouping 1400 for rank 5-8 according to embodiments of the present disclosure. An embodiment of the orthogonal beam grouping 1400 for rank 5-8 shown in FIGURE 14 is for illustration only. Other embodiments may be used without departing from the scope of the present disclosure. As shown in FIGURE 14, the orthogonal beam grouping 1400 comprises config=1 and config=2 1405, a config=3 1410, and a config=4 1415.

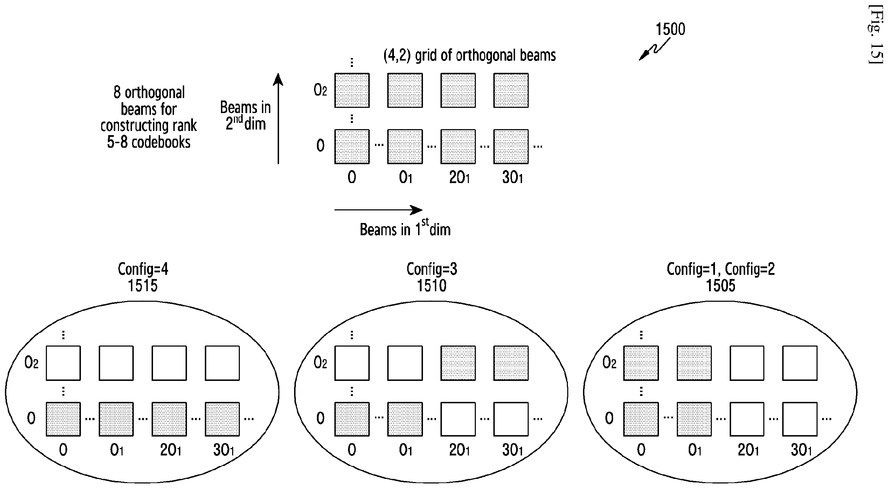

FIGURE 15 illustrates yet another example orthogonal beam grouping 1500 for rank 5-8 according to embodiments of the present disclosure. An embodiment of the orthogonal beam grouping 1500 for rank 5-8 shown in FIGURE 15 is for illustration only. Other embodiments may be used without departing from the scope of the present disclosure. As shown in FIGURE 15, the orthogonal beam grouping 1500 comprises config=1 and config=2 1505, a config=3 1510, and a config=4 1515.

In some embodiments, as shown in FIGURE 12, FIGURE 13, FIGURE 14, and FIGURE 15, there are three orthogonal beam type configurations indexed by *Config* = 1,2,3,4 for rank 5-8 codebook, which are parameterized by $\delta_{1,1}$, $\delta_{1,2}$, $\delta_{1,3}$, $\delta_{2,1}$, $\delta_{2,2}$, $\delta_{2,3}$ values. Note that *Config* = 1 and *Config* = 2 corresponds to the same beam group. There are two alternatives for Config 3, which are shown in FIGURE 12 and FIGURE 13 for 12 ports, and in FIGURE 14, and FIGURE 15 for 16 ports. For 12 ports, $\delta_{1,1}, \delta_{1,2}, \delta_{1,3}, \delta_{2,1}, \delta_{2,2}, \delta_{2,3}$ are defined in Table 23, and for 16 ports they are defined in Table 24. Table 23 shows delta values for 12-port rank 5-8 codebooks.

Table 23

| | Antenna configuration | $\delta_{1,1}$ | $\delta_{2,1}$ | $\delta_{1,2}$ | $\delta_{2,2}$ | $\delta_{1,3}$ | $\delta_{2,3}$ |
|---|---|---|---|---|---|---|---|
| Config = 4 | $N_1 \geq N_2$ | $O_1$ | 0 | $2O_1$ | 0 | 0 | $O_2$ |
| | $N_1 < N_2$ | 0 | $O_2$ | 0 | $2O_2$ | $O_1$ | 0 |
| Config =3, Alt 1 | $N_1 \geq N_2$ | $O_1$ | 0 | $2O_1$ | 0 | $O_1$ | $O_2$ |
| | $N_1 < N_2$ | 0 | $O_2$ | 0 | $2O_2$ | $O_1$ | $O_2$ |
| Config =3, Alt 2 | $N_1 \geq N_2$ | $O_1$ | 0 | $O_1$ | $O_2$ | $2O_1$ | $O_2$ |
| | $N_1 < N_2$ | 0 | $O_2$ | $O_1$ | $O_2$ | $O_1$ | $2O_2$ |
| Config =1, Config =2 | Both | $O_1$ | 0 | $O_1$ | $O_2$ | 0 | $O_2$ |

Table 24 shows delta values for 16-port rank 5-8 codebooks

Table 24

| | Antenna configuration | $\delta_{1,1}$ | $\delta_{2,1}$ | $\delta_{1,2}$ | $\delta_{2,2}$ | $\delta_{1,3}$ | $\delta_{2,3}$ |
|---|---|---|---|---|---|---|---|
| Config = 4 | $N_1 \geq N_2$ | $O_1$ | 0 | $2O_1$ | 0 | $3O_1$ | 0 |
| | $N_1 < N_2$ | 0 | $O_2$ | 0 | $2O_2$ | 0 | $3O_2$ |
| Config =3, Alt 1 | $N_1 \geq N_2$ | $O_1$ | $O_2$ | $2O_1$ | 0 | $3O_1$ | $O_2$ |
| | $N_1 < N_2$ | $O_1$ | $O_2$ | 0 | $2O_2$ | 0 | $3O_2$ |

(continued)

|  | Antenna configuration | $\delta_{1,1}$ | $\delta_{2,1}$ | $\delta_{1,2}$ | $\delta_{2,2}$ | $\delta_{1,3}$ | $\delta_{2,3}$ |
|---|---|---|---|---|---|---|---|
| Config =3, Alt 2 | $N_1 \geq N_2$ | $O_1$ | 0 | $2O_1$ | $O_2$ | $3O_1$ | $O_2$ |
|  | $N_1 < N_2$ | 0 | $O_2$ | $O_1$ | $2O_2$ | $O_1$ | $3O_2$ |
| Config =1, Config =2 | Both | $O_1$ | 0 | $O_1$ | $O_2$ | 0 | $O_2$ |

In some embodiments, $(s_1, s_2)$ values for rank 5-8 codebook is given by Table 25 or Table 26. For $N_1 < N_2$, $(s_1, s_2)$ parameters are swapped if Table 25 is used. Note that for $N_2 = 1$, we have only Config 4. Table 25 shows $(s_1, s_2)$ parameters for rank 5-8 codebook for $N_1 \geq N_2$.

Table 25

|  |  | $(s_1, s_2)$ | $i_{1,1}$ | $i_{1,1}$ |
|---|---|---|---|---|
| If $N_1 > 1$ and $N_2 > 1$ | Config 4 | $(2, O_2/2)$ | 0-3 | 0-3 |
|  | Config 1, Config 2 | $(O_1, O_2/2)$ |  |  |
|  | Config 3 | $(O_1, O_2/2)$ |  |  |
| If $N_2 = 1$ | Config 4 | Alt 1: $(2, -)$ | - | - |
|  |  | Alt 2: $(O_1, -)$ |  |  |
|  |  | Alt 3: $(O_1/2, -)$ |  |  |

Table 26 shows $(s_1, s_2)$ parameters for rank 5-8 codebook.

Table 26

|  |  | $(s_1, s_2)$ | $i_{1,1}$ | $i_{1,1}$ |
|---|---|---|---|---|
| If $N_1 > 1$ and $N_2 > 1$ | Config 4 | $(O_1 N_1/4, O_2 N_2/4)$ | 0-3 | 0-3 |
|  | Config 1, Config 2 |  |  |  |
|  | Config 3 |  |  |  |
| If $N_2 = 1$ | Config 4 | $(O_1 N_1/4, -)$ | 0-3 | - |

In some embodiments, a UE is configured with rank 5-8 codebook tables with the same effective oversampling factor, i.e., (4,4), for Config 1-4, which is aligned with rank 3-4 codebook parameter in Table 19 and also with LTE specification codebook. Accordingly, for 8 antenna ports, $(s_1, s_2)$ parameters for rank 5-8 codebook are given by Table 27. There may be two alternatives for $i_{1,1}$ (or $i_{1,2}$). In one example, $i_{1,1}$ (or $i_{1,2}$) = 0-3, in which redundant $i_{1,1}$ (or $i_{1,2}$ = 4-7 due to phase wrap around are not included. In another example, $i_{1,1}$ (or $i_{1,2}$) = 0-3, in which redundant $i_{1,1}$ (or $i_{1,2}$) = 4-7 due to phase wrap around are included. The aforementioned examples may be used in future when $N_1$ (or $N_2$) > 2. Table 27 shows $(s_1, s_2)$ parameters for rank 5-8 codebook for $N_1 \geq N_2$: 8 ports.

Table 27

|  |  | $(s_1, s_2)$ | $i_{1,1}$ (2 bits) | $i_{1,2}$ (2 bits) |
|---|---|---|---|---|
| If $N_1 > 1$ and $N_2 > 1$ | Config 2 | $(O_1/4, O_2/4)$ | Alt 1: 0-3 | Alt 1: 0-3 |
|  |  |  | Alt 2: 0-7 | Alt 2: 0-7 |

For 12 and 16 antenna ports, $(s_1, s_2)$ parameters are given by Table 28. Note that there may be two options for 1D case ($N_2 = 1$). In one example, an effective oversampling is 4. In another example, an effective oversampling is the configured oversampling factor $O_1$. Similar to 8 port case, the aforementioned examples are allowed for $i_{1,2}$ in case of Config 1-3. Table 28 shows $(s_1, s_2)$ parameters for rank 5-8 codebook: $N_1 \geq N_2$: 12,16 ports.

Table 28

| | | $(s_1, s_2)$ | $i_{1,1}$ | $i_{1,2}$ |
|---|---|---|---|---|
| If $N_1 > 1$ and $N_2 > 1$ | Config 4 | $(O_1/4, O_2/4)$ | 0-$(O_1 N_1/s_1$-1$) \rightarrow$ 0-$(4N_1$-1$)$ | 0-7 |
| | Config 1-3 | | i.e., 0-11 for 12 ports<br>0-15 for 16 ports | Alt 1: 0-3<br>Alt 2: 0-7 |
| If $N_2 = 1$ | Config 4 | Option 1: $(O_1/4, -)$<br>Option 2: $(1, -)$ | Option 1: 0-$(4N_1$-1$)$<br>Option 2: 0-$(O_1 N_1$-1$)$ | - |

In some embodiments, a UE is configured with rank 5-8 codebook tables with the same $(s_1, s_2)$ parameters such that the effective oversampling factor is the same as configured oversampling factors, i.e., according to Table 29. Again, two alternatives are allowed for $i_{1,2}$ in case of Config 1-3. Table 29 shows $(s_1, s_2)$ parameters for rank 5-8 codebook: $N_1 \geq N_2$: 12, 16 ports.

Table 29

| | | $(s_1, s_2)$ | $i_{1,1}$ | $i_{1,2}$ |
|---|---|---|---|---|
| If $N_1 > 1$ and $N_2 > 1$ | Config 4 | $(1,1)$ | 0-$(O_1 N_1$-1$)$ | 0-$(O_2 N_2$-1$)$ |
| | Config 1-3 | | | Alt 1: 0-$(O_2 N_2/2$-1$)$<br>Alt 2: 0-$(O_2 N_2$-1$)$ |
| if $N_2 = 1$ | Config 4 | $(1,-)$ | 0-$(O_1 N_1$-1$)$ | - |

In some embodiments, a UE is configured with rank 5-8 codebook tables with the $(s_1, s_2)$ parameters such that the choice of parameter is constrained to use of the same number of $(i_{1,1}, i_{1,2})$ bits regardless of the Config parameter. For instance, if ($i_{1,1}$ and $i_{1,2}$ are constrained to be 2 bits each, then the rank 5-8 codebook parameters are given by Table 30 for both 12 and 16 antenna ports. Note that there may be two options for Config 1-3 in Table 30. In one example, a leading beam index of orthogonal beam groups is a multiple of $O_1$ for both 12 and 16 antenna ports (i.e., $N_1 = 3$ and 4). In another example, a leading beam index of orthogonal beam groups depends on the value of $N_1$, i.e., it is a multiple of $N_1$. For instance, for 12 antenna ports, the leading beam index is a multiple of 6, and for 16 antenna ports, the leading beam index is a multiple of 8. Table 30 shows $(s_1, s_2)$ parameters for rank 5-8 codebook for $N_1 \geq N_2$: 12, 16 ports.

Table 30

| | | $(s_1, s_2)$ | $i_{1,1}$ (2 bits) | $i_{1,2}$ (2 bits) |
|---|---|---|---|---|
| If $N_1 > 1$ and $N_2 > 1$ | Config 4 | $(O_1/4, O_2/2)$ | 0-3 | 0-3 |
| | Config 1-3 | Option 1: $(O_1, O_2/4)$<br>Option 2: $(O_1 N_1/4, O_2/4)$ | Option 1: 0-2 (12 ports)<br>0-3 (16 ports)<br>Option 2: 0-3 | |
| If $N_2 = 1$ | Config 4 | $(O_1 N_1/4, -)$ | 0-3 | - |

Note that the above $(s_1, s_2)$ parameter tables is for $N_1 \geq N_2$ case. For $N_1 < N_2$, the parameter table is obtained by swapping the dimension subscripts (1, 2) with (2, 1). According to various embodiments, a UE and an eNB obtain a codebook parameter table for $N_1 \geq N_2$ and a codebook parameter table for $N_1 < N_2$ by swapping a first index for the first dimension and a second index for the second dimension. For example, the UE and the eNB obtain a codebook parameter table for $(N_1, N_2)=(4,2)$ and a codebook parameter table for $(N_1, N_2)=(2,4)$.

In some embodiments, the KP expressions can be swapped for the two configurations, i.e., if

$$N_1 \geq N_2, \quad W_{m_1,m_2,n}^{(1)} = \frac{1}{\sqrt{Q}} \begin{bmatrix} u_{m_2} \otimes v_{m_1} \\ \varphi_n u_{m_2} \otimes v_{m_1} \end{bmatrix}$$

; and if $N_1 < N_2$,

$$W_{m_1,m_2,n}^{(1)} = \frac{1}{\sqrt{Q}} \begin{bmatrix} u_{m_1} \otimes v_{m_2} \\ \varphi_n u_{m_1} \otimes v_{m_2} \end{bmatrix}$$

. The aforementioned expressions may be applied various embodiments of the present disclosure for other ranks as well.

In some embodiments, the codebook table is parameterized with a parameter pair $(d_1, d_2)$ which takes a value $(d_1, d_2) = (1, 2)$ if $N_1 \geq N_2$ and a value $(d_1, d_2) = (2, 1)$ if $N_1 < N_2$. In this case, the master rank-1 codebook is given by Table

$$W^{(1)}_{m_{d_1},m_{d_2},n} = \frac{1}{\sqrt{Q}}\begin{bmatrix} v_{m_{d_1}} \otimes u_{m_{d_2}} \\ \varphi_n v_{m_{d_1}} \otimes u_{m_{d_2}} \end{bmatrix}$$

31A and 31B, where ,

$$v_{m_{d_1}} = \begin{bmatrix} 1 & e^{j\frac{2\pi m_{d_1}}{O_{d_1} N_{d_1}}} & e^{j\frac{4\pi m_{d_1}}{O_{d_1} N_{d_1}}} & e^{j\frac{6\pi m_{d_1}}{O_{d_1} N_{d_1}}} \end{bmatrix}^t$$

$$u_{m_{d_2}} = \begin{bmatrix} 1 & e^{j\frac{2\pi m_{d_2}}{O_{d_2} N_{d_2}}} \end{bmatrix}^t$$

, and . Table 31A and 31B show a master codebook for 1 layer CSI reporting (e.g., parameterized).

Table 31A

| $i'_2$ | 0 | 1 |
|---|---|---|
| Precoder | $W^{(1)}_{s_{d_1} i_{1,d_1}, s_{d_2} i_{1,d_2}, 0}$ | $W^{(1)}_{s_{d_1} i_{1,d_1}, s_{d_2} i_{1,d_2}, 1}$ |
| $i'_2$ | 2 | 3 |
| Precoder | $W^{(1)}_{s_{d_1} i_{1,d_1}, s_{d_2} i_{1,d_2}, 2}$ | $W^{(1)}_{s_{d_1} i_{1,d_1}, s_{d_2} i_{1,d_2}, 3}$ |
| $i'_2$ | 4 | 5 |
| Precoder | $W^{(1)}_{s_{d_1} i_{1,d_1} +1, s_{d_2} i_{1,d_2}, 0}$ | $W^{(1)}_{s_{d_1} i_{1,d_1} +1, s_{d_2} i_{1,d_2}, 1}$ |
| $i'_2$ | 6 | 7 |
| Precoder | $W^{(1)}_{s_{d_1} i_{1,d_1} +1, s_{d_2} i_{1,d_2}, 2}$ | $W^{(1)}_{s_{d_1} i_{1,d_1} +1, s_{d_2} i_{1,d_2}, 3}$ |

Table 31B

| $i_2'$ | 8 | 9 |
|---|---|---|
| Precoder | $W^{(1)}_{s_{d_1} i_{1,d_1} +2, s_{d_2} i_{1,d_2}, 0}$ | $W^{(1)}_{s_{d_1} i_{1,d_1} +2, s_{d_2} i_{1,d_2}, 1}$ |
| $i_2'$ | 10 | 11 |
| Precoder | $W^{(1)}_{s_{d_1} i_{1,d_1} +2, s_{d_2} i_{1,d_2}, 2}$ | $W^{(1)}_{s_{d_1} i_{1,d_1} +2, s_{d_2} i_{1,d_2}, 3}$ |
| $i_2'$ | 12 | 13 |
| Precoder | $W^{(1)}_{s_{d_1} i_{1,d_1} +3, s_{d_2} i_{1,d_2}, 0}$ | $W^{(1)}_{s_{d_1} i_{1,d_1} +3, s_{d_2} i_{1,d_2}, 1}$ |
| $i_2'$ | 14 | 15 |
| Precoder | $W^{(1)}_{s_{d_1} i_{1,d_1} +3, s_{d_2} i_{1,d_2}, 2}$ | $W^{(1)}_{s_{d_1} i_{1,d_1} +3, s_{d_2} i_{1,d_2}, 3}$ |
| $i_2'$ | 16 – 31 | |
| Precoder | Entries 16-31 constructed with replacing the second subscript $s_{d_2} i_{1,d_2}$ with $s_{d_2} i_{1,d_2} +1$ in entries $0 - 15$. | |

For rank 2-8, the parameterized master codebook can be constructed similarly.

In some embodiments, the order in which the Kronecker product is performed is dependent on the configuration. For instance, for the configuration in which $N_1 \geq N_2$, the UE derives the rank-1 pre-coder as

$$W^{(1)}_{m_1, m_2, n} = \frac{1}{\sqrt{Q}} \begin{bmatrix} v_{m_1} \otimes u_{m_2} \\ \varphi_n v_{m_1} \otimes u_{m_2} \end{bmatrix}$$

, and for the configuration in which $N_1 < N_2$, the UE derives the rank-1 pre-coder

$$W^{(1)}_{m_1, m_2, n} = \frac{1}{\sqrt{Q}} \begin{bmatrix} u_{m_2} \otimes v_{m_1} \\ \varphi_n u_{m_2} \otimes v_{m_1} \end{bmatrix}$$

as . Note that the orders in which the Kronecker product is performed in the two expressions are opposite in order to ensure that the dimensions of the two vectors to the left and to the right of Kronecker operator are the same in the two expressions.

Also note that in some embodiments the KP expressions can be swapped for the two configurations, i.e., if

$$N_1 \geq N_2, \quad W^{(1)}_{m_1, m_2, n} = \frac{1}{\sqrt{Q}} \begin{bmatrix} u_{m_2} \otimes v_{m_1} \\ \varphi_n u_{m_2} \otimes v_{m_1} \end{bmatrix} \qquad W^{(1)}_{m_1, m_2, n} = \frac{1}{\sqrt{Q}} \begin{bmatrix} v_{m_1} \otimes u_{m_2} \\ \varphi_n v_{m_1} \otimes u_{m_2} \end{bmatrix}$$

and if $N_1 < N_2$, . The afore-mentioned expression may be applied to various embodiments of the present disclosure for other ranks as well.

For example, assuming antenna port numbering 2 for a 16 port configuration, the two expressions are given by:

$$(N_1, N_2) = (4, 2) \text{ and, } v_{m_1} = \begin{bmatrix} 1 & e^{j\frac{2\pi m_1}{O_1 N_1}} & e^{j\frac{4\pi m_1}{O_1 N_1}} & e^{j\frac{6\pi m_1}{O_1 N_1}} \end{bmatrix}^t$$

and

$$u_{m_2} = \begin{bmatrix} 1 & e^{j\frac{2\pi m_2}{O_2 N_2}} \end{bmatrix}^t ; \text{ and } (N_1, N_2) = (2, 4) \text{ and, } v_{m_1} = \begin{bmatrix} 1 & e^{j\frac{2\pi m_1}{O_1 N_1}} \end{bmatrix}^t$$

and

$$u_{m_2} = \begin{bmatrix} 1 & e^{j\frac{2\pi m_2}{O_2 N_2}} & e^{j\frac{4\pi m_2}{O_2 N_2}} & e^{j\frac{6\pi m_2}{O_2 N_2}} \end{bmatrix}^t .$$

Similarly, for 12 port configuration, the two expressions are given by:

$$(N_1, N_2) = (3, 2), \text{ and } v_{m_1} = \begin{bmatrix} 1 & e^{j\frac{2\pi m_1}{O_1 N_1}} & e^{j\frac{4\pi m_1}{O_1 N_1}} \end{bmatrix}^t \text{ and } u_{m_2} = \begin{bmatrix} 1 & e^{j\frac{2\pi m_2}{O_2 N_2}} \end{bmatrix}^t .$$

, and

$$(N_1, N_2) = (2, 3), \text{ and } v_{m_1} = \begin{bmatrix} 1 & e^{j\frac{2\pi m_1}{O_1 N_1}} \end{bmatrix}^t \text{ and } u_{m_2} = \begin{bmatrix} 1 & e^{j\frac{2\pi m_2}{O_2 N_2}} & e^{j\frac{4\pi m_2}{O_2 N_2}} \end{bmatrix}^t .$$

The aforementioned embodiment is applicable to the antenna port numbering 1, where $(N_1, N_2) = (2, 4)$ for config A and for $(N_1, N_2) = (4, 2)$ for config B. Note that even though $W^{(1)}_{m_1, m_2, n}$ expression is different in two configurations, the master rank-1 codebook table such as Table 2 can be used for both.

For rank-2, the pre-coding matrix is given by

$$W^{(2)}_{m_1, m_2, m_1', m_2', n} = \frac{1}{\sqrt{2Q}} \begin{bmatrix} v_{m_1} \otimes u_{m_2} & v_{m_1'} \otimes u_{m_2'} \\ \varphi_n v_{m_1} \otimes u_{m_2} & -\varphi_n v_{m_1'} \otimes u_{m_2'} \end{bmatrix} \text{ for } N_1 \geq N_2 \text{ (config A) and}$$

$$W^{(2)}_{m_1, m_2, m_1', m_2', n} = \frac{1}{\sqrt{2Q}} \begin{bmatrix} u_{m_2} \otimes v_{m_1} & u_{m_2'} \otimes v_{m_1'} \\ \varphi_n u_{m_2} \otimes v_{m_1} & -\varphi_n u_{m_2'} \otimes v_{m_1'} \end{bmatrix} \text{ for } N_1 < N_2 \text{ (config B).}$$

The expressions for rank 3-8 for the two configurations can be expression similarly. Similar to rank-1, for rank 2-8 also, the master rank 2-8 codebooks in this case remain the same as aforementioned earlier in the present disclosure.

In addition, the beam grouping schemes or $(L_1, L_2)$ configurations or codebook subset selection according to some embodiments of the present disclosure are applicable straightforwardly to this case once the master table for each of antenna port configurations is implemented.

In some embodiments, if the oversampling factor in the longer and shorter dimensions of the two symmetric port configurations is the same, then the pre-coder for one of the symmetric port configuration is derived from that for the other symmetric port configuration by applying a fixed mapping on the elements of the pre-coding vector.

In one embodiment, for the configuration in which $N_1 \geq N_2$ (config A), the UE derives the rank-1 pre-coder as

$$W^{(1)}_{m_1,m_2,n} = \frac{1}{\sqrt{Q}} \begin{bmatrix} v_{m_1} \otimes u_{m_2} \\ \varphi_n v_{m_1} \otimes u_{m_2} \end{bmatrix}$$

, and for the configuration in which $N_1 < N_2$ (config B), the UE derives the rank-1

$$W^{(1)}_{m_1,m_2,n} = \frac{1}{\sqrt{Q}} \begin{bmatrix} \sigma\left(v_{m_1} \otimes u_{m_2}\right) \\ \varphi_n \sigma\left(v_{m_1} \otimes u_{m_2}\right) \end{bmatrix}$$

pre-coder as , where the mapping function is defined as

$$\sigma \begin{pmatrix} a_0 \\ a_1 \\ \mathrm{M} \\ a_{N_2-1} \\ b_0 \\ b_1 \\ \mathrm{M} \\ b_{N_2-1} \end{pmatrix} = \begin{pmatrix} a_0 \\ b_0 \\ a_1 \\ b_1 \\ a_2 \\ \mathrm{M} \\ a_{N_2-1} \\ b_{N_2-1} \end{pmatrix}.$$

Note that here the assumption is that $O_1$ and $O_2$ in case of $N_1 \geq N_2$ is the same as $O_2$ and $O_1$ in case of $N_1 < N_2$, respectively.

$$v_{m_1} = \begin{bmatrix} 1 & e^{j\frac{2\pi m_1}{32}} & e^{j\frac{4\pi m_1}{32}} & e^{j\frac{6\pi m_1}{32}} \end{bmatrix}^t$$

In one example, for $(N_1,N_2) = (4, 2)$ with $(O_1,O_2) = (8, 16)$,

$$u_{m_2} = \begin{bmatrix} 1 & e^{j\frac{2\pi m_2}{32}} \end{bmatrix}^t$$

and , hence

$$v_{m_1} \otimes u_{m_2} = \begin{bmatrix} 1 & e^{j\frac{2\pi m_2}{32}} & e^{j\frac{2\pi m_1}{32}} & e^{j2\pi\left(\frac{m_1+m_2}{32}\right)} & e^{j\frac{4\pi m_1}{32}} & e^{j2\pi\left(\frac{2m_1+m_2}{32}\right)} & e^{j\frac{6\pi m_1}{32}} & e^{j2\pi\left(\frac{3m_1+m_2}{32}\right)} \end{bmatrix}$$

$$v_{m_2} = \begin{bmatrix} 1 & e^{j\frac{2\pi m_2}{32}} \end{bmatrix}^t$$

; and for $(N_1,N_2) = (2,4)$ with $(O_1,O_2) = (16,8)$, and

$$u_{m_1} = \begin{bmatrix} 1 & e^{j\frac{2\pi m_1}{32}} & e^{j\frac{4\pi m_1}{32}} & e^{j\frac{6\pi m_1}{32}} \end{bmatrix}^t$$

, hence

$$v_{m_2} \otimes u_{m_1} = \begin{bmatrix} 1 & e^{j\frac{2\pi m_1}{32}} & e^{j\frac{4\pi m_1}{32}} & e^{j\frac{6\pi m_1}{32}} & e^{j\frac{2\pi m_2}{32}} & e^{j2\pi\left(\frac{m_1+m_2}{32}\right)} & e^{j2\pi\left(\frac{2m_1+m_2}{32}\right)} & e^{j2\pi\left(\frac{3m_1+m_2}{32}\right)} \end{bmatrix}$$

, which can be obtained by applying the permutation $\sigma(\{1\ 2\ 3\ 4\ 5\ 6\ 7\ 8\}) = \{1\ 3\ 5\ 7\ 2\ 4\ 6\ 8\}$ on the components of

$$\begin{bmatrix} 1 & e^{j\frac{2\pi m_2}{32}} & e^{j\frac{2\pi m_1}{32}} & e^{j2\pi\left(\frac{m_1+m_2}{32}\right)} & e^{j\frac{4\pi m_1}{32}} & e^{j2\pi\left(\frac{2m_1+m_2}{32}\right)} & e^{j\frac{6\pi m_1}{32}} & e^{j2\pi\left(\frac{3m_1+m_2}{32}\right)} \end{bmatrix}$$

.

In another embodiment, the pre-coder for $N_1 \geq N_2$ can be derived by applying a similar fixed mapping on the pre-coder for $N_1 < N_2$ case. For rank 2-8, the mapping can be constructed similarly.

Although the present disclosure has been described with an exemplary embodiment, various changes and modifications may be suggested to one skilled in the art. It is intended that the present disclosure encompass such changes and modifications as fall within the scope of the appended claims.

Although specific exemplary embodiments have been described in the detailed description of the present disclosure, various change and modifications may be made without departing from the scope of the present disclosure. Therefore, the scope of the present disclosure should not be defined as being limited to the embodiments, but should be defined by the appended claims.

**Claims**

1. A user equipment, UE, in a wireless communication system, the UE comprising:

   a transceiver; and
   at least one processor operable coupled to the transceiver, and configured to:

   receive, from a base station, configuration information for indicating codebook parameters that include a first number of antenna ports, $N_1$, for a first dimension, a second number of antenna ports, $N_2$, for a second dimension, a first oversampling factor, $O_1$, for the first dimension, a second oversampling factor, $O_2$, for the second dimension, and a codebook configuration; and
   determine a precoder codebook based on the codebook parameters;
   determine at least one precoding matrix indicator, PMI, indicating a precoder of the precoder codebook, wherein the at least one PMI includes a first codebook index ($i_{1,1}$), a second codebook index ($i_{1,2}$), and a third codebook index ($i_2$); and
   transmit, to the base station, channel state information, CSI, including the at least one PMI, **characterized in that**

   if the $N_1$ is greater than or equal to the $N_2$, the precoder comprises a first matrix in which a first vector is determined in accordance with a first variable and a second vector is determined in accordance with a second variable, the first variable is associated with the first codebook index ($i_{1,1}$) using a first function and the second variable is associated with the second codebook index ($i_{1,2}$) using a second function, and
   if the $N_1$ is smaller than the $N_2$, the precoder comprises a second matrix in which the first vector is determined in accordance with the second variable and the second vector is determined in accordance with the first variable, the first variable is associated with the second codebook index ($i_{1,2}$) using the first function and the second variable is associated with the first codebook index ($i_{1,1}$) using the second function,
   wherein the first vector is a discrete fourier transform, DFT, vector associated with a beam for the first dimension, the second vector is a DFT vector associated with a beam for the second dimension, and
   wherein the first matrix and the second matrix include the Kronecker product of the first vector and the second vector.

2. The UE of Claim 1, wherein the at least one processor is, to determine the precoder codebook, configured to:

identify the codebook configuration;
determine whether the $N_1$ is smaller than $N_2$ or not, in response to identifying that the identified codebook configuration indicates a codebook configuration 3 or a codebook configuration 4; and
determine the precoder codebook based on the first matrix or the second matrix,
wherein the precoder is indicated by the first codebook index ($i_{1,1}$), the second codebook index ($i_{1,2}$), and the third codebook index (i2).

3. The UE of Claim 1, wherein the at least one processor is further configured to:

identify a first variable (x) and a second variable (y) based on the $N_1$ and $N_2$;
wherein the first variable (x) and the second variable (y) corresponds to:
x = $i_{1,d1}$ and y = $i_{1,d2}$,
wherein the ($d_1$, $d_2$) are defined as:

($d_1$, $d_2$) = (1, 2) when the $N_1$ is greater than or equal to the $N_2$; and
($d_1$, $d_2$) = (2, 1) when the $N_1$ is less than the $N_2$.

4. The UE of Claim 3, wherein the precoder is determined based on a first PMI expression and the second matrix is determined based on a second PMI expression, and
wherein the second PMI expression corresponds to a function obtained by swapping a variable for the first dimension of the first PMI expression and a variable for the second dimension of the first PMI expression.

5. The UE of Claim 1,

wherein the first codebook index ($i_{1,1}$) is associated with an index (mi) of the first vector,
wherein the second codebook index ($i_{1,2}$) is associated with an index ($m_2$) of the second vector, and
wherein the precoder is determined based on a following equation:

$$w_{m_1,m_2} = \left[ u_{m_2} \quad e^{j\frac{2\pi m_1}{O_1 N_1}} u_{m_2} \quad \cdots \quad e^{j\frac{2\pi m_1 (N_1-1)}{O_1 N_1}} u_{m_2} \right]^T$$

$$u_{m_2} = \left[ 1 \quad e^{j\frac{2\pi m_2}{O_2 N_2}} \quad \cdots \quad e^{j\frac{2\pi m_2 (N_2-1)}{O_2 N_2}} \right]$$

where                    .

6. The UE of Claim 1,

wherein the first codebook index ($i_{1,1}$) is determined based on the $N_1$ and the $O_1$,
wherein the second codebook index ($i_{1,2}$) is determined based on the $N_2$ and the $O_2$, and
wherein configuration information is transmitted via a radio resource control, RRC, signaling.

7. The UE of Claim 4,

wherein the first PMI expression corresponds to:

$$W_{m_1,m_2,n}^{(1)} = \frac{1}{\sqrt{Q}} \begin{bmatrix} w_{m_1,m_2} \\ \varphi_n w_{m_1,m_2} \end{bmatrix}$$

in case of a rank 1,                    ; and

$$W'^{(2)}_{m_1,m_2,m_1',m_2',n} = \frac{1}{\sqrt{2Q}} \begin{bmatrix} w_{m_1,m_2} & w_{m_1',m_2'} \\ \varphi_n w_{m_1,m_2} & -\varphi_n w_{m_1',m_2'} \end{bmatrix},$$

in case of a rank 2,

wherein the second PMI expression corresponds to:

$$W'^{(1)}_{m_1,m_2,n} = \frac{1}{\sqrt{Q}} \begin{bmatrix} w_{m_2,m_1} \\ \varphi_n w_{m_2,m_1} \end{bmatrix} ; \text{ and}$$

in case of a rank 1,

$$W^{(2)}_{m_1,m_2,m_1',m_2',n} = \frac{1}{\sqrt{2Q}} \begin{bmatrix} w_{m_2,m_1} & w_{m_2',m_1'} \\ \phi_n w_{m_2,m_1} & -\phi_n w_{m_2',m_1'} \end{bmatrix},$$

in case of a rank 2,
$Q = 2N_1 N_2$ and $\phi_n = e^{j\pi n/2}$

where $Q = 2N_1 N_2$ and $\phi_n = e^{j\pi n/2}$,

wherein the $W^{(1)}_{m_1,m_2,n}$ corresponds to a precoder of the rank-1 codebook in case of a combination of $(m_1, m_2, n)$ determined by a combination of $(i_{1,1}, i_{1,2}, i_2)$,

wherein the $W^{(2)}_{m_1,m_2,m_1',m_2',n}$ corresponds to a precoder of the rank-2 codebook in case of a combination of

$(m_1, m_2, m_1', m_2', n)$ determined by the combination of $(i_{1,1}, i_{1,2}, i_2)$
wherein the Q corresponds to a number of antenna ports of an antenna array.

8. The UE of Claim 1, wherein the at least one processor is, to determine the PMI, configured to:

   determine, if the precoder codebook is a rank-1 codebook and the codebook configuration indicates a codebook configuration 3, the precoder according to a following codebook table:

| $i_{1,1}$ | $i_{1,2}$ | $i_2$ | | | |
| --- | --- | --- | --- | --- | --- |
| | | 0 | 1 | 2 | 3 |
| $0,1,...,\dfrac{N_1O_1}{2}-1$ | $0,1,...,\dfrac{N_2O_2}{2}-1$ | $W^{(1)}_{2x,2y,0}$ | $W^{(1)}_{2x,2y,1}$ | $W^{(1)}_{2x,2y,2}$ | $W^{(1)}_{2x,2y,3}$ |
| $i_{1,1}$ | $i_{1,2}$ | $i_2$ | | | |
| | | 4 | 5 | 6 | 7 |
| $0,1,...,\dfrac{N_1O_1}{2}-1$ | $0,1,...,\dfrac{N_2O_2}{2}-1$ | $W^{(1)}_{2x+2,2y,0}$ | $W^{(1)}_{2x+2,2y,1}$ | $W^{(1)}_{2x+2,2y,2}$ | $W^{(1)}_{2x+2,2y,3}$ |
| $i_{1,1}$ | $i_{1,2}$ | $i_2$ | | | |
| | | 8 | 9 | 10 | 11 |
| $0,1,...,\dfrac{N_1O_1}{2}-1$ | $0,1,...,\dfrac{N_2O_2}{2}-1$ | $W^{(1)}_{2x+1,2y+1,0}$ | $W^{(1)}_{2x+1,2y+1,1}$ | $W^{(1)}_{2x+1,2y+1,2}$ | $W^{(1)}_{2x+1,2y+1,3}$ |
| $i_{1,1}$ | $i_{1,2}$ | $i_2$ | | | |
| | | 12 | 13 | 14 | 15 |
| $0,1,...,\dfrac{N_1O_1}{2}-1$ | $0,1,...,\dfrac{N_2O_2}{2}-1$ | $W^{(1)}_{2x+3,2y+1,0}$ | $W^{(1)}_{2x+3,2y+1,1}$ | $W^{(1)}_{2x+3,2y+1,2}$ | $W^{(1)}_{2x+3,2y+1,3}$ |

where
$$x = i_{1,1}, \quad y = i_{1,2}, \quad W^{(1)}_{l,m,n} = \frac{1}{\sqrt{P}}\begin{bmatrix} v_{l,m} \\ \varphi_n v_{l,m} \end{bmatrix}, \text{ if } N_1 \geq N_2$$

$$x = i_{1,2}, \quad y = i_{1,1}, \quad W^{(1)}_{l,m,n} = \frac{1}{\sqrt{P}}\begin{bmatrix} v_{m,l} \\ \varphi_n v_{m,l} \end{bmatrix}, \text{ if } N_1 < N_2$$

; and
determine, if the precoder codebook is the rank-1 codebook and the codebook configuration indicates a codebook configuration 4, the precoder according to a following codebook table:

| $i_{1,1}$ | $i_{1,2}$ | $i_2$ | | | |
| --- | --- | --- | --- | --- | --- |
| | | 0 | 1 | 2 | 3 |
| $0,1,...,\dfrac{N_1O_1}{2}-1$ | $0,1,...,\dfrac{N_2O_2}{2}-1$ | $W^{(1)}_{2x,2y,0}$ | $W^{(1)}_{2x,2y,1}$ | $W^{(1)}_{2x,2y,2}$ | $W^{(1)}_{2x,2y,3}$ |
| $i_{1,1}$ | $i_{1,2}$ | $i_2$ | | | |
| | | 4 | 5 | 6 | 7 |
| $0,1,...,\dfrac{N_1O_1}{2}-1$ | $0,1,...,\dfrac{N_2O_2}{2}-1$ | $W^{(1)}_{2x+1,2y,0}$ | $W^{(1)}_{2x+1,2y,1}$ | $W^{(1)}_{2x+1,2y,2}$ | $W^{(1)}_{2x+1,2y,3}$ |
| $i_{1,1}$ | $i_{1,2}$ | $i_2$ | | | |

| | | $i_2$ | | | |
|---|---|---|---|---|---|
| | | 8 | 9 | 10 | 11 |
| $0,1,...,\frac{N_1 O_1}{2}-1$ | $0,1,...,\frac{N_2 O_2}{2}-1$ | $W^{(1)}_{2x+2,2y,0}$ | $W^{(1)}_{2x+2,2y,1}$ | $W^{(1)}_{2x+2,2y,2}$ | $W^{(1)}_{2x+2,2y,3}$ |
| $i_{1,1}$ | $i_{1,2}$ | $i_2$ | | | |
| | | 12 | 13 | 14 | 15 |
| $0,1,...,\frac{N_1 O_1}{2}-1$ | $0,1,...,\frac{N_2 O_2}{2}-1$ | $W^{(1)}_{2x+3,2y,0}$ | $W^{(1)}_{2x+3,2y,1}$ | $W^{(1)}_{2x+3,2y,2}$ | $W^{(1)}_{2x+3,2y,3}$ |

$$\text{where}\quad x=i_{1,1},\quad y=i_{1,2},\quad W^{(1)}_{l,m,n}=\frac{1}{\sqrt{P}}\begin{bmatrix} v_{l,m} \\ \varphi_n v_{l,m}\end{bmatrix},\text{ if } N_1 \geq N_2$$

$$x=i_{1,2},\quad y=i_{1,1},\quad W^{(1)}_{l,m,n}=\frac{1}{\sqrt{P}}\begin{bmatrix} v_{m,l} \\ \varphi_n v_{m,l}\end{bmatrix},\text{ if } N_1 < N_2$$

wherein the $W^{(1)}_{l,m,n}$ corresponds to a precoder of the rank-1 codebook in case of a combination of (l, m, n) determined by a combination of ($i_{1,1}$, $i_{1,2}$, $i_2$), and

wherein the P corresponds to a number of antenna ports of an antenna array.

9. The UE of Claim 1, wherein the at least one processor is, to determine the PMI, configured to

determine, if the precoder codebook is a rank-2 codebook and the codebook configuration indicates a codebook configuration 3, the precoder according to a following codebook table:

| $i_{1,1}$ | $i_{1,2}$ | $i_2$ | |
|---|---|---|---|
| | | 0 | 1 |
| $0,1,...,\frac{N_1 O_1}{2}-1$ | $0,1,...,\frac{N_2 O_2}{2}-1$ | $W^{(2)}_{2x,2x,2y,2y,0}$ | $W^{(2)}_{2x,2x,2y,2y,1}$ |
| | | 2 | 3 |
| | | $W^{(2)}_{2x+1,2x+1,2y+1,2y+1,0}$ | $W^{(2)}_{2x+1,2x+1,2y+1,2y+1,1}$ |
| $i_{1,1}$ | $i_{1,2}$ | $i_2$ | |
| | | 4 | 5 |
| $0,1,...,\frac{N_1 O_1}{2}-1$ | $0,1,...,\frac{N_2 O_2}{2}-1$ | $W^{(2)}_{2x+2,2x+2,2y,2y,0}$ | $W^{(2)}_{2x+2,2x+2,2y,2y,1}$ |
| | | 6 | 7 |
| | | $W^{(2)}_{2x+3,2x+3,2y+1,2y+1,0}$ | $W^{(2)}_{2x+3,2x+3,2y+1,2y+1,1}$ |
| $i_{1,1}$ | $i_{1,2}$ | $i_2$ | |

48

| $i_{1,1}$ | $i_{1,2}$ | $i_2$ | |
|---|---|---|---|
| | | 8 | 9 |
| $0,1,\ldots,\dfrac{N_1 O_1}{2}-1$ | $0,1,\ldots,\dfrac{N_2 O_2}{2}-1$ | $W^{(2)}_{2x,2x+1,2y,2y+1,0}$ | $W^{(2)}_{2x,2x+1,2y,2y+1,1}$ |
| | | 10 | 11 |
| | | $W^{(2)}_{2x+1,2x+2,2y+1,2y,0}$ | $W^{(2)}_{2x+1,2x+2,2y+1,2y,1}$ |
| $i_{1,1}$ | $i_{1,2}$ | $i_2$ | |
| | | 12 | 13 |
| $0,1,\ldots,\dfrac{N_1 O_1}{2}-1$ | $0,1,\ldots,\dfrac{N_2 O_2}{2}-1$ | $W^{(2)}_{2x,2x+3,2y,2y+1,0}$ | $W^{(2)}_{2x,2x+3,2y,2y+1,1}$ |
| | | 14 | 15 |
| | | $W^{(2)}_{2x+1,2x+3,2y+1,2y+1,0}$ | $W^{(2)}_{2x+1,2x+3,2y+1,2y+1,1}$ |

where $x=i_{1,1}$, $y=i_{1,2}$, $W^{(2)}_{l,l',m,m',n} = \dfrac{1}{\sqrt{2P}}\begin{bmatrix} v_{l,m} & v_{l',m'} \\ \varphi_n v_{l,m} & -\varphi_n v_{l',m'} \end{bmatrix}$ if $N_1 \geq N_2$ and

$x=i_{1,2}$, $y=i_{1,1}$, $W^{(2)}_{l,l',m,m',n} = \dfrac{1}{\sqrt{2P}}\begin{bmatrix} v_{m,l} & v_{m',l'} \\ \varphi_n v_{m,l} & -\varphi_n v_{m',l'} \end{bmatrix}$, if $N_1 < N_2$

; and

determine, if the precoder codebook is the rank-2 codebook and the codebook configuration indicates a codebook configuration 4, the precoder according to a following codebook table:

| $i_{1,1}$ | $i_{1,2}$ | $i_2$ | |
|---|---|---|---|
| | | 0 | 1 |
| $0,1,\ldots,\dfrac{N_1 O_1}{2}-1$ | $0,1,\ldots,\dfrac{N_2 O_2}{2}-1$ | $W^{(2)}_{2x,2x,2y,2y,0}$ | $W^{(2)}_{2x,2x,2y,2y,1}$ |
| | | 2 | 3 |
| | | $W^{(2)}_{2x+1,2x+1,2y,2y,0}$ | $W^{(2)}_{2x+1,2x+1,2y,2y,1}$ |
| $i_{1,1}$ | $i_{1,2}$ | $i_2$ | |
| | | 4 | 5 |
| $0,1,\ldots,\dfrac{N_1 O_1}{2}-1$ | $0,1,\ldots,\dfrac{N_2 O_2}{2}-1$ | $W^{(2)}_{2x+2,2x+2,2y,2y,0}$ | $W^{(2)}_{2x+2,2x+2,2y,2y,1}$ |
| | | 6 | 7 |
| | | $W^{(2)}_{2x+3,2x+3,2y,2y,0}$ | $W^{(2)}_{2x+3,2x+3,2y,2y,1}$ |
| $i_{1,1}$ | $i_{1,2}$ | $i_2$ | |

| | | 8 | 9 |
|---|---|---|---|
| $0,1,...,\dfrac{N_1 O_1}{2}-1$ | $0,1,...,\dfrac{N_2 O_2}{2}-1$ | $W^{(2)}_{2x,2x+1,2y,2y,0}$ | $W^{(2)}_{2x,2x+1,2y,2y,1}$ |
| | | 10 | 11 |
| | | $W^{(2)}_{2x+1,2x+2,2y,2y,0}$ | $W^{(2)}_{2x+1,2x+2,2y,2y,1}$ |
| $i_{1,1}$ | $i_{1,2}$ | $i_2$ | |
| | | 12 | 13 |
| $0,1,...,\dfrac{N_1 O_1}{2}-1$ | $0,1,...,\dfrac{N_2 O_2}{2}-1$ | $W^{(2)}_{2x,2x+3,2y,2y,0}$ | $W^{(2)}_{2x,2x+3,2y,2y,1}$ |
| | | 14 | 15 |
| | | $W^{(2)}_{2x+1,2x+3,2y,2y,0}$ | $W^{(2)}_{2x+1,2x+3,2y,2y,1}$ |

where

$$x = i_{1,1}, \quad y = i_{1,2}, \quad W^{(2)}_{l,l',m,m',n} = \frac{1}{\sqrt{2P}}\begin{bmatrix} v_{l,m} & v_{l',m'} \\ \varphi_n v_{l,m} & -\varphi_n v_{l',m'} \end{bmatrix} \text{ if } N_1 \geq N_2 \text{ and}$$

$$x = i_{1,2}, \quad y = i_{1,1}, \quad W^{(2)}_{l,l',m,m',n} = \frac{1}{\sqrt{2P}}\begin{bmatrix} v_{m,l} & v_{m',l'} \\ \varphi_n v_{m,l} & -\varphi_n v_{m',l'} \end{bmatrix}, \text{ if } N_1 < N_2$$

wherein the $\overline{W^{(2)}_{l,l',m,m',n}}$ corresponds to a precoder of the rank-2 codebook in case of a combination of (l, l', m, m', n) determined by a combination of ($i_{1,1}$, $i_{1,2}$, $i_2$),
wherein the P corresponds to a number of antenna ports of an antenna array.

10. The UE of Claim 1,

wherein the first codebook index ($i_{1,1}$) and the second codebook index ($i_{1,2}$) are associated with a first PMI pair; and
wherein the third codebook index ($i_2$) associated with a second PMI,
wherein the first PMI pair indicates a beam group, and
wherein the second PMI indicates a beam in the beam group, the precoder corresponding to the beam.

11. A base station in a wireless communication system, the base station comprising:

a transceiver; and
at least one processor operable coupled to the transceiver, and configured to:

transmit, to a user equipment, UE, configuration information for indicating codebook parameters that include a first number of antenna ports, $N_1$, for a first dimension, a second number of antenna ports, $N_2$, for a second dimension, a first oversampling factor, $O_1$, for the first dimension, a second oversampling factor, $O_2$, for the second dimension, and a codebook configuration; and
receive, from the UE, channel state information, CSI, including at least one precoding matrix indicator, PMI, wherein the at least one PMI includes a first codebook index ($i_{1,1}$), a second codebook index ($i_{1,2}$), and a third codebook index ($i_2$),

wherein the at least one PMI is determined based on codebook indices indicating a precoder of a precoder codebook,
wherein the precoder codebook is determined based on the codebook parameters, and **characterized in that** if the $N_1$ is greater than or equal to the $N_2$, the precoder comprises a first matrix in which a first vector is determined in accordance with a first variable and a second vector is determined in accordance with a second variable, the first variable is associated with the first codebook index ($i_{1,1}$) using a first function and the second variable is associated with the second codebook index ($i_{1,2}$) using a second function, and

if the $N_1$ is smaller than the $N_2$, the precoder comprises a second matrix in which the first vector is applied to the second variable and the second vector is applied to the first variable, the first variable is associated with the second codebook index ($i_{1,2}$) using the first function and the second variable is associated with the first codebook index ($i_{1,1}$) using the second function,

wherein the first vector is a discrete fourier transform, DFT, vector associated with a beam for the first dimension, the second vector is a DFT vector associated with a beam for the second dimension, and

wherein the first matrix and the second matrix include the Kronecker product of the first vector and the second vector.

12. The base station of Claim 11, wherein the at least one processor is further configured to:

determine, if the precoder codebook is a rank-1 codebook and the codebook configuration indicates a codebook configuration 3, the precoder according to a following codebook table:

| $i_{1,1}$ | $i_{1,2}$ | $i_2$ | | | |
|---|---|---|---|---|---|
| | | 0 | 1 | 2 | 3 |
| $0,1,...,\frac{N_1 O_1}{2}-1$ | $0,1,...,\frac{N_2 O_2}{2}-1$ | $W^{(1)}_{2x,2y,0}$ | $W^{(1)}_{2x,2y,1}$ | $W^{(1)}_{2x,2y,2}$ | $W^{(1)}_{2x,2y,3}$ |

| $i_{1,1}$ | $i_{1,2}$ | $i_2$ | | | |
|---|---|---|---|---|---|
| | | 4 | 5 | 6 | 7 |
| $0,1,...,\frac{N_1 O_1}{2}-1$ | $0,1,...,\frac{N_2 O_2}{2}-1$ | $W^{(1)}_{2x+2,2y,0}$ | $W^{(1)}_{2x+2,2y,1}$ | $W^{(1)}_{2x+2,2y,2}$ | $W^{(1)}_{2x+2,2y,3}$ |

| $i_{1,1}$ | $i_{1,2}$ | $i_2$ | | | |
|---|---|---|---|---|---|
| | | 8 | 9 | 10 | 11 |
| $0,1,...,\frac{N_1 O_1}{2}-1$ | $0,1,...,\frac{N_2 O_2}{2}-1$ | $W^{(1)}_{2x+1,2y+1,0}$ | $W^{(1)}_{2x+1,2y+1,1}$ | $W^{(1)}_{2x+1,2y+1,2}$ | $W^{(1)}_{2x+1,2y+1,3}$ |

| $i_{1,1}$ | $i_{1,2}$ | $i_2$ | | | |
|---|---|---|---|---|---|
| | | 12 | 13 | 14 | 15 |
| $0,1,...,\frac{N_1 O_1}{2}-1$ | $0,1,...,\frac{N_2 O_2}{2}-1$ | $W^{(1)}_{2x+3,2y+1,0}$ | $W^{(1)}_{2x+3,2y+1,1}$ | $W^{(1)}_{2x+3,2y+1,2}$ | $W^{(1)}_{2x+3,2y+1,3}$ |

$$\text{where}\quad x=i_{1,1},\quad y=i_{1,2},\quad W^{(1)}_{l,m,n}=\frac{1}{\sqrt{P}}\begin{bmatrix} v_{l,m} \\ \varphi_n v_{l,m} \end{bmatrix},\ \text{if}\ N_1 \geq N_2$$

$$x=i_{1,2},\quad y=i_{1,1},\quad W^{(1)}_{l,m,n}=\frac{1}{\sqrt{P}}\begin{bmatrix} v_{m,l} \\ \varphi_n v_{m,l} \end{bmatrix},\ \text{if}\ N_1 < N_2$$

;

determine, if the precoder codebook is the rank-1 codebook and the codebook configuration indicates a codebook configuration 4, the precoder according to a following codebook table:

| $i_{1,1}$ | $i_{1,2}$ | $i_2$ | | | |
|---|---|---|---|---|---|
| | | 0 | 1 | 2 | 3 |
| $0,1,...,\dfrac{N_1 O_1}{2}-1$ | $0,1,...,\dfrac{N_2 O_2}{2}-1$ | $W^{(1)}_{2x,2y,0}$ | $W^{(1)}_{2x,2y,1}$ | $W^{(1)}_{2x,2y,2}$ | $W^{(1)}_{2x,2y,3}$ |

| $i_{1,1}$ | $i_{1,2}$ | $i_2$ | | | |
|---|---|---|---|---|---|
| | | 4 | 5 | 6 | 7 |
| $0,1,...,\dfrac{N_1 O_1}{2}-1$ | $0,1,...,\dfrac{N_2 O_2}{2}-1$ | $W^{(1)}_{2x+1,2y,0}$ | $W^{(1)}_{2x+1,2y,1}$ | $W^{(1)}_{2x+1,2y,2}$ | $W^{(1)}_{2x+1,2y,3}$ |

| $i_{1,1}$ | $i_{1,2}$ | $i_2$ | | | |
|---|---|---|---|---|---|
| | | 8 | 9 | 10 | 11 |
| $0,1,...,\dfrac{N_1 O_1}{2}-1$ | $0,1,...,\dfrac{N_2 O_2}{2}-1$ | $W^{(1)}_{2x+2,2y,0}$ | $W^{(1)}_{2x+2,2y,1}$ | $W^{(1)}_{2x+2,2y,2}$ | $W^{(1)}_{2x+2,2y,3}$ |

| $i_{1,1}$ | $i_{1,2}$ | $i_2$ | | | |
|---|---|---|---|---|---|
| | | 12 | 13 | 14 | 15 |
| $0,1,...,\dfrac{N_1 O_1}{2}-1$ | $0,1,...,\dfrac{N_2 O_2}{2}-1$ | $W^{(1)}_{2x+3,2y,0}$ | $W^{(1)}_{2x+3,2y,1}$ | $W^{(1)}_{2x+3,2y,2}$ | $W^{(1)}_{2x+3,2y,3}$ |

where
$$x=i_{1,1},\quad y=i_{1,2},\quad W^{(1)}_{l,m,n}=\frac{1}{\sqrt{P}}\begin{bmatrix} v_{l,m} \\ \varphi_n v_{l,m} \end{bmatrix},\text{ if } N_1 \geq N_2$$

$$x=i_{1,2},\quad y=i_{1,1},\quad W^{(1)}_{l,m,n}=\frac{1}{\sqrt{P}}\begin{bmatrix} v_{m,l} \\ \varphi_n v_{m,l} \end{bmatrix},\text{ if } N_1 < N_2$$

;

determine, if the precoder codebook is a rank-2 codebook and the codebook configuration indicates a codebook configuration 3, the precoder according to a following codebook table:

| $i_{1,1}$ | $i_{1,2}$ | $i_2$ | |
|---|---|---|---|
| | | 0 | 1 |
| $0,1,...,\dfrac{N_1 O_1}{2}-1$ | $0,1,...,\dfrac{N_2 O_2}{2}-1$ | $W^{(2)}_{2x,2x,2y,2y,0}$ | $W^{(2)}_{2x,2x,2y,2y,1}$ |
| | | 2 | 3 |
| | | $W^{(2)}_{2x+1,2x+1,2y+1,2y+1,0}$ | $W^{(2)}_{2x+1,2x+1,2y+1,2y+1,1}$ |

| $i_{1,1}$ | $i_{1,2}$ | $i_2$ | |
|---|---|---|---|
| | | 4 | 5 |
| $0,1,...,\dfrac{N_1 O_1}{2}-1$ | $0,1,...,\dfrac{N_2 O_2}{2}-1$ | $W^{(2)}_{2x+2,2x+2,2y,2y,0}$ | $W^{(2)}_{2x+2,2x+2,2y,2y,1}$ |
| | | 6 | 7 |
| | | $W^{(2)}_{2x+3,2x+3,2y+1,2y+1,0}$ | $W^{(2)}_{2x+3,2x+3,2y+1,2y+1,1}$ |

| $i_{1,1}$ | $i_{1,2}$ | $i_2$ | |
|---|---|---|---|
| | | 8 | 9 |
| $0,1,...,\dfrac{N_1 O_1}{2}-1$ | $0,1,...,\dfrac{N_2 O_2}{2}-1$ | $W^{(2)}_{2x,2x+1,2y,2y+1,0}$ | $W^{(2)}_{2x,2x+1,2y,2y+1,1}$ |
| | | 10 | 11 |
| | | $W^{(2)}_{2x+1,2x+2,2y+1,2y,0}$ | $W^{(2)}_{2x+1,2x+2,2y+1,2y,1}$ |

| $i_{1,1}$ | $i_{1,2}$ | $i_2$ | |
|---|---|---|---|
| | | 12 | 13 |
| $0,1,...,\dfrac{N_1 O_1}{2}-1$ | $0,1,...,\dfrac{N_2 O_2}{2}-1$ | $W^{(2)}_{2x,2x+3,2y,2y+1,0}$ | $W^{(2)}_{2x,2x+3,2y,2y+1,1}$ |
| | | 14 | 15 |
| | | $W^{(2)}_{2x+1,2x+3,2y+1,2y+1,0}$ | $W^{(2)}_{2x+1,2x+3,2y+1,2y+1,1}$ |

where

$$x = i_{1,1}, \quad y = i_{1,2}, \quad W^{(2)}_{l,l',m,m',n} = \frac{1}{\sqrt{2P}}\begin{bmatrix} v_{l,m} & v_{l',m'} \\ \varphi_n v_{l,m} & -\varphi_n v_{l',m'} \end{bmatrix} \text{ if } N_1 \geq N_2 \text{ and}$$

$$x = i_{1,2}, \quad y = i_{1,1}, \quad W^{(2)}_{l,l',m,m',n} = \frac{1}{\sqrt{2P}}\begin{bmatrix} v_{m,l} & v_{m',l'} \\ \varphi_n v_{m,l} & -\varphi_n v_{m',l'} \end{bmatrix}, \text{ if } N_1 < N_2$$

; and

determine, if the precoder codebook is the rank-2 codebook and the codebook configuration indicates a codebook configuration 4, the precoder according to a following codebook table:

| $i_{1,1}$ | $i_{1,2}$ | $i_2$ | |
|---|---|---|---|
| | | 0 | 1 |
| $0,1,...,\dfrac{N_1O_1}{2}-1$ | $0,1,...,\dfrac{N_2O_2}{2}-1$ | $W^{(2)}_{2x,2x,2y,2y,0}$ | $W^{(2)}_{2x,2x,2y,2y,1}$ |
| | | 2 | 3 |
| | | $W^{(2)}_{2x+1,2x+1,2y,2y,0}$ | $W^{(2)}_{2x+1,2x+1,2y,2y,1}$ |

| $i_{1,1}$ | $i_{1,2}$ | $i_2$ | |
|---|---|---|---|
| | | 4 | 5 |
| $0,1,...,\dfrac{N_1O_1}{2}-1$ | $0,1,...,\dfrac{N_2O_2}{2}-1$ | $W^{(2)}_{2x+2,2x+2,2y,2y,0}$ | $W^{(2)}_{2x+2,2x+2,2y,2y,1}$ |
| | | 6 | 7 |
| | | $W^{(2)}_{2x+3,2x+3,2y,2y,0}$ | $W^{(2)}_{2x+3,2x+3,2y,2y,1}$ |

| $i_{1,1}$ | $i_{1,2}$ | $i_2$ | |
|---|---|---|---|
| | | 8 | 9 |
| $0,1,...,\dfrac{N_1O_1}{2}-1$ | $0,1,...,\dfrac{N_2O_2}{2}-1$ | $W^{(2)}_{2x,2x+1,2y,2y,0}$ | $W^{(2)}_{2x,2x+1,2y,2y,1}$ |
| | | 10 | 11 |
| | | $W^{(2)}_{2x+1,2x+2,2y,2y,0}$ | $W^{(2)}_{2x+1,2x+2,2y,2y,1}$ |

| $i_{1,1}$ | $i_{1,2}$ | $i_2$ | |
|---|---|---|---|
| | | 12 | 13 |
| $0,1,...,\dfrac{N_1O_1}{2}-1$ | $0,1,...,\dfrac{N_2O_2}{2}-1$ | $W^{(2)}_{2x,2x+3,2y,2y,0}$ | $W^{(2)}_{2x,2x+3,2y,2y,1}$ |
| | | 14 | 15 |
| | | $W^{(2)}_{2x+1,2x+3,2y,2y,0}$ | $W^{(2)}_{2x+1,2x+3,2y,2y,1}$ |

where

$$x=i_{1,1}, \quad y=i_{1,2}, \quad W^{(2)}_{l,l',m,m',n}=\frac{1}{\sqrt{2P}}\begin{bmatrix} v_{l,m} & v_{l',m'} \\ \varphi_n v_{l,m} & -\varphi_n v_{l',m'} \end{bmatrix} \text{ if } N_1 \geq N_2 \text{ and}$$

$$x=i_{1,2}, \quad y=i_{1,1}, \quad W^{(2)}_{l,l',m,m',n}=\frac{1}{\sqrt{2P}}\begin{bmatrix} v_{m,l} & v_{m',l'} \\ \varphi_n v_{m,l} & -\varphi_n v_{m',l'} \end{bmatrix}, \text{ if } N_1 < N_2$$

wherein the $\overline{W^{(1)}_{l,m,n}}$ corresponds to a precoder of the rank-1 codebook in case of a combination of (l, m, n) determined by a combination of ($i_{1,1}$, $i_{1,2}$, $i_2$),

wherein the $W^{(2)}_{l,l',m,m',n}$ corresponds to a precoder of the rank-2 codebook in case of a combination of (l, l', m, m', n) determined by the combination of ($i_{1,1}$, $i_{1,2}$, $i_2$), and

wherein the P corresponds to a number of antenna ports of an antenna array.

13. A method operated by a user equipment, UE, in a wireless communication system, the method comprising the steps corresponding to the configuration of the processor of the UE according to any of claims 1 to 10.

**14.** A method operated by a base station in a wireless communication system, the method comprising the steps corresponding to the configuration of the processor of the base station according to any of claims 11 to 12.

**Patentansprüche**

1. Benutzergerät, UE, in einem drahtlosen Kommunikationssystem, wobei das UE Folgendes umfasst:

   einen Transceiver; und
   mindestens einen Prozessor, der betriebsfähig mit dem Transceiver gekoppelt und konfiguriert ist zum:

   Empfangen von Konfigurationsinformationen von einer Basisstation zum Anzeigen von Codebuchparametern, die eine erste Anzahl von Antennenports, $N_1$, für eine erste Dimension, eine zweite Anzahl von Antennenports, $N_2$, für eine zweite Dimension, einen ersten Oversampling-Faktor, $O_1$, für die erste Dimension, einen zweiten Oversampling-Faktor, $O_2$, für die zweite Dimension und eine Codebuchkonfiguration enthalten; und
   Bestimmen eines Vorcodierer-Codebuchs basierend auf den Codebuchparametern;
   Bestimmen mindestens eines Vorcodierungsmatrixanzeigers, PMI, der einen Vorcodierer des Vorcodierer-Codebuchs anzeigt, wobei der mindestens eine PMI einen ersten Codebuchindex ($i_{1,1}$), einen zweiten Codebuchindex ($i_{1,2}$) und einen dritten Codebuchindex ($i_2$) enthält; und
   Übertragen von Kanalzustandsinformationen, CSI, einschließlich des mindestens einen PMI an die Basisstation, **dadurch gekennzeichnet, dass**,

   wenn $N_1$ größer als oder gleich $N_2$ ist, der Vorcodierer eine erste Matrix umfasst, in der ein erster Vektor gemäß einer ersten Variablen bestimmt wird und ein zweiter Vektor gemäß einer zweiten Variablen bestimmt wird, wobei die erste Variable dem ersten Codebuchindex ($i_{1,1}$) unter Verwendung einer ersten Funktion zugeordnet ist und die zweite Variable dem zweiten Codebuchindex ($i_{1,2}$) unter Verwendung einer zweiten Funktion zugeordnet ist, und
   wenn $N_1$ kleiner als $N_2$ ist, der Vorcodierer eine zweite Matrix umfasst, in der der erste Vektor gemäß der zweiten Variablen bestimmt wird und der zweite Vektor gemäß der ersten Variablen bestimmt wird, wobei die erste Variable dem zweiten Codebuchindex ($i_{1,2}$) unter Verwendung der ersten Funktion zugeordnet ist und die zweite Variable dem ersten Codebuchindex ($i_{1,1}$) unter Verwendung der zweiten Funktion zugeordnet ist,
   wobei der erste Vektor ein diskreter Fourier-Transformations(DFT)-Vektor ist, der einem Strahl für die erste Dimension zugeordnet ist, und der zweite Vektor ein DFT-Vektor ist, der einem Strahl für die zweite Dimension zugeordnet ist, und
   wobei die erste Matrix und die zweite Matrix das Kronecker-Produkt des ersten Vektors und des zweiten Vektors enthalten.

2. UE nach Anspruch 1, wobei der mindestens eine Prozessor zum Bestimmen des Vorcodierer-Codebuchs konfiguriert ist zum:

   Identifizieren der Codebuchkonfiguration;
   Bestimmen, ob $N_1$ kleiner als $N_2$ ist oder nicht, als Reaktion auf das Identifizieren, dass die identifizierte Codebuchkonfiguration eine Codebuchkonfiguration 3 oder eine Codebuchkonfiguration 4 anzeigt; und
   Bestimmen des Vorcodierer-Codebuchs basierend auf der ersten Matrix oder der zweiten Matrix,
   wobei der Vorcodierer durch den ersten Codebuchindex ($i_{1,1}$), den zweiten Codebuchindex ($i_{1,2}$) und den dritten Codebuchindex ($i_2$) angezeigt wird.

3. UE nach Anspruch 1, wobei der mindestens eine Prozessor ferner konfiguriert ist zum:

   Identifizieren einer ersten Variablen (x) und einer zweiten Variablen (y) basierend auf $N_1$ und $N_2$;
   wobei die erste Variable (x) und die zweite Variable (y) Folgendem entsprechen:
   $x = i_{1,d1}$ und $y = i_{1,d2}$,
   wobei ($d_1$, $d_2$) definiert sind als:

   ($d_1$, $d_2$) = (1, 2), wenn $N_1$ größer als oder gleich $N_2$ ist; und
   ($d_1$, $d_2$) = (2, 1), wenn $N_1$ kleiner als $N_2$ ist.

4. UE nach Anspruch 3, wobei der Vorcodierer basierend auf einem ersten PMI-Ausdruck bestimmt wird und die zweite Matrix basierend auf einem zweiten PMI-Ausdruck bestimmt wird, und
wobei der zweite PMI-Ausdruck einer Funktion entspricht, die durch Austauschen einer Variablen für die erste Dimension des ersten PMI-Ausdrucks und einer Variablen für die zweite Dimension des ersten PMI-Ausdrucks erhalten wird.

5. UE nach Anspruch 1,

wobei der erste Codebuchindex ($i_{1,1}$) einem Index ($m_1$) des ersten Vektors zugeordnet ist,
wobei der zweite Codebuchindex ($i_{1,2}$) einem Index ($m_2$) des zweiten Vektors zugeordnet ist, und
wobei der Vorcodierer basierend auf einer folgenden Gleichung bestimmt wird:

$$W_{m_1,m_2} = \left[ u_{m_2} \quad e^{j\frac{2\pi m_1}{O_1 N_1}} u_{m_2} \quad \cdots \quad e^{j\frac{2\pi m_1 (N_1-1)}{O_1 N_1}} u_{m_2} \right]^T$$

wobei

$$u_{m_2} = \left[ 1 \quad e^{j\frac{2\pi m_2}{O_2 N_2}} \quad \cdots \quad e^{j\frac{2\pi m_2 (N_2-1)}{O_2 N_2}} \right].$$

6. UE nach Anspruch 1,

wobei der erste Codebuchindex ($i_{1,1}$) basierend auf $N_1$ und $O_1$ bestimmt wird,
wobei der zweite Codebuchindex ($i_{1,2}$) basierend auf $N_2$ und $O_2$ bestimmt wird, und
wobei die Konfigurationsinformationen über eine Radio Resource Control(RRC)-Signalisierung übertragen werden,

7. UE nach Anspruch 4,

wobei der erste PMI-Ausdruck Folgendem entspricht:

$$W_{m_1,m_2,n}^{(1)} = \frac{1}{\sqrt{Q}} \begin{bmatrix} w_{m_1,m_2} \\ \varphi_n w_{m_1,m_2} \end{bmatrix}$$
im Fall eines Rangs 1, ; und

$$W_{m_1,m_2,m_1',m_2',n}^{(2)} = \frac{1}{\sqrt{2Q}} \begin{bmatrix} w_{m_1,m_2} & w_{m_1',m_2'} \\ \varphi_n w_{m_1,m_2} & -\varphi_n w_{m_1',m_2'} \end{bmatrix}$$
im Fall eines Rangs 2, ,

wobei der zweite PMI-Ausdruck Folgendem entspricht:

$$W_{m_1,m_2,n}^{(1)} = \frac{1}{\sqrt{Q}} \begin{bmatrix} w_{m_2,m_1} \\ \varphi_n w_{m_2,m_1} \end{bmatrix}$$
im Fall eines Rangs 1, ; und

$$W_{m_1,m_2,m_1',m_2',n}^{(2)} = \frac{1}{\sqrt{2Q}} \begin{bmatrix} w_{m_2,m_1} & w_{m_2',m_1'} \\ \varphi_n w_{m_2,m_1} & -\varphi_n w_{m_2',m_1'} \end{bmatrix}$$
im Fall eines Rangs 2,

wobei $Q = 2N_1 N_2$ und $\phi_n = e^{j\pi n/2}$ ist,
wobei $W_{m_1,m_2,n}^{(1)}$ einem Vorcodierer des Rang-1-Codebuchs im Fall einer Kombination von ($m_1$, $m_2$, n) entspricht,

die durch eine Kombination von $(i_{1,1}, i_{1,2}, i_2)$ bestimmt wird,

wobei $W^{(2)}_{m_1,m_2,m'_1,m'_2,n}$ einem Vorcodierer des Rang-2-Codebuchs im Fall einer Kombination von $(m_1, m_2, m'_1, m'_2, n)$ entspricht, die durch die Kombination von $(i_{1,1}, i_{1,2}, i_2)$ bestimmt wird,

wobei Q einer Anzahl von Antennenports eines Antennenarrays entspricht.

8.  UE nach Anspruch 1, wobei der mindestens eine Prozessor zum Bestimmen des PMI konfiguriert ist zum:

Bestimmen, ob das Vorcodierer-Codebuch ein Rang-1-Codebuch ist und die Codebuchkonfiguration eine Codebuchkonfiguration 3 anzeigt, wobei der Vorcodierer einer folgenden Codebuchtabelle entspricht:

| $i_{1,1}$ | $i_{1,2}$ | $i_2$ | | | |
|---|---|---|---|---|---|
| | | 0 | 1 | 2 | 3 |
| $0,1,\ldots,\frac{N_1 O_1}{2}-1$ | $0,1,\ldots,\frac{N_2 O_2}{2}-1$ | $W^{(1)}_{2x,2y,0}$ | $W^{(1)}_{2x,2y,1}$ | $W^{(1)}_{2x,2y,2}$ | $W^{(1)}_{2x,2y,3}$ |
| $i_{1,1}$ | $i_{1,2}$ | $i_2$ | | | |
| | | 4 | 5 | 6 | 7 |
| $0,1,\ldots,\frac{N_1 O_1}{2}-1$ | $0,1,\ldots,\frac{N_2 O_2}{2}-1$ | $W^{(1)}_{2x+2,2y,0}$ | $W^{(1)}_{2x+2,2y,1}$ | $W^{(1)}_{2x+2,2y,2}$ | $W^{(1)}_{2x+2,2y,3}$ |
| $i_{1,1}$ | $i_{1,2}$ | $i_2$ | | | |
| | | 8 | 9 | 10 | 11 |
| $0,1,\ldots,\frac{N_1 O_1}{2}-1$ | $0,1,\ldots,\frac{N_2 O_2}{2}-1$ | $W^{(1)}_{2x+1,2y+1,0}$ | $W^{(1)}_{2x+1,2y+1,1}$ | $W^{(1)}_{2x+1,2y+1,2}$ | $W^{(1)}_{2x+1,2y+1,3}$ |
| $i_{1,1}$ | $i_{1,2}$ | $i_2$ | | | |
| | | 12 | 13 | 14 | 15 |
| $0,1,\ldots,\frac{N_1 O_1}{2}-1$ | $0,1,\ldots,\frac{N_2 O_2}{2}-1$ | $W^{(1)}_{2x+3,2y+1,0}$ | $W^{(1)}_{2x+3,2y+1,1}$ | $W^{(1)}_{2x+3,2y+1,2}$ | $W^{(1)}_{2x+3,2y+1,3}$ |

$$\text{wobei } x=i_{1,1}, \quad y=i_{1,2}, \quad W^{(1)}_{l,m,n}=\frac{1}{\sqrt{P}}\begin{bmatrix} v_{l,m} \\ \varphi_n v_{l,m} \end{bmatrix}, \quad \text{wenn } N_1 \geq N_2$$

$$x=i_{1,2}, \quad y=i_{1,1}, \quad W^{(1)}_{l,m,n}=\frac{1}{\sqrt{P}}\begin{bmatrix} v_{m,l} \\ \varphi_n v_{m,l} \end{bmatrix}, \quad \text{wenn } N_1 < N_2$$

; und

Bestimmen, ob das Vorcodierer-Codebuch das Rang-1-Codebuch ist und die Codebuchkonfiguration eine Codebuchkonfiguration 4 anzeigt, wobei der Vorcodierer einer folgenden Codebuchtabelle entspricht:

| $i_{1,1}$ | $i_{1,2}$ | $i_2$ | | | |
|---|---|---|---|---|---|
| | | 0 | 1 | 2 | 3 |
| $0,1,...,\frac{N_1 O_1}{2}-1$ | $0,1,...,\frac{N_2 O_2}{2}-1$ | $W^{(1)}_{2x,2y,0}$ | $W^{(1)}_{2x,2y,1}$ | $W^{(1)}_{2x,2y,2}$ | $W^{(1)}_{2x,2y,3}$ |
| $i_{1,1}$ | $i_{1,2}$ | $i_2$ | | | |
| | | 4 | 5 | 6 | 7 |
| $0,1,...,\frac{N_1 O_1}{2}-1$ | $0,1,...,\frac{N_2 O_2}{2}-1$ | $W^{(1)}_{2x+1,2y,0}$ | $W^{(1)}_{2x+1,2y,1}$ | $W^{(1)}_{2x+1,2y,2}$ | $W^{(1)}_{2x+1,2y,3}$ |
| $i_{1,1}$ | $i_{1,2}$ | $i_2$ | | | |
| | | 8 | 9 | 10 | 11 |
| $0,1,...,\frac{N_1 O_1}{2}-1$ | $0,1,...,\frac{N_2 O_2}{2}-1$ | $W^{(1)}_{2x+2,2y,0}$ | $W^{(1)}_{2x+2,2y,1}$ | $W^{(1)}_{2x+2,2y,2}$ | $W^{(1)}_{2x+2,2y,3}$ |
| $i_{1,1}$ | $i_{1,2}$ | $i_2$ | | | |
| | | 12 | 13 | 14 | 15 |
| $0,1,...,\frac{N_1 O_1}{2}-1$ | $0,1,...,\frac{N_2 O_2}{2}-1$ | $W^{(1)}_{2x+3,2y,0}$ | $W^{(1)}_{2x+3,2y,1}$ | $W^{(1)}_{2x+3,2y,2}$ | $W^{(1)}_{2x+3,2y,3}$ |

$$\text{wobei} \quad x=i_{1,1}, \quad y=i_{1,2}, \quad W^{(1)}_{l,m,n}=\frac{1}{\sqrt{P}}\begin{bmatrix} v_{l,m} \\ \varphi_n v_{l,m} \end{bmatrix}, \quad \text{wenn} \quad N_1 \geq N_2$$

$$x=i_{1,2}, \quad y=i_{1,1}, \quad W^{(1)}_{l,m,n}=\frac{1}{\sqrt{P}}\begin{bmatrix} v_{m,l} \\ \varphi_n v_{m,l} \end{bmatrix}, \quad \text{wenn} \quad N_1 < N_2$$

wobei $W^{(1)}_{l,m,n}$ einem Vorcodierer des Rang-1-Codebuchs im Fall einer Kombination von (l, m, n) entspricht, die durch eine Kombination von ($i_{1,1}$, $i_{1,2}$, $i_2$) bestimmt wird, und
wobei P einer Anzahl von Antennenports eines Antennenarrays entspricht.

9. UE nach Anspruch 1, wobei der mindestens eine Prozessor zum Bestimmen des PMI konfiguriert ist zum:

Bestimmen, ob das Vorcodierer-Codebuch ein Rang-2-Codebuch ist und die Codebuchkonfiguration eine Codebuchkonfiguration 3 anzeigt, wobei der Vorcodierer einer folgenden Codebuchtabelle entspricht:

| $i_{1,1}$ | $i_{1,2}$ | $i_2$ | |
|---|---|---|---|
| | | 0 | 1 |
| $0,1,\ldots,\dfrac{N_1O_1}{2}-1$ | $0,1,\ldots,\dfrac{N_2O_2}{2}-1$ | $W^{(2)}_{2x,2x,2y,2y,0}$ | $W^{(2)}_{2x,2x,2y,2y,1}$ |
| | | 2 | 3 |
| | | $W^{(2)}_{2x+1,2x+1,2y+1,2y+1,0}$ | $W^{(2)}_{2x+1,2x+1,2y+1,2y+1,1}$ |
| $i_{1,1}$ | $i_{1,2}$ | $i_2$ | |
| | | 4 | 5 |
| $0,1,\ldots,\dfrac{N_1O_1}{2}-1$ | $0,1,\ldots,\dfrac{N_2O_2}{2}-1$ | $W^{(2)}_{2x+2,2x+2,2y,2y,0}$ | $W^{(2)}_{2x+2,2x+2,2y,2y,1}$ |
| | | 6 | 7 |
| | | $W^{(2)}_{2x+3,2x+3,2y+1,2y+1,0}$ | $W^{(2)}_{2x+3,2x+3,2y+1,2y+1,1}$ |
| $i_{1,1}$ | $i_{1,2}$ | $i_2$ | |
| | | 8 | 9 |
| $0,1,\ldots,\dfrac{N_1O_1}{2}-1$ | $0,1,\ldots,\dfrac{N_2O_2}{2}-1$ | $W^{(2)}_{2x,2x+1,2y,2y+1,0}$ | $W^{(2)}_{2x,2x+1,2y,2y+1,1}$ |
| | | 10 | 11 |
| | | $W^{(2)}_{2x+1,2x+2,2y+1,2y,0}$ | $W^{(2)}_{2x+1,2x+2,2y+1,2y,1}$ |
| $i_{1,1}$ | $i_{1,2}$ | $i_2$ | |
| | | 12 | 13 |
| $0,1,\ldots,\dfrac{N_1O_1}{2}-1$ | $0,1,\ldots,\dfrac{N_2O_2}{2}-1$ | $W^{(2)}_{2x,2x+3,2y,2y+1,0}$ | $W^{(2)}_{2x,2x+3,2y,2y+1,1}$ |
| | | 14 | 15 |
| | | $W^{(2)}_{2x+1,2x+3,2y+1,2y+1,0}$ | $W^{(2)}_{2x+1,2x+3,2y+1,2y+1,1}$ |

wobei $x = i_{1,1}$, $y = i_{1,2}$, $W^{(2)}_{l,l',m,m',n} = \dfrac{1}{\sqrt{2P}}\begin{bmatrix} v_{l,m} & v_{l',m'} \\ \varphi_n v_{l,m} & -\varphi_n v_{l',m'} \end{bmatrix}$ wenn $N_1 \geq N_2$

und

$x = i_{1,2}$, $y = i_{1,1}$, $W^{(2)}_{l,l',m,m',n} = \dfrac{1}{\sqrt{2P}}\begin{bmatrix} v_{m,l} & v_{m',l'} \\ \varphi_n v_{m,l} & -\varphi_n v_{m',l'} \end{bmatrix}$, wenn $N_1 < N_2$

; und

Bestimmen, ob das Vorcodierer-Codebuch das Rang-2-Codebuch ist und die Codebuchkonfiguration eine Codebuchkonfiguration 4 anzeigt, wobei der Vorcodierer einer folgenden Codebuchtabelle entspricht:

| $i_{1,1}$ | $i_{1,2}$ | $i_2$ | |
|---|---|---|---|
| | | 0 | 1 |
| $0,1,...,\dfrac{N_1O_1}{2}-1$ | $0,1,...,\dfrac{N_2O_2}{2}-1$ | $W^{(2)}_{2x,2x,2y,2y,0}$ | $W^{(2)}_{2x,2x,2y,2y,1}$ |
| | | 2 | 3 |
| | | $W^{(2)}_{2x+1,2x+1,2y,2y,0}$ | $W^{(2)}_{2x+1,2x+1,2y,2y,1}$ |
| $i_{1,1}$ | $i_{1,2}$ | $i_2$ | |
| | | 4 | 5 |
| $0,1,...,\dfrac{N_1O_1}{2}-1$ | $0,1,...,\dfrac{N_2O_2}{2}-1$ | $W^{(2)}_{2x+2,2x+2,2y,2y,0}$ | $W^{(2)}_{2x+2,2x+2,2y,2y,1}$ |
| | | 6 | 7 |
| | | $W^{(2)}_{2x+3,2x+3,2y,2y,0}$ | $W^{(2)}_{2x+3,2x+3,2y,2y,1}$ |
| $i_{1,1}$ | $i_{1,2}$ | $i_2$ | |
| | | 8 | 9 |
| $0,1,...,\dfrac{N_1O_1}{2}-1$ | $0,1,...,\dfrac{N_2O_2}{2}-1$ | $W^{(2)}_{2x,2x+1,2y,2y,0}$ | $W^{(2)}_{2x,2x+1,2y,2y,1}$ |
| | | 10 | 11 |
| | | $W^{(2)}_{2x+1,2x+2,2y,2y,0}$ | $W^{(2)}_{2x+1,2x+2,2y,2y,1}$ |
| $i_{1,1}$ | $i_{1,2}$ | $i_2$ | |
| | | 12 | 13 |
| $0,1,...,\dfrac{N_1O_1}{2}-1$ | $0,1,...,\dfrac{N_2O_2}{2}-1$ | $W^{(2)}_{2x,2x+3,2y,2y,0}$ | $W^{(2)}_{2x,2x+3,2y,2y,1}$ |
| | | 14 | 15 |
| | | $W^{(2)}_{2x+1,2x+3,2y,2y,0}$ | $W^{(2)}_{2x+1,2x+3,2y,2y,1}$ |

$$\text{wobei}\quad x=i_{1,1},\quad y=i_{1,2},\quad W^{(2)}_{l,l',m,m',n}=\frac{1}{\sqrt{2P}}\begin{bmatrix} v_{l,m} & v_{l',m'} \\ \varphi_n v_{l,m} & -\varphi_n v_{l',m'} \end{bmatrix}\quad \text{wenn } N_1\geq N_2 \quad \text{und}$$

$$x=i_{1,2},\quad y=i_{1,1},\quad W^{(2)}_{l,l',m,m',n}=\frac{1}{\sqrt{2P}}\begin{bmatrix} v_{m,l} & v_{m',l'} \\ \varphi_n v_{m,l} & -\varphi_n v_{m',l'} \end{bmatrix},\quad \text{wenn } N_1 < N_2$$

wobei $W^{(2)}_{l,l',m,m',n}$ einem Vorcodierer des Rang-2-Codebuchs im Fall einer Kombination von (l, l', m, m', n) entspricht, die durch eine Kombination von ($i_{1,1}$, $i_{1,2}$, $i_2$) bestimmt wird,
wobei P einer Anzahl von Antennenports eines Antennenarrays entspricht.

**10.** UE nach Anspruch 1,

wobei der erste Codebuchindex ($i_{1,1}$) und der zweite Codebuchindex ($i_{1,2}$) einem ersten PMI-Paar zugeordnet sind; und

wobei der dritte Codebuchindex ($i_2$) einem zweiten PMI zugeordnet ist,

wobei das erste PMI-Paar eine Strahlgruppe anzeigt, und

wobei der zweite PMI einen Strahl in der Strahlgruppe anzeigt, wobei der Vorcodierer dem Strahl entspricht.

11. Basisstation in einem drahtlosen Kommunikationssystem, wobei die Basisstation Folgendes umfasst:

einen Transceiver; und

mindestens einen Prozessor, der betriebsfähig mit dem Transceiver gekoppelt und konfiguriert ist zum:

Übertragen von Konfigurationsinformationen an ein Benutzergerät, UE, um Codebuchparameter anzuzeigen, die eine erste Anzahl von Antennenports, $N_1$, für eine erste Dimension, eine zweite Anzahl von Antennenports, $N_2$, für eine zweite Dimension, einen ersten Oversampling-Faktor, $O_1$, für die erste Dimension, einen zweiten Oversampling-Faktor, $O_2$, für die zweite Dimension und eine Codebuchkonfiguration enthalten; und

Empfangen von Kanalzustandsinformationen, CSI, die mindestens einen Vorcodierungsmatrixanzeiger, PMI enthalten, von dem UE, wobei der mindestens eine PMI einen ersten Codebuchindex ($i_{1,1}$), einen zweiten Codebuchindex ($i_{1,2}$), und einen dritten Codebuchindex ($i_2$) enthält,

wobei der mindestens eine PMI basierend auf Codebuchindizes bestimmt wird, die einen Vorcodierer eines Vorcodierer-Codebuchs anzeigen,

wobei das Vorcodierer-Codebuch basierend auf den Codebuchparametern bestimmt wird und **dadurch gekennzeichnet ist, dass**,

wenn $N_1$ größer als oder gleich $N_2$ ist, der Vorcodierer eine erste Matrix umfasst, in der ein erster Vektor gemäß einer ersten Variablen bestimmt wird und ein zweiter Vektor gemäß einer zweiten Variablen bestimmt wird, wobei die erste Variable dem ersten Codebuchindex ($i_{1,1}$) unter Verwendung einer ersten Funktion zugeordnet ist und die zweite Variable dem zweiten Codebuchindex ($i_{1,2}$) unter Verwendung einer zweiten Funktion zugeordnet ist, und

wenn $N_1$ kleiner als $N_2$ ist, der Vorcodierer eine zweite Matrix umfasst, in der der erste Vektor auf die zweite Variable angewendet wird und der zweite Vektor auf die erste Variable angewendet wird, wobei die erste Variable dem zweiten Codebuchindex ($i_{1,2}$) unter Verwendung der ersten Funktion zugeordnet ist und die zweite Variable dem ersten Codebuchindex ($i_{1,1}$) unter Verwendung der zweiten Funktion zugeordnet ist,

wobei der erste Vektor ein diskreter Fourier-Transformations(DFT)-Vektor ist, der einem Strahl für die erste Dimension zugeordnet ist, und der zweite Vektor ein DFT-Vektor ist, der einem Strahl für die zweite Dimension zugeordnet ist, und

wobei die erste Matrix und die zweite Matrix das Kronecker-Produkt des ersten Vektors und des zweiten Vektors enthalten.

12. Basisstation nach Anspruch 11, wobei der mindestens eine Prozessor ferner konfiguriert ist zum:

Bestimmen, ob das Vorcodierer-Codebuch ein Rang-1-Codebuch ist und die Codebuchkonfiguration eine Codebuchkonfiguration 3 anzeigt, wobei der Vorcodierer einer folgenden Codebuchtabelle entspricht:

| $i_{1,1}$ | $i_{1,2}$ | $i_2$ | | | |
|---|---|---|---|---|---|
| | | 0 | 1 | 2 | 3 |
| $0,1,\ldots,\dfrac{N_1O_1}{2}-1$ | $0,1,\ldots,\dfrac{N_2O_2}{2}-1$ | $W^{(1)}_{2x,2y,0}$ | $W^{(1)}_{2x,2y,1}$ | $W^{(1)}_{2x,2y,2}$ | $W^{(1)}_{2x,2y,3}$ |
| $i_{1,1}$ | $i_{1,2}$ | $i_2$ | | | |
| | | 4 | 5 | 6 | 7 |
| $0,1,\ldots,\dfrac{N_1O_1}{2}-1$ | $0,1,\ldots,\dfrac{N_2O_2}{2}-1$ | $W^{(1)}_{2x+2,2y,0}$ | $W^{(1)}_{2x+2,2y,1}$ | $W^{(1)}_{2x+2,2y,2}$ | $W^{(1)}_{2x+2,2y,3}$ |
| $i_{1,1}$ | $i_{1,2}$ | $i_2$ | | | |
| | | 8 | 9 | 10 | 11 |
| $0,1,\ldots,\dfrac{N_1O_1}{2}-1$ | $0,1,\ldots,\dfrac{N_2O_2}{2}-1$ | $W^{(1)}_{2x+1,2y+1,0}$ | $W^{(1)}_{2x+1,2y+1,1}$ | $W^{(1)}_{2x+1,2y+1,2}$ | $W^{(1)}_{2x+1,2y+1,3}$ |
| $i_{1,1}$ | $i_{1,2}$ | $i_2$ | | | |
| | | 12 | 13 | 14 | 15 |
| $0,1,\ldots,\dfrac{N_1O_1}{2}-1$ | $0,1,\ldots,\dfrac{N_2O_2}{2}-1$ | $W^{(1)}_{2x+3,2y+1,0}$ | $W^{(1)}_{2x+3,2y+1,1}$ | $W^{(1)}_{2x+3,2y+1,2}$ | $W^{(1)}_{2x+3,2y+1,3}$ |

wobei $\quad x=i_{1,1}, \quad y=i_{1,2}, \quad W^{(1)}_{l,m,n}=\dfrac{1}{\sqrt{P}}\begin{bmatrix} v_{l,m} \\ \varphi_n v_{l,m} \end{bmatrix}$, wenn $N_1 \geq N_2$

$\qquad x=i_{1,2}, \quad y=i_{1,1}, \quad W^{(1)}_{l,m,n}=\dfrac{1}{\sqrt{P}}\begin{bmatrix} v_{m,l} \\ \varphi_n v_{m,l} \end{bmatrix}$, wenn $N_1 < N_2$

;
Bestimmen, ob das Vorcodierer-Codebuch das Rang-1-Codebuch ist und die Codebuchkonfiguration eine Codebuchkonfiguration 4 anzeigt, wobei der Vorcodierer einer folgenden Codebuchtabelle entspricht:

| $i_{1,1}$ | $i_{1,2}$ | $i_2$ | | | |
| --- | --- | --- | --- | --- | --- |
| | | 0 | 1 | 2 | 3 |
| $0,1,\ldots,\dfrac{N_1 O_1}{2}-1$ | $0,1,\ldots,\dfrac{N_2 O_2}{2}-1$ | $W^{(1)}_{2x,2y,0}$ | $W^{(1)}_{2x,2y,1}$ | $W^{(1)}_{2x,2y,2}$ | $W^{(1)}_{2x,2y,3}$ |

| $i_{1,1}$ | $i_{1,2}$ | $i_2$ | | | |
| --- | --- | --- | --- | --- | --- |
| | | 4 | 5 | 6 | 7 |
| $0,1,\ldots,\dfrac{N_1 O_1}{2}-1$ | $0,1,\ldots,\dfrac{N_2 O_2}{2}-1$ | $W^{(1)}_{2x+1,2y,0}$ | $W^{(1)}_{2x+1,2y,1}$ | $W^{(1)}_{2x+1,2y,2}$ | $W^{(1)}_{2x+1,2y,3}$ |

| $i_{1,1}$ | $i_{1,2}$ | $i_2$ | | | |
| --- | --- | --- | --- | --- | --- |
| | | 8 | 9 | 10 | 11 |
| $0,1,\ldots,\dfrac{N_1 O_1}{2}-1$ | $0,1,\ldots,\dfrac{N_2 O_2}{2}-1$ | $W^{(1)}_{2x+2,2y,0}$ | $W^{(1)}_{2x+2,2y,1}$ | $W^{(1)}_{2x+2,2y,2}$ | $W^{(1)}_{2x+2,2y,3}$ |

| $i_{1,1}$ | $i_{1,2}$ | $i_2$ | | | |
| --- | --- | --- | --- | --- | --- |
| | | 12 | 13 | 14 | 15 |
| $0,1,\ldots,\dfrac{N_1 O_1}{2}-1$ | $0,1,\ldots,\dfrac{N_2 O_2}{2}-1$ | $W^{(1)}_{2x+3,2y,0}$ | $W^{(1)}_{2x+3,2y,1}$ | $W^{(1)}_{2x+3,2y,2}$ | $W^{(1)}_{2x+3,2y,3}$ |

$$\text{wobei} \quad x=i_{1,1}, \quad y=i_{1,2}, \quad W^{(1)}_{l,m,n}=\frac{1}{\sqrt{P}}\begin{bmatrix} v_{l,m} \\ \varphi_n v_{l,m} \end{bmatrix}, \quad \text{wenn} \quad N_1 \geq N_2$$

$$x=i_{1,2}, \quad y=i_{1,1}, \quad W^{(1)}_{l,m,n}=\frac{1}{\sqrt{P}}\begin{bmatrix} v_{m,l} \\ \varphi_n v_{m,l} \end{bmatrix}, \quad \text{wenn} \quad N_1 < N_2$$

;

Bestimmen, ob das Vorcodierer-Codebuch ein Rang-2-Codebuch ist und die Codebuchkonfiguration eine Codebuchkonfiguration 3 anzeigt, wobei der Vorcodierer einer folgenden Codebuchtabelle entspricht:

| $i_{1,1}$ | $i_{1,2}$ | $i_2$ | |
| --- | --- | --- | --- |
| | | 0 | 1 |

| $0,1,\ldots,\dfrac{N_1 O_1}{2}-1$ | $0,1,\ldots,\dfrac{N_2 O_2}{2}-1$ | $W^{(2)}_{2x,2x,2y,2y,0}$ | $W^{(2)}_{2x,2x,2y,2y,1}$ |
|---|---|---|---|
| | | 2 | 3 |
| | | $W^{(2)}_{2x+1,2x+1,2y+1,2y+1,0}$ | $W^{(2)}_{2x+1,2x+1,2y+1,2y+1,1}$ |
| $i_{1,1}$ | $i_{1,2}$ | $i_2$ | |
| | | 4 | 5 |
| $0,1,\ldots,\dfrac{N_1 O_1}{2}-1$ | $0,1,\ldots,\dfrac{N_2 O_2}{2}-1$ | $W^{(2)}_{2x+2,2x+2,2y,2y,0}$ | $W^{(2)}_{2x+2,2x+2,2y,2y,1}$ |
| | | 6 | 7 |
| | | $W^{(2)}_{2x+3,2x+3,2y+1,2y+1,0}$ | $W^{(2)}_{2x+3,2x+3,2y+1,2y+1,1}$ |
| $i_{1,1}$ | $i_{1,2}$ | $i_2$ | |
| | | 8 | 9 |
| $0,1,\ldots,\dfrac{N_1 O_1}{2}-1$ | $0,1,\ldots,\dfrac{N_2 O_2}{2}-1$ | $W^{(2)}_{2x,2x+1,2y,2y+1,0}$ | $W^{(2)}_{2x,2x+1,2y,2y+1,1}$ |
| | | 10 | 11 |
| | | $W^{(2)}_{2x+1,2x+2,2y+1,2y,0}$ | $W^{(2)}_{2x+1,2x+2,2y+1,2y,1}$ |
| $i_{1,1}$ | $i_{1,2}$ | $i_2$ | |
| | | 12 | 13 |
| $0,1,\ldots,\dfrac{N_1 O_1}{2}-1$ | $0,1,\ldots,\dfrac{N_2 O_2}{2}-1$ | $W^{(2)}_{2x,2x+3,2y,2y+1,0}$ | $W^{(2)}_{2x,2x+3,2y,2y+1,1}$ |
| | | 14 | 15 |
| | | $W^{(2)}_{2x+1,2x+3,2y+1,2y,0}$ | $W^{(2)}_{2x+1,2x+3,2y+1,2y,1}$ |

wobei $x=i_{1,1}$, $y=i_{1,2}$, $W^{(2)}_{l,l',m,m',n}=\dfrac{1}{\sqrt{2P}}\begin{bmatrix} v_{l,m} & v_{l',m'} \\ \varphi_n v_{l,m} & -\varphi_n v_{l',m'} \end{bmatrix}$ wenn $N_1 \geq N_2$

und

$x=i_{1,2}$, $y=i_{1,1}$, $W^{(2)}_{l,l',m,m',n}=\dfrac{1}{\sqrt{2P}}\begin{bmatrix} v_{m,l} & v_{m',l'} \\ \varphi_n v_{m,l} & -\varphi_n v_{m',l'} \end{bmatrix}$, wenn $N_1 < N_2$

; und

Bestimmen, ob das Vorcodierer-Codebuch das Rang-2-Codebuch ist und die Codebuchkonfiguration eine Codebuchkonfiguration 4 anzeigt, wobei der Vorcodierer einer folgenden Codebuchtabelle entspricht:

| $i_{1,1}$ | $i_{1,2}$ | $i_2$ | |
|---|---|---|---|
| | | 0 | 1 |
| $0,1,...,\dfrac{N_1O_1}{2}-1$ | $0,1,...,\dfrac{N_2O_2}{2}-1$ | $W^{(2)}_{2x,2x,2y,2y,0}$ | $W^{(2)}_{2x,2x,2y,2y,1}$ |
| | | 2 | 3 |
| | | $W^{(2)}_{2x+1,2x+1,2y,2y,0}$ | $W^{(2)}_{2x+1,2x+1,2y,2y,1}$ |
| $i_{1,1}$ | $i_{1,2}$ | $i_2$ | |
| | | 4 | 5 |
| $0,1,...,\dfrac{N_1O_1}{2}-1$ | $0,1,...,\dfrac{N_2O_2}{2}-1$ | $W^{(2)}_{2x+2,2x+2,2y,2y,0}$ | $W^{(2)}_{2x+2,2x+2,2y,2y,1}$ |
| | | 6 | 7 |
| | | $W^{(2)}_{2x+3,2x+3,2y,2y,0}$ | $W^{(2)}_{2x+3,2x+3,2y,2y,1}$ |
| $i_{1,1}$ | $i_{1,2}$ | $i_2$ | |
| | | 8 | 9 |
| $0,1,...,\dfrac{N_1O_1}{2}-1$ | $0,1,...,\dfrac{N_2O_2}{2}-1$ | $W^{(2)}_{2x,2x+1,2y,2y,0}$ | $W^{(2)}_{2x,2x+1,2y,2y,1}$ |
| | | 10 | 11 |
| | | $W^{(2)}_{2x+1,2x+2,2y,2y,0}$ | $W^{(2)}_{2x+1,2x+2,2y,2y,1}$ |
| $i_{1,1}$ | $i_{1,2}$ | $i_2$ | |
| | | 12 | 13 |
| $0,1,...,\dfrac{N_1O_1}{2}-1$ | $0,1,...,\dfrac{N_2O_2}{2}-1$ | $W^{(2)}_{2x,2x+3,2y,2y,0}$ | $W^{(2)}_{2x,2x+3,2y,2y,1}$ |
| | | 14 | 15 |
| | | $W^{(2)}_{2x+1,2x+3,2y,2y,0}$ | $W^{(2)}_{2x+1,2x+3,2y,2y,1}$ |

$$\text{wobei}\quad x=i_{1,1},\quad y=i_{1,2},\quad W^{(2)}_{l,l',m,m',n}=\frac{1}{\sqrt{2P}}\begin{bmatrix} v_{l,m} & v_{l',m'} \\ \varphi_n v_{l,m} & -\varphi_n v_{l',m'} \end{bmatrix}\quad \text{wenn } N_1 \geq N_2 \text{ und}$$

$$x=i_{1,2},\quad y=i_{1,1},\quad W^{(2)}_{l,l',m,m',n}=\frac{1}{\sqrt{2P}}\begin{bmatrix} v_{m,l} & v_{m',l'} \\ \varphi_n v_{m,l} & -\varphi_n v_{m',l'} \end{bmatrix},\quad \text{wenn } N_1 < N_2$$

wobei $W^{(1)}_{l,m,n}$ einem Vorcodierer des Rang-1-Codebuchs im Fall einer Kombination von (l, m, n) entspricht, die durch eine Kombination von ($i_{1,1}$, $i_{1,2}$, $i_2$) bestimmt wird,

wobei $W^{(2)}_{l,l',m,m',n}$ einem Vorcodierer des Rang-2-Codebuchs im Fall einer Kombination von (1,1', m, m', n) entspricht, die durch die Kombination von (i1,1, $i_{1,2}$, i2) bestimmt wird, und

wobei P einer Anzahl von Antennenports eines Antennenarrays entspricht.

13. Verfahren, das von einem Benutzergerät, UE, in einem drahtlosen Kommunikationssystem betrieben wird, wobei das Verfahren die Schritte umfasst, die der Konfiguration des Prozessors des UE nach einem der Ansprüche 1 bis 10 entsprechen.

**14.** Verfahren, das von einer Basisstation in einem drahtlosen Kommunikationssystem betrieben wird, wobei das Verfahren die Schritte umfasst, die der Konfiguration des Prozessors der Basisstation nach einem der Ansprüche 11 bis 12 entsprechen.

**Revendications**

**1.** Équipement d'utilisateur, UE, dans un système de communication sans fil, l'UE comprenant :

un émetteur-récepteur ; et
au moins un processeur opérationnel couplé à l'émetteur-récepteur, et configuré pour :

recevoir, à partir d'une station de base, des informations de configuration pour indiquer des paramètres de livre de codes qui comprennent un premier nombre de ports d'antenne, $N_1$, pour une première dimension, un deuxième nombre de ports d'antenne, $N_2$, pour une deuxième dimension, un premier facteur de suréchantillonnage, $O_1$, pour la première dimension, un deuxième facteur de suréchantillonnage, $O_2$, pour la deuxième dimension, et une configuration de livre de codes ; et

déterminer un livre de codes de précodeur sur la base des paramètres de livre de codes ;
déterminer au moins un indicateur de matrice de précodage, PMI, indiquant un précodeur du livre de codes de précodeur, où l'au moins un PMI comprend un premier indice de livre de codes ($i_{1,1}$), un deuxième indice de livre de codes ($i_{1,2}$), et un troisième indice de livre de codes ($i_2$) ; et

transmettre, à la station de base, des informations d'état de canal, CSI, comprenant l'au moins un PMI, **caractérisé en ce que**

si le $N_1$ est supérieur ou égal au $N_2$, le précodeur comprend une première matrice dans laquelle un premier vecteur est déterminé selon une première variable et un deuxième vecteur est déterminé selon une deuxième variable, la première variable est associée au premier indice de livre de codes ($i_{1,1}$) en utilisant une première fonction et la deuxième variable est associée au deuxième indice de livre de codes ($i_{1,2}$) en utilisant une deuxième fonction, et

si le $N_1$ est inférieur au $N_2$, le précodeur comprend une deuxième matrice dans laquelle le premier vecteur est déterminé selon la deuxième variable et le deuxième vecteur est déterminé selon la première variable, la première variable est associée au deuxième indice de livre de codes ($i_{1,2}$) en utilisant la première fonction et la deuxième variable est associée au premier indice de livre de codes ($i_{1,1}$) en utilisant la deuxième fonction,

où le premier vecteur est un vecteur de transformée de Fourier discrète, DFT, associé à un faisceau pour la première dimension, le deuxième vecteur est un vecteur DFT associé à un faisceau pour la deuxième dimension, et

où la première matrice et la deuxième matrice comprennent le produit de Kronecker du premier vecteur et du deuxième vecteur.

**2.** UE selon la revendication 1, où l'au moins un processeur est, pour déterminer le livre de codes de précodeur, configuré pour :

identifier la configuration de livre de codes ;
déterminer si le $N_1$ est inférieur au $N_2$ ou non, en réponse à l'identification selon laquelle la configuration de livre de codes identifiée indique une configuration de livre de codes 3 ou une configuration de livre de codes 4 ; et
déterminer le livre de codes de précodeur sur la base de la première matrice ou de la deuxième matrice,
où le précodeur est indiqué par le premier indice de livre de codes ($i_{1,1}$), le deuxième indice de livre de codes ($i_{1,2}$), et le troisième indice de livre de codes ($i_2$).

**3.** UE selon la revendication 1, où l'au moins un processeur est en outre configuré pour :

identifier une première variable (x) et une deuxième variable (y) sur la base du $N_1$ et du $N_2$ ;
où la première variable (x) et la deuxième variable (y) correspondent à:
$x = i_{1,d1}$ et $y = i_{1,d2}$,
où les ($d_1$, $d_2$) sont définis comme :

$(d_1, d_2) = (1, 2)$ lorsque le $N_1$ est supérieur ou égal au $N_2$ ; et
$(d_1, d_2) = (2, 1)$ lorsque le $N_1$ est inférieur au $N_2$.

4. UE selon la revendication 3, où le précodeur est déterminé sur la base d'une première expression PMI et la deuxième matrice est déterminée sur la base d'une deuxième expression PMI, et
où la deuxième expression PMI correspond à une fonction obtenue en permutant une variable pour la première dimension de la première expression PMI et une variable pour la deuxième dimension de la première expression PMI.

5. UE selon la revendication 1,

où le premier indice de livre de codes $(i_{1,1})$ est associé à un indice $(m_1)$ du premier vecteur,
où le deuxième indice de livre de codes $(i_{1,2})$ est associé à un indice $(m_2)$ du deuxième vecteur, et
où le précodeur est déterminé sur la base de l'équation suivante:

$$w_{m_1,m_2} = \begin{bmatrix} u_{m_2} & e^{j\frac{2\pi m_1}{O_1 N_1}} u_{m_2} & \dots & e^{j\frac{2\pi m_1 (N_1-1)}{O_1 N_1}} u_{m_2} \end{bmatrix}^T$$

où

$$u_{m_2} = \begin{bmatrix} 1 & e^{j\frac{2\pi m_2}{O_2 N_2}} & \dots & e^{j\frac{2\pi m_2 (N_2-1)}{O_2 N_2}} \end{bmatrix} .$$

6. UE selon la revendication 1,

où le premier indice de livre de codes $(i_{1,1})$ est déterminé sur la base du $N_1$ et du $O_1$,
où le deuxième indice de livre de codes $(i_{1,2})$ est déterminé sur la base du $N_2$ et du $O_2$, et
où les informations de configuration sont transmises via une signalisation de contrôle de ressources radio, RRC.

7. UE selon la revendication 4,

où la première expression PMI correspond à :

$$W_{m_1,m_2,n}^{(1)} = \frac{1}{\sqrt{Q}} \begin{bmatrix} w_{m_1,m_2} \\ \varphi_n w_{m_1,m_2} \end{bmatrix}$$

dans le cas d'un rang 1, ; et

$$W_{m_1,m_2,m_1',m_2',n}^{(2)} = \frac{1}{\sqrt{2Q}} \begin{bmatrix} w_{m_1,m_2} & w_{m_1',m_2'} \\ \varphi_n w_{m_1,m_2} & -\varphi_n w_{m_1',m_2'} \end{bmatrix}$$

dans le cas d'un rang 2, ,

où la deuxième expression PMI correspond à :

$$W_{m_1,m_2,n}^{(1)} = \frac{1}{\sqrt{Q}} \begin{bmatrix} w_{m_2,m_1} \\ \varphi_n w_{m_2,m_1} \end{bmatrix}$$

dans le cas d'un rang 1, ; et

$$W_{m_1,m_2,m_1',m_2',n}^{(2)} = \frac{1}{\sqrt{2Q}} \begin{bmatrix} w_{m_2,m_1} & w_{m_2',m_1'} \\ \varphi_n w_{m_2,m_1} & -\varphi_n w_{m_2',m_1'} \end{bmatrix}$$

dans le cas d'un rang 2, ,

où $Q = 2N_1 N_2$ et $\phi_n = e^{j\pi n/2}$,

où le $W^{(1)}_{m_1,m_2,n}$ correspond à un précodeur du livre de codes de rang 1 dans le cas d'une combinaison de $(m_1, m_2, n)$ déterminée par une combinaison de $(i_{1,1}, i_{1,2}, i_2)$,

où le $W^{(2)}_{m_1,m_2,m'_1,m'_2,n}$ correspond à un précodeur du livre de codes de rang 2 dans le cas d'une combinaison de $(m_1, m_2, m'_1, m'_2, n)$ déterminée par la combinaison de $(i_{1,1}, i_{1,2}, i_2)$,

où le Q correspond à un nombre de ports d'antenne d'un réseau d'antennes,

**8.** UE selon la revendication 1, où l'au moins un processeur est, pour déterminer le PMI, configuré pour :

déterminer, si le livre de codes de précodeur est un livre de codes de rang 1 et si la configuration de livre de codes indique une configuration de livre de codes 3, le précodeur selon la table de livre de codes suivante :

| $i_{1,1}$ | $i_{1,2}$ | $i_2$ | | | |
|---|---|---|---|---|---|
| | | 0 | 1 | 2 | 3 |
| $0,1,\ldots,\frac{N_1 O_1}{2}-1$ | $0,1,\ldots,\frac{N_2 O_2}{2}-1$ | $W^{(1)}_{2x,2y,0}$ | $W^{(1)}_{2x,2y,1}$ | $W^{(1)}_{2x,2y,2}$ | $W^{(1)}_{2x,2y,3}$ |
| $i_{1,1}$ | $i_{1,2}$ | $i_2$ | | | |
| | | 4 | 5 | 6 | 7 |
| $0,1,\ldots,\frac{N_1 O_1}{2}-1$ | $0,1,\ldots,\frac{N_2 O_2}{2}-1$ | $W^{(1)}_{2x+2,2y,0}$ | $W^{(1)}_{2x+2,2y,1}$ | $W^{(1)}_{2x+2,2y,2}$ | $W^{(1)}_{2x+2,2y,3}$ |
| $i_{1,1}$ | $i_{1,2}$ | $i_2$ | | | |
| | | 8 | 9 | 10 | 11 |
| $0,1,\ldots,\frac{N_1 O_1}{2}-1$ | $0,1,\ldots,\frac{N_2 O_2}{2}-1$ | $W^{(1)}_{2x+1,2y+1,0}$ | $W^{(1)}_{2x+1,2y+1,1}$ | $W^{(1)}_{2x+1,2y+1,2}$ | $W^{(1)}_{2x+1,2y+1,3}$ |
| $i_{1,1}$ | $i_{1,2}$ | $i_2$ | | | |
| | | 12 | 13 | 14 | 15 |
| $0,1,\ldots,\frac{N_1 O_1}{2}-1$ | $0,1,\ldots,\frac{N_2 O_2}{2}-1$ | $W^{(1)}_{2x+3,2y+1,0}$ | $W^{(1)}_{2x+3,2y+1,1}$ | $W^{(1)}_{2x+3,2y+1,2}$ | $W^{(1)}_{2x+3,2y+1,3}$ |

$$\text{où}\quad x=i_{1,1},\quad y=i_{1,2},\quad W^{(1)}_{l,m,n}=\frac{1}{\sqrt{P}}\begin{bmatrix}v_{l,m}\\\varphi_n v_{l,m}\end{bmatrix},\quad \text{si}\quad N_1 \geq N_2$$

$$x=i_{1,2},\quad y=i_{1,1},\quad W^{(1)}_{l,m,n}=\frac{1}{\sqrt{P}}\begin{bmatrix}v_{m,l}\\\varphi_n v_{m,l}\end{bmatrix},\quad \text{si}\quad N_1 < N_2$$

; et
déterminer, si le livre de codes de précodeur est le livre de codes de rang 1 et si la configuration de livre de codes indique une configuration de livre de codes 4, le précodeur selon la table de livre de codes suivante :

| $i_{1,1}$ | $i_{1,2}$ | $i_2$ | | | |
| --- | --- | --- | --- | --- | --- |
| | | 0 | 1 | 2 | 3 |
| $0,1,\ldots,\dfrac{N_1 O_1}{2}-1$ | $0,1,\ldots,\dfrac{N_2 O_2}{2}-1$ | $W^{(1)}_{2x,2y,0}$ | $W^{(1)}_{2x,2y,1}$ | $W^{(1)}_{2x,2y,2}$ | $W^{(1)}_{2x,2y,3}$ |

| $i_{1,1}$ | $i_{1,2}$ | $i_2$ | | | |
| --- | --- | --- | --- | --- | --- |
| | | 4 | 5 | 6 | 7 |
| $0,1,\ldots,\dfrac{N_1 O_1}{2}-1$ | $0,1,\ldots,\dfrac{N_2 O_2}{2}-1$ | $W^{(1)}_{2x+1,2y,0}$ | $W^{(1)}_{2x+1,2y,1}$ | $W^{(1)}_{2x+1,2y,2}$ | $W^{(1)}_{2x+1,2y,3}$ |

| $i_{1,1}$ | $i_{1,2}$ | $i_2$ | | | |
| --- | --- | --- | --- | --- | --- |
| | | 8 | 9 | 10 | 11 |
| $0,1,\ldots,\dfrac{N_1 O_1}{2}-1$ | $0,1,\ldots,\dfrac{N_2 O_2}{2}-1$ | $W^{(1)}_{2x+2,2y,0}$ | $W^{(1)}_{2x+2,2y,1}$ | $W^{(1)}_{2x+2,2y,2}$ | $W^{(1)}_{2x+2,2y,3}$ |

| $i_{1,1}$ | $i_{1,2}$ | $i_2$ | | | |
| --- | --- | --- | --- | --- | --- |
| | | 12 | 13 | 14 | 15 |
| $0,1,\ldots,\dfrac{N_1 O_1}{2}-1$ | $0,1,\ldots,\dfrac{N_2 O_2}{2}-1$ | $W^{(1)}_{2x+3,2y,0}$ | $W^{(1)}_{2x+3,2y,1}$ | $W^{(1)}_{2x+3,2y,2}$ | $W^{(1)}_{2x+3,2y,3}$ |

$$\text{où} \quad x=i_{1,1}, \quad y=i_{1,2}, \quad W^{(1)}_{l,m,n}=\frac{1}{\sqrt{P}}\begin{bmatrix} v_{l,m} \\ \varphi_n v_{l,m} \end{bmatrix}, \quad \text{si} \quad N_1 \geq N_2$$

$$x=i_{1,2}, \quad y=i_{1,1}, \quad W^{(1)}_{l,m,n}=\frac{1}{\sqrt{P}}\begin{bmatrix} v_{m,l} \\ \varphi_n v_{m,l} \end{bmatrix}, \quad \text{si} \quad N_1 < N_2$$

où le $W^{(1)}_{l,m,n}$ correspond à un précodeur du livre de codes de rang 1 dans le cas d'une combinaison de (l, m, n) déterminée par une combinaison de ($i_{1,1}$, $i_{1,2}$, $i_2$), et
où le P correspond à un nombre de ports d'antenne d'un réseau d'antennes.

9. UE selon la revendication 1, où l'au moins un processeur est, pour déterminer le PMI, configuré pour

déterminer, si le livre de codes de précodeur est un livre de codes de rang 2 et si la configuration de livre de codes indique une configuration de livre de codes 3, le précodeur selon la table de livre de codes suivante :

| $i_{1,1}$ | $i_{1,2}$ | $i_2$ | |
|---|---|---|---|
| | | 0 | 1 |
| $0,1,...,\dfrac{N_1O_1}{2}-1$ | $0,1,...,\dfrac{N_2O_2}{2}-1$ | $W^{(2)}_{2x,2x,2y,2y,0}$ | $W^{(2)}_{2x,2x,2y,2y,1}$ |
| | | 2 | 3 |
| | | $W^{(2)}_{2x+1,2x+1,2y+1,2y+1,0}$ | $W^{(2)}_{2x+1,2x+1,2y+1,2y+1,1}$ |

| $i_{1,1}$ | $i_{1,2}$ | $i_2$ | |
|---|---|---|---|
| | | 4 | 5 |
| $0,1,...,\dfrac{N_1O_1}{2}-1$ | $0,1,...,\dfrac{N_2O_2}{2}-1$ | $W^{(2)}_{2x+2,2x+2,2y,2y,0}$ | $W^{(2)}_{2x+2,2x+2,2y,2y,1}$ |
| | | 6 | 7 |
| | | $W^{(2)}_{2x+3,2x+3,2y+1,2y+1,0}$ | $W^{(2)}_{2x+3,2x+3,2y+1,2y+1,1}$ |

| $i_{1,1}$ | $i_{1,2}$ | $i_2$ | |
|---|---|---|---|
| | | 8 | 9 |
| $0,1,...,\dfrac{N_1O_1}{2}-1$ | $0,1,...,\dfrac{N_2O_2}{2}-1$ | $W^{(2)}_{2x,2x+1,2y,2y+1,0}$ | $W^{(2)}_{2x,2x+1,2y,2y+1,1}$ |
| | | 10 | 11 |
| | | $W^{(2)}_{2x+1,2x+2,2y+1,2y,0}$ | $W^{(2)}_{2x+1,2x+2,2y+1,2y,1}$ |

| $i_{1,1}$ | $i_{1,2}$ | $i_2$ | |
|---|---|---|---|
| | | 12 | 13 |
| $0,1,...,\dfrac{N_1O_1}{2}-1$ | $0,1,...,\dfrac{N_2O_2}{2}-1$ | $W^{(2)}_{2x,2x+3,2y,2y+1,0}$ | $W^{(2)}_{2x,2x+3,2y,2y+1,1}$ |
| | | 14 | 15 |
| | | $W^{(2)}_{2x+1,2x+3,2y+1,2y+1,0}$ | $W^{(2)}_{2x+1,2x+3,2y+1,2y+1,1}$ |

où $\quad x = i_{1,1}, \quad y = i_{1,2}, \quad W^{(2)}_{l,l',m,m',n} = \dfrac{1}{\sqrt{2P}}\begin{bmatrix} v_{l,m} & v_{l',m'} \\ \varphi_n v_{l,m} & -\varphi_n v_{l',m'} \end{bmatrix} \quad$ si $\quad N_1 \geq N_2$

et

$x = i_{1,2}, \quad y = i_{1,1}, \quad W^{(2)}_{l,l',m,m',n} = \dfrac{1}{\sqrt{2P}}\begin{bmatrix} v_{m,l} & v_{m',l'} \\ \varphi_n v_{m,l} & -\varphi_n v_{m',l'} \end{bmatrix}, \quad$ si $\quad N_1 < N_2$

; et

70

déterminer, si le livre de codes de précodeur est le livre de codes de rang 2 et si la configuration de livre de codes indique une configuration de livre de codes 4, le précodeur selon la table de livre de codes suivante :

| $i_{1,1}$ | $i_{1,2}$ | $i_2$ | |
|---|---|---|---|
| | | 0 | 1 |
| $0,1,...,\dfrac{N_1O_1}{2}-1$ | $0,1,...,\dfrac{N_2O_2}{2}-1$ | $W^{(2)}_{2x,2x,2y,2y,0}$ | $W^{(2)}_{2x,2x,2y,2y,1}$ |
| | | 2 | 3 |
| | | $W^{(2)}_{2x+1,2x+1,2y,2y,0}$ | $W^{(2)}_{2x+1,2x+1,2y,2y,1}$ |
| $i_{1,1}$ | $i_{1,2}$ | $i_2$ | |
| | | 4 | 5 |
| $0,1,...,\dfrac{N_1O_1}{2}-1$ | $0,1,...,\dfrac{N_2O_2}{2}-1$ | $W^{(2)}_{2x+2,2x+2,2y,2y,0}$ | $W^{(2)}_{2x+2,2x+2,2y,2y,1}$ |
| | | 6 | 7 |
| | | $W^{(2)}_{2x+3,2x+3,2y,2y,0}$ | $W^{(2)}_{2x+3,2x+3,2y,2y,1}$ |
| $i_{1,1}$ | $i_{1,2}$ | $i_2$ | |
| | | 8 | 9 |
| $0,1,...,\dfrac{N_1O_1}{2}-1$ | $0,1,...,\dfrac{N_2O_2}{2}-1$ | $W^{(2)}_{2x,2x+1,2y,2y,0}$ | $W^{(2)}_{2x,2x+1,2y,2y,1}$ |
| | | 10 | 11 |
| | | $W^{(2)}_{2x+1,2x+2,2y,2y,0}$ | $W^{(2)}_{2x+1,2x+2,2y,2y,1}$ |
| $i_{1,1}$ | $i_{1,2}$ | $i_2$ | |
| | | 12 | 13 |
| $0,1,...,\dfrac{N_1O_1}{2}-1$ | $0,1,...,\dfrac{N_2O_2}{2}-1$ | $W^{(2)}_{2x,2x+3,2y,2y,0}$ | $W^{(2)}_{2x,2x+3,2y,2y,1}$ |
| | | 14 | 15 |
| | | $W^{(2)}_{2x+1,2x+3,2y,2y,0}$ | $W^{(2)}_{2x+1,2x+3,2y,2y,1}$ |

$$\text{où}\quad x=i_{1,1},\quad y=i_{1,2},\quad W^{(2)}_{l,l',m,m',n}=\frac{1}{\sqrt{2P}}\begin{bmatrix} v_{l,m} & v_{l',m'} \\ \varphi_n v_{l,m} & -\varphi_n v_{l',m'} \end{bmatrix} \quad\text{si}\quad N_1\geq N_2 \quad\text{et}$$

$$x=i_{1,2},\quad y=i_{1,1},\quad W^{(2)}_{l,l',m,m',n}=\frac{1}{\sqrt{2P}}\begin{bmatrix} v_{m,l} & v_{m',l'} \\ \varphi_n v_{m,l} & -\varphi_n v_{m',l'} \end{bmatrix},\quad\text{si}\quad N_1<N_2$$

où le $W^{(2)}_{l,l',m,m',n}$ correspond à un précodeur du livre de codes de rang 2 dans le cas d'une combinaison de (l, l', m, m', n) déterminée par une combinaison de ($i_{1,1}$, $i_{1,2}$, $i_2$),

où le P correspond à un nombre de ports d'antenne d'un réseau d'antennes.

**10.** UE selon la revendication 1,

où le premier indice de livre de codes ($i_{1,1}$) et le deuxième indice de livre de codes ($i_{1,2}$) sont associés à une première paire de PMI ; et

où le troisième indice de livre de codes ($i_2$) est associé à un deuxième PMI, où la première paire de PMI indique un groupe de faisceaux, et

où le deuxième PMI indique un faisceau dans le groupe de faisceaux, le précodeur correspondant au faisceau,

11. Station de base dans un système de communication sans fil, la station de base comprenant :

un émetteur-récepteur ; et

au moins un processeur opérationnel couplé à l'émetteur-récepteur, et configuré pour :

transmettre, à un équipement d'utilisateur, UE, des informations de configuration pour indiquer des paramètres de livre de codes qui comprennent un premier nombre de ports d'antenne, $N_1$, pour une première dimension, un deuxième nombre de ports d'antenne, $N_2$, pour une deuxième dimension, un premier facteur de suréchantillonnage, $O_1$, pour la première dimension, un deuxième facteur de suréchantillonnage, $O_2$, pour la deuxième dimension, et une configuration de livre de codes ; et

recevoir, à partir de l'UE, des informations d'état de canal, CSI, comprenant au moins un indicateur de matrice de précodage, PMI, où l'au moins un PMI comprend un premier indice de livre de codes ($i_{1,1}$), un deuxième indice de livre de codes ($i_{1,2}$) et un troisième indice de livre de codes ($i_2$),

où l'au moins un PMI est déterminé sur la base d'indices de livre de codes indiquant un précodeur d'un livre de codes de précodeur,

où le livre de codes de précodeur est déterminé sur la base des paramètres de livre de codes, et **caractérisé en ce que**

si le $N_1$ est supérieur ou égal au $N_2$, le précodeur comprend une première matrice dans laquelle un premier vecteur est déterminé en fonction d'une première variable et un deuxième vecteur est déterminé en fonction d'une deuxième variable, la première variable est associée au premier indice de livre de codes ($i_{1,1}$) en utilisant une première fonction et la deuxième variable est associée au deuxième indice de livre de codes ($i_{1,2}$) en utilisant une deuxième fonction, et

si le $N_1$ est inférieur au $N_2$, le précodeur comprend une deuxième matrice dans laquelle le premier vecteur est appliqué à la deuxième variable et le deuxième vecteur est appliqué à la première variable, la première variable est associée au deuxième indice de livre de codes ($i_{1,2}$) en utilisant la première fonction et la deuxième variable est associée au premier indice de livre de codes ($i_{1,1}$) en utilisant la deuxième fonction,

où le premier vecteur est un vecteur de transformée de Fourier discrète, DFT, associé à un faisceau pour la première dimension, le deuxième vecteur est un vecteur DFT associé à un faisceau pour la deuxième dimension, et

où la première matrice et la deuxième matrice comprennent le produit de Kronecker du premier vecteur et du deuxième vecteur.

12. Station de base selon la revendication 11, où l'au moins un processeur est en outre configuré pour :

déterminer, si le livre de codes de précodeur est un livre de codes de rang 1 et si la configuration de livre de codes indique une configuration de livre de codes 3, le précodeur selon la table de livre de codes suivante :

| $i_{1,1}$ | $i_{1,2}$ | $i_2$ | | | |
|---|---|---|---|---|---|
| | | 0 | 1 | 2 | 3 |
| $0,1,\dots,\dfrac{N_1 O_1}{2}-1$ | $0,1,\dots,\dfrac{N_2 O_2}{2}-1$ | $W^{(1)}_{2x,2y,0}$ | $W^{(1)}_{2x,2y,1}$ | $W^{(1)}_{2x,2y,2}$ | $W^{(1)}_{2x,2y,3}$ |
| $i_{1,1}$ | $i_{1,2}$ | $i_2$ | | | |
| | | 4 | 5 | 6 | 7 |
| $0,1,\dots,\dfrac{N_1 O_1}{2}-1$ | $0,1,\dots,\dfrac{N_2 O_2}{2}-1$ | $W^{(1)}_{2x+2,2y,0}$ | $W^{(1)}_{2x+2,2y,1}$ | $W^{(1)}_{2x+2,2y,2}$ | $W^{(1)}_{2x+2,2y,3}$ |
| $i_{1,1}$ | $i_{1,2}$ | $i_2$ | | | |
| | | 8 | 9 | 10 | 11 |
| $0,1,\dots,\dfrac{N_1 O_1}{2}-1$ | $0,1,\dots,\dfrac{N_2 O_2}{2}-1$ | $W^{(1)}_{2x+1,2y+1,0}$ | $W^{(1)}_{2x+1,2y+1,1}$ | $W^{(1)}_{2x+1,2y+1,2}$ | $W^{(1)}_{2x+1,2y+1,3}$ |
| $i_{1,1}$ | $i_{1,2}$ | $i_2$ | | | |
| | | 12 | 13 | 14 | 15 |
| $0,1,\dots,\dfrac{N_1 O_1}{2}-1$ | $0,1,\dots,\dfrac{N_2 O_2}{2}-1$ | $W^{(1)}_{2x+3,2y+1,0}$ | $W^{(1)}_{2x+3,2y+1,1}$ | $W^{(1)}_{2x+3,2y+1,2}$ | $W^{(1)}_{2x+3,2y+1,3}$ |

$$\text{où}\quad x=i_{1,1},\quad y=i_{1,2},\quad W^{(1)}_{l,m,n}=\frac{1}{\sqrt{P}}\begin{bmatrix} v_{l,m}\\ \varphi_n v_{l,m}\end{bmatrix},\quad \text{si}\quad N_1\geq N_2$$

$$x=i_{1,2},\quad y=i_{1,1},\quad W^{(1)}_{l,m,n}=\frac{1}{\sqrt{P}}\begin{bmatrix} v_{m,l}\\ \varphi_n v_{m,l}\end{bmatrix},\quad \text{si}\quad N_1<N_2$$

déterminer, si le livre de codes de précodeur est le livre de codes de rang 1 et si la configuration de livre de codes indique une configuration de livre de codes 4, le précodeur selon la table de livre de codes suivante :

| $i_{1,1}$ | $i_{1,2}$ | $i_2$ | | | |
|---|---|---|---|---|---|
| | | 0 | 1 | 2 | 3 |
| $0,1,\dots,\dfrac{N_1 O_1}{2}-1$ | $0,1,\dots,\dfrac{N_2 O_2}{2}-1$ | $W^{(1)}_{2x,2y,0}$ | $W^{(1)}_{2x,2y,1}$ | $W^{(1)}_{2x,2y,2}$ | $W^{(1)}_{2x,2y,3}$ |
| $i_{1,1}$ | $i_{1,2}$ | $i_2$ | | | |
| | | 4 | 5 | 6 | 7 |
| $0,1,\dots,\dfrac{N_1 O_1}{2}-1$ | $0,1,\dots,\dfrac{N_2 O_2}{2}-1$ | $W^{(1)}_{2x+1,2y,0}$ | $W^{(1)}_{2x+1,2y,1}$ | $W^{(1)}_{2x+1,2y,2}$ | $W^{(1)}_{2x+1,2y,3}$ |
| $i_{1,1}$ | $i_{1,2}$ | $i_2$ | | | |
| | | 8 | 9 | 10 | 11 |
| $0,1,\dots,\dfrac{N_1 O_1}{2}-1$ | $0,1,\dots,\dfrac{N_2 O_2}{2}-1$ | $W^{(1)}_{2x+2,2y,0}$ | $W^{(1)}_{2x+2,2y,1}$ | $W^{(1)}_{2x+2,2y,2}$ | $W^{(1)}_{2x+2,2y,3}$ |
| $i_{1,1}$ | $i_{1,2}$ | $i_2$ | | | |
| | | 12 | 13 | 14 | 15 |
| $0,1,\dots,\dfrac{N_1 O_1}{2}-1$ | $0,1,\dots,\dfrac{N_2 O_2}{2}-1$ | $W^{(1)}_{2x+3,2y,0}$ | $W^{(1)}_{2x+3,2y,1}$ | $W^{(1)}_{2x+3,2y,2}$ | $W^{(1)}_{2x+3,2y,3}$ |

$$\text{où} \qquad x=i_{1,1}, \quad y=i_{1,2}, \quad W^{(1)}_{l,m,n}=\frac{1}{\sqrt{P}}\begin{bmatrix} v_{l,m} \\ \varphi_n v_{l,m} \end{bmatrix}, \quad \text{si} \quad N_1 \geq N_2$$

$$x=i_{1,2}, \quad y=i_{1,1}, \quad W^{(1)}_{l,m,n}=\frac{1}{\sqrt{P}}\begin{bmatrix} v_{m,l} \\ \varphi_n v_{m,l} \end{bmatrix}, \quad \text{si} \quad N_1 < N_2$$

;

déterminer, si le livre de codes de précodeur est un livre de codes de rang 2 et si la configuration de livre de codes indique une configuration de livre de codes 3, le précodeur selon la table de livre de codes suivante :

| $i_{1,1}$ | $i_{1,2}$ | $i_2$ | |
|---|---|---|---|
| | | 0 | 1 |

| | | $W^{(2)}_{2x,2x,2y,2y,0}$ | $W^{(2)}_{2x,2x,2y,2y,1}$ |
|---|---|---|---|
| $0,1,...,\dfrac{N_1O_1}{2}-1$ | $0,1,...,\dfrac{N_2O_2}{2}-1$ | 2 | 3 |
| | | $W^{(2)}_{2x+1,2x+1,2y+1,2y+1,0}$ | $W^{(2)}_{2x+1,2x+1,2y+1,2y+1,1}$ |
| $i_{1,1}$ | $i_{1,2}$ | $i_2$ | |
| | | 4 | 5 |
| $0,1,...,\dfrac{N_1O_1}{2}-1$ | $0,1,...,\dfrac{N_2O_2}{2}-1$ | $W^{(2)}_{2x+2,2x+2,2y,2y,0}$ | $W^{(2)}_{2x+2,2x+2,2y,2y,1}$ |
| | | 6 | 7 |
| | | $W^{(2)}_{2x+3,2x+3,2y+1,2y+1,0}$ | $W^{(2)}_{2x+3,2x+3,2y+1,2y+1,1}$ |
| $i_{1,1}$ | $i_{1,2}$ | $i_2$ | |
| | | 8 | 9 |
| $0,1,...,\dfrac{N_1O_1}{2}-1$ | $0,1,...,\dfrac{N_2O_2}{2}-1$ | $W^{(2)}_{2x,2x+1,2y,2y+1,0}$ | $W^{(2)}_{2x,2x+1,2y,2y+1,1}$ |
| | | 10 | 11 |
| | | $W^{(2)}_{2x+1,2x+2,2y+1,2y,0}$ | $W^{(2)}_{2x+1,2x+2,2y+1,2y,1}$ |
| $i_{1,1}$ | $i_{1,2}$ | $i_2$ | |
| | | 12 | 13 |
| $0,1,...,\dfrac{N_1O_1}{2}-1$ | $0,1,...,\dfrac{N_2O_2}{2}-1$ | $W^{(2)}_{2x,2x+3,2y,2y+1,0}$ | $W^{(2)}_{2x,2x+3,2y,2y+1,1}$ |
| | | 14 | 15 |
| | | $W^{(2)}_{2x+1,2x+3,2y+1,2y,0}$ | $W^{(2)}_{2x+1,2x+3,2y+1,2y,1}$ |

où $\quad x = i_{1,1}, \quad y = i_{1,2}, \quad W^{(2)}_{l,l',m,m',n} = \dfrac{1}{\sqrt{2P}}\begin{bmatrix} v_{l,m} & v_{l',m'} \\ \varphi_n v_{l,m} & -\varphi_n v_{l',m'} \end{bmatrix} \quad \text{si} \quad N_1 \geq N_2$

et

$x = i_{1,2}, \quad y = i_{1,1}, \quad W^{(2)}_{l,l',m,m',n} = \dfrac{1}{\sqrt{2P}}\begin{bmatrix} v_{m,l} & v_{m',l'} \\ \varphi_n v_{m,l} & -\varphi_n v_{m',l'} \end{bmatrix}, \quad \text{si} \quad N_1 < N_2$

; et

déterminer, si le livre de codes de précodeur est le livre de codes de rang 2 et si la configuration de livre de codes indique une configuration de livre de codes 4, le précodeur selon la table de livre de codes suivante :

| $i_{1,1}$ | $i_{1,2}$ | $i_2$ | |
|---|---|---|---|
| | | 0 | 1 |
| $0,1,...,\dfrac{N_1 O_1}{2}-1$ | $0,1,...,\dfrac{N_2 O_2}{2}-1$ | $W^{(2)}_{2x,2x,2y,2y,0}$ | $W^{(2)}_{2x,2x,2y,2y,1}$ |
| | | 2 | 3 |
| | | $W^{(2)}_{2x+1,2x+1,2y,2y,0}$ | $W^{(2)}_{2x+1,2x+1,2y,2y,1}$ |
| $i_{1,1}$ | $i_{1,2}$ | $i_2$ | |
| | | 4 | 5 |
| $0,1,...,\dfrac{N_1 O_1}{2}-1$ | $0,1,...,\dfrac{N_2 O_2}{2}-1$ | $W^{(2)}_{2x+2,2x+2,2y,2y,0}$ | $W^{(2)}_{2x+2,2x+2,2y,2y,1}$ |
| | | 6 | 7 |
| | | $W^{(2)}_{2x+3,2x+3,2y,2y,0}$ | $W^{(2)}_{2x+3,2x+3,2y,2y,1}$ |
| $i_{1,1}$ | $i_{1,2}$ | $i_2$ | |
| | | 8 | 9 |
| $0,1,...,\dfrac{N_1 O_1}{2}-1$ | $0,1,...,\dfrac{N_2 O_2}{2}-1$ | $W^{(2)}_{2x,2x+1,2y,2y,0}$ | $W^{(2)}_{2x,2x+1,2y,2y,1}$ |
| | | 10 | 11 |
| | | $W^{(2)}_{2x+1,2x+2,2y,2y,0}$ | $W^{(2)}_{2x+1,2x+2,2y,2y,1}$ |
| $i_{1,1}$ | $i_{1,2}$ | $i_2$ | |
| | | 12 | 13 |
| $0,1,...,\dfrac{N_1 O_1}{2}-1$ | $0,1,...,\dfrac{N_2 O_2}{2}-1$ | $W^{(2)}_{2x,2x+3,2y,2y,0}$ | $W^{(2)}_{2x,2x+3,2y,2y,1}$ |
| | | 14 | 15 |
| | | $W^{(2)}_{2x+1,2x+3,2y,2y,0}$ | $W^{(2)}_{2x+1,2x+3,2y,2y,1}$ |

où $x = i_{1,1}$, $y = i_{1,2}$, $W^{(2)}_{l,l',m,m',n} = \dfrac{1}{\sqrt{2P}} \begin{bmatrix} v_{l,m} & v_{l',m'} \\ \varphi_n v_{l,m} & -\varphi_n v_{l',m'} \end{bmatrix}$ si $N_1 \geq N_2$, et

$x = i_{1,2}$, $y = i_{1,1}$, $W^{(2)}_{l,l',m,m',n} = \dfrac{1}{\sqrt{2P}} \begin{bmatrix} v_{m,l} & v_{m',l'} \\ \varphi_n v_{m,l} & -\varphi_n v_{m',l'} \end{bmatrix}$, si $N_1 < N_2$

où le $W^{(1)}_{l,m,n}$ correspond à un précodeur du livre de codes de rang 1 dans le cas d'une combinaison de (l, m, n) déterminée par une combinaison de ($i_{1,1}$, $i_{1,2}$, $i_2$),

où le $W^{(2)}_{l,l',m,m',n}$ correspond à un précodeur du livre de codes de rang 2 dans le cas d'une combinaison de (l, l', m, m', n) déterminée par la combinaison de ($i_{1,1}$, $i_{1,2}$, $i_2$), et

où le P correspond à un nombre de ports d'antenne d'un réseau d'antennes,

13. Procédé mis en oeuvre par un équipement d'utilisateur, UE, dans un système de communication sans fil, le procédé comprenant les étapes correspondant à la configuration du processeur de l'UE selon l'une quelconque des revendications 1 à 10.

14. Procédé mis en oeuvre par une station de base dans un système de communication sans fil, le procédé comprenant les étapes correspondant à la configuration du processeur de la station de base selon l'une quelconque des revendications 11 à 12.

[Fig. 1]

[Fig. 2]

[Fig. 3]

116

[Fig. 4A]

[Fig. 4B]

[Fig. 5]

[Fig. 6]

600

**Numbering scheme 1**

X X X X
4  12  5  13  6  14  7  15

X X X X
0  8  1  9  2  10  3  11

**Numbering scheme 2**

X X X X
1  9  3  11  5  13  7  15

X X X X
0  8  2  10  4  12  6  14

(a) 16 PORT Config A
605

**Numbering scheme 1**

X X X
3  9  4  10  5  11

X X X
0  6  1  7  2  8

**Numbering scheme 2**

X X X
1  7  3  9  5  11

X X X
0  6  2  8  4  10

(c) 12 PORT Config A
610

| Numbering scheme 1 | Numbering scheme 2 | Numbering scheme 1 | Numbering scheme 2 |
|---|---|---|---|
| 0 X 4 X | 0 X 1 X | 0 X 3 X | 0 X 1 X |
| 8   12 | 8   9 | 6   9 | 6   7 |
| 1 X 5 X | 2 X 3 X | 1 X 4 X | 2 X 3 X |
| 9   13 | 10   11 | 7   10 | 8   9 |
| 2 X 6 X | 4 X 5 X | 2 X 5 X | 4 X 5 X |
| 10   14 | 12   13 | 8   11 | 10   11 |
| 3 X 7 X | 6 X 7 X | | |
| 11   15 | 14   15 | | |

(d) 12 PORT Config B
620

(b) 16 PORT Config B
615

[Fig. 7]

700

$$u_n e^{j\frac{2\pi m}{MS_M}}$$

$u_n$

16 PORT Confing A
705

16 PORT Confing B
710

[Fig. 8]

800

EP 3 365 982 B1

[Fig. 9]

Rank-3/4 Orthogonal beams for 2D antenna (910)

Rank-3/4 orthogonal beams for 1D antenna (915)

[Fig. 10]

1000

Config 1
(1005)

Config 2
(1010)

Config 3
(1015)

Config 4
(1020)

[Fig. 11]

Config 2:
8 ports 2D case

1100

Beams in $2^{nd}$ dim
1105

$O_2$

$O$

$0$    $O_1$

Beams in $1^{st}$ dim
1110

[Fig. 12]

1200

(3,2) grid of orthogonal beams

(for illustration) 6 orthogonal beams for constructing rank 5-8 codebooks

Beams in 2nd dim

Beams in 1st dim

Config=1, Config=2 1205

Config=3 1210

Config=4 1215

Fig. 13

[Fig. 14]

(4,2) grid of orthogonal beams

8 orthogonal
beams for
constructing rank
5-8 codebooks

Beams in
$2^{nd}$ dim

$O_2$

$0$

$0 \quad O_1 \quad 2O_1 \quad 3O_1$

Beams in $1^{st}$ dim

1400

Config=4
1415

$O_2$

$0$

$0 \quad O_1 \quad 2O_1 \quad 3O_1$

Config=3
1410

$O_2$

$0$

$0 \quad O_1 \quad 2O_1 \quad 3O_1$

Config=1, Config=2
1405

$O_2$

$0$

$0 \quad O_1 \quad 2O_1 \quad 3O_1$

EP 3 365 982 B1

92

[Fig. 15]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SAMSUNG**. Rank 1-2 codebook for Class A CSI reporting. *3GPP DRAFT; R1-156121 RANK 1-2 CODEBOOK FOR CLASS A CSI REPORTING FINAL - R1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS C*, 07 October 2015, vol. RAN WG1 (Malmo, Sweden)

- E-UTRA, Physical channels and modulation. *3GPP TS 36.211 v12.2.0*
- E-UTRA, Multiplexing and Channel coding. *3GPP TS 36.212 v12.2.0*
- E-UTRA, Physical Layer Procedures. *3GPP TS 36.213 v12.2.0*
- WF on FD-MIMO codebook. *R1-154861*
- WF on precoder and PMI construction for R13 FD-MIMO. *RI-155005*